# EUROPÄISCHE PATENTANMELDUNG

(11) **EP 2 827 099 A1**
(43) Veröffentlichungstag der Anmeldung: **21.01.2015**
(21) Anmeldenummer: 13176647.9
(22) Anmeldetag: 16.07.2013
(51) Int. Cl.: G01C 1/04, G01C 3/08, G01S 17/48, G01S 17/66

(54) **Lasertracker mit Zielsuchfunktionalität**

(71) Anmelder: Leica Geosystems AG, 9435 Heerbrugg (CH)
(72) Erfinder: Markendorf, Albert, CH-5046 Walde (CH); Böckem, Burkhard, CH-5415 Rieden (CH)
(74) Vertreter: Gyaja, Christoph Benjamin

(57) **Zusammenfassung**

Lasertracker (12) zur fortlaufenden Verfolgung eines reflektierenden Ziels und zur Positionsbestimmung des Ziels mit einem eine Stehachse (41) definierenden Sockel (40), einer Strahllenkeinheit (20a) zur Emission einer Messstrahlung (17,21), wobei die Strahllenkeinheit (20a) um die Stehachse (41) und eine Neigungsachse (31) relativ zur Sockel (40) motorisiert schwenkbar ist und durch eine Emissionsrichtung der Messstrahlung (17,21) eine Messachse (57) definiert ist. Ferner mit einer Feindistanzmesseinheit zur präzisen Distanzbestimmung zum Ziel (65,81,101), einer Winkelmessfunktionalität zur Bestimmung einer Ausrichtung der Strahllenkeinheit (20a) relativ zum Sockel (40) und einer Zielsucheinheit. Die Zielsucheinheit weist Beleuchtungsmittel (25,25a-f) zur Beleuchtung des Ziels (65,81,101), eine Kamera (24) mit einem positionssensitiven Detektor zur positionsbestimmenden Erfassung von vom Ziel (65,81,101) reflektierter Beleuchtungsstrahlung (28,28a,28b) und eine Steuerungs- und Auswerteeinheit mit Suchfunktionalität zum Auffinden des Ziels (65,81,101) auf. Bei Ausführung der Suchfunktionalität erfolgt ein Auffinden des Ziels (65,81,101) durch Bestimmen eindeutiger Zielpositionsinformation anhand von detektierten Positionen reflektierter Beleuchtungsstrahlung (28,28a,28b), je nach Ausführungsform unter Berücksichtung weiterer Zielpositionsinformationen, derart, dass Messstrahlung (17,21) direkt auf das Ziel (65,81,101) ausrichtbar ist.

## Beschreibung

Die Erfindung betrifft ein Koordinatenmessgerät, insbesondere einen Lasertracker, zur fortlaufenden Verfolgung eines reflektierenden Ziels und zur Entfernungsbestimmung zu dem Ziel nach dem Oberbegriff der Ansprüche 1, 16 und 31 und Verfahren zum Auffinden des Ziels nach dem Oberbegriff der Ansprüche 11, 26 und 41.

Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung oder mittels des Fizeau-Prinzips ermittelt.

Lasertracker nach dem Stand der Technik können zusätzlich mit einer optischen Bilderfassungseinheit mit einem zweidimensionalen, lichtempfindlichen Array, z.B. einer CCD-oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Feinanzielsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit zur Zielauffindung mit einem positionssensitiven Sensor und mit einem verhältnismässig grossen Sichtfeld angeordnet sein, wobei die durch den Sensor definierte optische Sensorachse und die Achse, entlang derer sich der Messlaserstrahl ausbreitet, versetzt zueinander sind. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen)

Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 Al bekannt.

In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird. Aufgrund des Versatzes der durch den Sensor definierten optischen Sensorachse und der Messachse der Messvorrichtung kann das Ausrichten des Strahls auf das Ziel mittels der sensorbasierten Richtungsbestimmung zum Ziel und damit das Ankoppeln nicht in einem direkten Schritt erfolgen. Für ein feststehendes Ziel sind hierfür mehrere Iterationsschritte mit jeweils einem Messvorgang (erneute Bestimmung einer Richtung zum Ziel mit dem Sensor) zur Annäherung des Laserstrahls erforderlich. An einer derartigen Annäherungsmethode ist daher nachteilig, dass das Aufsuchen und Anzielen des Ziels ein zeitintensiver Vorgang (da iterativ) ist und das Aufsuchen, insbesondere bei einer Relativbewegung des Ziels zum Sensor, nicht robust und eindeutig ist. Des Weiteren kann bei einer Bewegung des Ziels relativ zum Lasertracker keine Annäherung des Laserstrahls zum Ziel mehr gelingen, da sich eine Abweichung zwischen dem mittels des Sensors detektierten Ziel und dem Laserstrahl dabei fortlaufend verändert. Eine iterative Annäherung des Strahls an das Ziel kann aufgrund dieser während der Bewegung des Ziels anhaltenden Abweichungsveränderung so nicht erfolgen. Jeder Iterationsschritt mit einem erneuten Erfassen eines Reflexes entspricht dabei einer ersten solchen Messung auf ein (neues) Ziel. Generell ergibt sich somit ein grosser Nachteil solcher Systeme zur Zielauffindung darin, dass feststehende Ziele nur mit einem relativ grossen Zeitaufwand angezielt werden können und das direkte Anzielen bewegter Ziele unmöglich ist.

Es ist daher Aufgabe der vorliegenden Erfindung einen verbesserten Lasertracker mit einer Suchfunktionalität zum präzisen und schnelleren Auffinden und insbesondere Anzielen eines Ziels bereitzustellen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur fortlaufenden Verfolgung eines reflektierenden Ziels und zur Positionsbestimmung des Ziels. Der Tracker weist dabei einen Sockel, der eine Stehachse definiert, und eine Strahllenkeinheit zur Emission einer Messstrahlung und zum Empfang von zumindest einem Teil der am Ziel reflektierten Messstrahlung auf, wobei die Strahllenkeinheit um die Stehachse und eine Neigungsachse relativ zur Basis motorisiert schwenkbar ist und durch eine Emissionsrichtung der Messstrahlung eine Messachse definiert ist. Ferner verfügt der Lasertracker über einen positionssensitiven Feinanzieldetektor, der ein Feinanzielsichtfeld definiert, zur Feinanzielung und Verfolgung des Ziels mittels Detektieren von Messstrahlung, welche vom Ziel reflektiert ist, und eine Feindistanzmesseinheit zur präzisen Distanzbestimmung zum Ziel vermittels der Messstrahlung und über eine Winkelmessfunktionalität zur Bestimmung einer Ausrichtung der Strahllenkeinheit relativ zum Sockel. Weiter weist der Lasertracker eine Zielsucheinheit auf, welche Beleuchtungsmittel zur Beleuchtung des Ziels mit elektromagnetischer Beleuchtungsstrahlung und eine ein Sichtfeld definierende Kamera aufweist, wobei die optische Achse der Kamera bekannt versetzt zur Messachse angeordnet ist. Die Kamera verfügt über einen positionssensitiven Detektor, wodurch in einem Bild vom reflektierenden Ziel zurückgeworfene Beleuchtungsstrahlung als ein oder mehrere Lichtflecke erfassbar ist und eine Position im Bild für die erfasste Beleuchtungsstrahlung bestimmbar ist. Diese Bildposition der vom Ziel zurückgeworfenen Beleuchtungsstrahlung auf dem Detektor ist abhängig von der Position des Ziels relativ zum Lasertracker, weshalb aus ihr eine Zielpositionsinformation ableitbar ist. Weiter weist der erfindungsgemässe Lasertracker eine derart konfigurierte Steuerungs- und Auswerteeinheit auf, dass bei Ausführung einer Suchfunktionalität ein Auffinden des Ziels in Abhängigkeit der Bildposition bzw. der daraus abgeleiteten Zielpositionsinformation erfolgt.

Insbesondere wird erfindungsgemäss mittels der Steuerungs- und Auswerteeinheit durch das Auffinden des Ziels eine Abweichung der Ausrichtung der Messachse von der Richtung zum Ziel bestimmt, welche sich vorzugsweise in unterschiedlichen Richtungswinkeln ausdrückt, so dass als Abweichung bspw. jeweils eine Differenz der horizontalen und der vertikalen Richtungswinkel bestimmt wird. Unter der Richtung zum Ziel ist hierbei diejenige Ausrichtung der Strahllenkeinheit zu verstehen, die sie einnehmen muss, damit Messstrahlung auf das Ziel trifft. Im Unterschied dazu wird unter einer Zielrichtung eine Zielpositionsinformation verstanden, welche eine Richtungsangabe beinhaltet, die insbesondere an ein Element der Zielsucheinheit anknüpft und aufgrund des Versatzes der Messachse zur Kamera oder zu anderen Elementen der Zielsucheinheit nicht mit der Richtung zum Ziel gleichzusetzen ist.

Durch das Ergebnis der Suche, d.h. das Auffinden des Ziels, ist prinzipiell die Position des Ziels relativ zum Lasertracker bekannt. Diese kann als Grobposition bezeichnet werden, da sie weniger exakt ist als die Position, die auf Grundlage einer Messung vermittels der Messstrahlung ermittelbar ist. Entsprechend ist eine durch die Zielsucheinheit bestimmte Entfernung zum Ziel als Grobentfernung bezeichnet. Die ermittelten groben Lokalisationsdaten sind ausreichend, um eine Ausrichtung des Messstrahls auf das Ziel herbeiführen zu können. Basierend auf dem Auffinden des Ziels wird mittels der Steuerungs- und Auswerteeinheit, unter Berücksichtigung der bekannten relativen Anordnung der Zielsucheinheit oder einzelner Komponenten der Zielsucheinheit und der Strahllenkeinheit zueinander, die Strahllenkeinheit und damit der Messstrahl auf das Ziel ausgerichtet. Insbesondere werden die Differenzen der Richtungswinkel von tatsächlicher und gewünschter Messachsenrichtung ermittelt und die Ausrichtung solange verändert, bis, zumindest weitgehend, die Differenzen gleich Null sind und/oder der Messstrahl vom Ziel reflektiert und vom Feinanzieldetektor registriert wird.

Das Ausrichten der Messstrahlung erfolgt in zwei Achsen (Stehachse bzw. vertikale Achse und Neigungsachse bzw. Kippachse) mittels an dem Lasertracker zum Schwenken der Strahllenkeinheit vorgesehenen Motoren, insbesondere Stellmotoren, wobei diese vermittels der Steuerungs- und Abzieleinheit ansteuerbar sein können.

Erfindungsgemässe kann der Lasertracker eine um die Stehachse relativ zum Sockel motorisiert schwenkbare und die Neigungsachse bzw. eine horizontale oder liegende Achse definierende Stütze und eine als Strahllenkeinheit ausgebildete, um die Neigungsachse relativ zur Stütze motorisiert schwenkbare Anzieleinheit mit einer Teleskopeinheit zur Emission der Messstrahlung und zum Empfang von zumindest einem Teil der am Ziel reflektierten Messstrahlung aufweisen.

Durch das Auffinden des Ziels mittels der Suchfunktionalität kann die Messstrahlung direkt auf das Ziel ausgerichtet, von diesem reflektiert und die Entfernung zum Ziel exakt bestimmt werden. Zur Entfernungsmessung können hierfür sowohl eine Absolutdistanzmesseinheit und ein Interferometer im Lasertracker angeordnet sein, wobei für beide Messeinheiten jeweils eine Strahlquelle vorgesehen sein kann und die emittierten Strahlungen sich entlang eines gemeinsamen Messpfads und schliesslich auf einer gemeinsamen Messachse ausbreiten können.

Erfindungsgemäss können die Kamera und die Messachse derart zueinander angeordnet sein, dass die Messachse zumindest teilweise im Sichtfeld der Kamera liegt. Insbesondere bei der Anzielung bewegter Ziele ist eine solche Überscheidung der Messachse mit dem Sichtbereich im Rahmen des Anzielprozesses vorteilhaft. Erfindungsgemäss kann die Kamera dabei derart angeordnet sein, dass deren optische Achse parallel versetzt oder in einem definierten Winkel relativ zur Messachse angeordnet ist. Generell ist die im Zusammenhang mit der vorliegenden Erfindung genannte Kamera mit einem positionssensitiven Detektor derart ausgebildet, dass das Sichtfelder relativ zur Messstrahlung bzw. zum Öffnungswinkel der Messstrahlung gross ist, d.h. das Sichtfeld ist grösser als der Öffnungswinkel des Strahls, um einen verhältnismässig grossen Bereich einer Messumgebung mit potentiellen Zielen zu erfassen.

Im Gegensatz zu der Kamera weist ein anderer Typ von positionssensitivem Detektor (PSD), welcher beispielsweise in der Teleskopeinheit eines Lasertrackers verbaut ist und zur Feinanzielung und Verfolgung eines Ziels dient, einen engen Sichtbereich auf, bspw. von 0,67° oder weniger, oder für einen PSD mit parallelem Sichtfeld (field of view) bspw. von ±4*mm* oder weniger. Diese PSD ist derart angeordnet, dass sie die am Ziel reflektierte Messstrahlung detektieren kann und auf Basis dieser Detektion eine Ablage der erfassten Strahlung von einem Sollwert ermittelbar macht (die PSD ist also an den Messstrahlengang gekoppelt). In Abhängigkeit dieser Ablage kann dann eine Abweichung des Messlaserstrahls vom Zentrum eines Retroreflektors bestimmt werden und diese Strahlung so neu ausgerichtet werden, dass der Strahl zentral auf den Reflektor trifft. Insbesondere wird allein der retroreflektierte Laserstrahl detektiert und dessen Position ausgewertet.

Die Beleuchtungsmittel der Zielsucheinheit können erfindungsgemäss insbesondere Beleuchtungsstrahlung aussenden, die sich von der Messstrahlung unterscheidet, insbesondere hinsichtlich Wellenlänge und Fokussierung. Vorzugsweise emittieren die Beleuchtungsmittel Licht im InfrarotBereich, insbesondere innerhalb eines engen IR-Wellenlängenbereichs. Das Licht kann dabei divergent ausgesandt werden, damit ein grosser Umgebungsbereich des Lasertrackers beleuchtbar ist. Insbesondere sind die Beleuchtungsmittel ausgeprägt als lichtemittierende Dioden (LEDs), wobei die Lichtintensität dynamisch variierbar sein kann, wodurch eine Anpassung der Beleuchtung an unterschiedliche Bedingungen, bspw. verschiedene Zielgrössen oder Zielentfernungen, durchführbar ist. Entsprechend ist die Kamera vorzugsweise derart ausgebildet, dass speziell oder ausschliesslich Licht der Wellenlänge der verwendeten Beleuchtungsstrahlung erfasst wird. Dazu kann die Kamera bzw. der positionssensitive Detektor, zumindest im Wesentlichen, sensitiv nur für Licht der entsprechenden Wellenlänge oder ein Filter vorhanden sein. Ein solcher Filter kann bspw. ein Aussortieren von Lichtfrequenzen vor dem Erfassen durch den Detektor ermöglichen, in dem nur Licht bestimmter Wellenlängen durchgelassen wird, oder als Algorithmus ausgeprägt sein, mit dem nach dem Erfassen ein spektrales Filtern stattfindet.

Gemäss einer weiteren Ausführung der Erfindung wird eine Bildposition in einem erfassten Bild mittels Bildverarbeiten derart bestimmt, dass durch die jeweilige Bildposition eine Lage im Bild einer im jeweiligen Bild erfassten Strahlungsquerschnittsform erscheint, repräsentiert wird. Insbesondere erfolgt das Bestimmen einer Bildposition mittels Schwerpunktberechnen basierend auf der im jeweiligen Bild erfassten Strahlungsquerschnittsform, insbesondere mittels Helligkeits- und/oder Kontrastanalyse, und/oder mittels Matchen, insbesondere In-Übereinstimmung-Bringen, der im jeweiligen Bild erfassten Strahlungsquerschnittsform mit einem gespeicherten Muster anhand einer Best-Fit-Methode - dies insbesondere mit Subbildpunktgenauigkeit, wobei anhand der in Übereinstimmung gebrachten Lage des Musters im Bild die jeweilige Zielposition der im Bild erfassten Strahlung bestimmt wird, insbesondere mit Subbildpunktgenauigkeit. Insbesondere ist hierbei für das gespeicherte Muster eine Information mitgespeichert, die eine musterintern definierte, für die letztendliche Ermittlung der Zielposition heranzuziehende Musterposition innerhalb des Musters ableiten lässt, im Speziellen wobei die Information die musterintern definierte Musterposition selbst ist oder ein definierter Muster-Positions-Bestimmungsalgorithmus wie etwa ein Musterschwerpunkt-Bestimmungsalgorithmus.

Gemäss einer bestimmten erfindungsgemässen Ausführungsform weist der Lasertracker eine Kalibrierfunktion auf, bei deren Ausführung eine bekannte Positionierung und Ausrichtung der Kamera bzw. deren optischer Achse relativ zur Messachse und eine bekannte Positionierung und/oder Ausrichtung der Zielsucheinheit oder von Komponenten der Zielsucheinheit relativ zur Kamera und/oder Messachse bestimmt werden. Dabei wird insbesondere das Ziel in verschiedenen Positionen bereitgestellt und mittels der Messstrahlung angezielt und vermessen, für jede Position des Ziels wenigstens eine Zielpositionsinformation mittels der Zielsucheinheit bestimmt und aus dem Vermessen des Ziels und der dazu bestimmten Zielpositionsinformation eine relative Positionierung und Ausrichtung abgeleitet.

Ferner betrifft die Erfindung ein Verfahren zum Suchen und Auffinden eines Ziels mit einem Lasertracker, wobei der Lasertracker einen eine Stehachse definierende Sockel und eine Strahllenkeinheit zum Emittieren einer Messstrahlung und zum Empfangen von zumindest einem Teil der am Ziel reflektierten Messstrahlung mittels eines Feinanzieldetektors aufweist, wobei die Strahllenkeinheit um die Stehachse und eine Neigungsachse relativ zum Sockel motorisiert schwenkbar ist und durch eine Emissionsrichtung der Messstrahlung eine Messachse definiert ist. Weiters erfolgt ein Beleuchten des Ziels mit elektromagnetischer Beleuchtungsstrahlung und ein positionssensitives Erfassen von am Ziel reflektierter Beleuchtungsstrahlung, woraus eine Zielpositionsinformation ableitbar ist, mit einer am Lasertracker angeordneten und ein Sichtfeld definierenden Kamera mit einem positionssensitiven Detektor, wobei die Kamera mit deren optischer Achse versetzt zur Messachse angeordnet ist. Das Auffinden des Ziels erfolgt in Abhängigkeit der Beleuchtungsstrahlungsposition oder einer daraus abgeleiteten Zielpositionsinformation.

Im Rahmen des Verfahrens erfolgt durch das Auffinden des Ziels insbesondere das Bestimmen einer, insbesondere richtungswinkelbezogener, Abweichung der Messachsenausrichtung von einer Richtung zum Ziel. Erfindungsgemäss kann basierend auf der Zielauffindung, insbesondere basierend auf einer anhand des Suchergebnisses bestimmten Grobposition des Ziels, ein automatisches Ausrichten der Strahllenkeinheit auf das Ziel erfolgen, so dass Messstrahlung dergestalt auf das Ziel trifft, dass reflektierte Anteile davon vom Feinanzieldetektor erfasst und detektiert werden können. Bspw. kann eine Differenz der jeweiligen azimutalen und vertikalen Richtungswinkel berechnet werden. Ein Ausrichten der Messstrahlung auf das Ziel erfolgt damit, indem der Ausrichtung der Strahllenkeinheit solange geändert wird, bis der Wert der Differenz zumindest weitgehend gleich Null ist.

Die Erfindung betrifft des Weiteren ein Computerprogrammprodukt mit Programmcode, der auf einem maschinenlesbaren Träger gespeichert ist, zur Steuerung bzw. Durchführung des erfindungsgemässen Verfahrens.

Hinsichtlich eines ersten Aspekts der Erfindung verfügt die Zielsucheinheit des Lasertrackers über wenigstens ein Paar aus einem ersten und einem zweiten Beleuchtungsmittel, die einen fixen Abstand zueinander haben, welcher eine erste Basislänge definiert und bekannt sein kann. Dabei sind die Beleuchtungsmittel insbesondere symmetrisch um die optische Achse der Kamera angeordnet. Durch ein Beleuchten des Ziels mit Beleuchtungsstrahlung des Paars ist vom Ziel reflektierte Beleuchtungsstrahlung als ein erster und ein zweiter Lichtfleck durch die Kamera erfassbar. Bei Ausführung der Suchfunktionalität werden erfindungsgemäss in Abhängigkeit des ersten und/oder zweiten Lichtflecks mindestens eine Bildposition bestimmt, woraus eine Zielpositionsinformation ermittelbar ist. Eine Bildposition kann dabei z.B. die Position eines der beiden Lichtflecke im Bild sein oder eine aus den Positionen beider Lichtflecke ermittelte, gemeinschaftliche Position sein. Des weiteren wird eine Parallaxenkorrigierinformation mittels Bildverarbeiten bestimmt, in welcher eine Separation der Lichtflecke berücksichtigt wird und die abhängig ist von einer Distanz der beiden Lichtflecke zueinander. Die Parallaxenkorrigierinformation kann insbesondere der Wert der Distanz selbst sein. Das Auffinden des Ziels erfolgt dann unter Heranziehung der mindestens einen Bildposition in Abhängigkeit der Parallaxenkorrigierinformation.

Die erfindungsgemässe Zielsucheinheit bietet den Vorteil, dass mit der Bestimmung der Parallaxenkorrigierinformation eine zusätzliche Verwendung der Lichtflecke in ihrer separaten Erscheinung erfolgt, wodurch im Gegensatz zu lediglich einer Bestimmung einer einzigen Zielpositionsinformation aus lediglich einer gemeinschaftlichen Bildposition durch eine Zusammenschau aus beiden Lichtflecken, bspw. durch Verwendung eines Lichtfleckpositionsmittelwerts, nicht nur eine Information über die Richtung zum Ziel relativ zur Zielsucheinheit ermittelbar ist; da die Distanz der durch die beiden Beleuchtungsmittel erzeugten Lichtflecke auf dem Detektor bei fixem Abstand der Beleuchtungsmittel von der Entfernung des Ziels zum Lasertracker abhängig ist, ist mit erfindungsgemässem Lasertracker auch eine Information über die Entfernung zum Ziel als weitere Zielpositionsinformation bestimmbar. Damit ist ein eindeutiges Auffinden des Ziels durchführbar. Somit ist trotz der Parallaxe, also des Versatzes zwischen der optischen Kameraachse der Zielsucheinheit und der Messachse, der Messstrahl auf das Ziel in einem direkten Schritt ausrichtbar, ohne auf ein iteratives Vorgehen angewiesen zu sein. Zudem ermöglicht das erfindungsgemässe eindeutige Auffinden des Ziels mittels eines Erfassungsvorgangs auch eine Ausrichtung des Messstrahls auf ein bewegtes Ziel.

Im Gegensatz zu Methoden der Zielsuche des Standes der Technik kann die Steuerungs- und Auswerteeinheit dabei erfindungsgemäss derart konfiguriert sein, dass bei Ausführung der Suchfunktionalität Vieldeutigkeiten, die bei einer Heranziehung von nur einer mittels einer Bildposition bestimmten Zielpositionsinformation zum Auffinden des Ziels und durch eine durch die Messrichtung und der optischen Achse der Kamera gegebene Parallaxe vorhanden sind, durch eine Heranziehung mindestens einer Position im Bild von erfasster Beleuchtungsstrahlung als auch der Parallaxenkorrigierinformation zum Auffinden des Ziels aufgelöst werden.

Um mittels der Zielsucheinheit das Ziel aufzufinden, wird die fixe Basislänge, welche explizit oder implizit, z.B. in von ihr abhängigen Kenngrössen oder Wertetabellen, gegeben ist, insbesondere wie folgend beschrieben genutzt. Diese ist erfindungsgemäss durch den Abstand des Beleuchtungsmittelpaars zueinander festgelegt. Durch diese Kenntnis kann aus einer Information, welche aus der Distanz der Lichtflecke auf dem Detektor, die durch Reflexion der Strahlung des Beleuchtungsmittelpaars am Ziel entstanden sind, ermittelt ist, auf eine Entfernung des Ziels geschlossen werden, da die Distanz der beiden Lichtflecke bei fixer Basislänge entfernungsabhängig ist. Zusammen mit einer Zielrichtung, die sich aus einer aus der reflektierten Beleuchtungsstrahlung bestimmten Bildposition ergibt, ist, bspw. durch allgemein bekannte Triangulationsprinzipien, das Ziel lokalisierbar, mit einer ausreichenden Präzision, um eine Feinanzielung zu ermöglichen. In diesem Sinn ist durch die erfindungsgemässe Zielsucheinheit eine eindeutige Grobposition des Ziels ermittelbar. Erfindungsgemäss kann die Steuerungs- und Auswerteeinheit alternativ derart konfiguriert sein, dass eine Grobposition in Abhängigkeit einer ersten und einer zweiten Zielrichtung bestimmt wird. Alternativ kann eine Grobposition erfindungsgemäss durch Nachschlagen in einer Look-Up-Tabelle bestimmt werden, in der bei Ausführung der Suchfunktionalität eine Grobposition anhand von Bildpositionen und Parallaxenkorrigierinformationen direkt abgelesen wird. Eine solche Zuordnung mit Referenzwerten kann bspw. in der Steuerungs- und Auswerteeinheit hinterlegt sein.

Bei einer zusammenschauenden Heranziehung des ersten und zweiten Lichtflecks zur Ermittlung nur einer Zielpositionsinformation daraus und einem Versatz der optischen Achse der Kamera relativ zur Messachse der Messstrahlung kann das Ziel mittels der Kamera nicht eindeutig lokalisiert werden, da aus einem Bild so nur eine Richtungsinformation ableitbar ist, jedoch keine Entfernung zum Ziel bestimmbar und somit keine Lokalisierung des Ziels möglich ist. Ein Ausrichten des Messstrahls auf das Ziel ist somit nicht in einem Schritt möglich. Ein Vorteil der erfindungsgemässen Heranziehung der beiden durch die zwei in einem bekannten Verhältnis positionierten Beleuchtungsmittel erzeugten Lichtflecke ist daher, dass das Ziel direkt gefunden werden kann und kein iteratives Annähern an das Ziel durchgeführt werden muss, sondern das Anzielen direkt erfolgen kann.

Ein weiterer Vorteil der vorliegenden Erfindung besteht darin, dass ein derartiges direktes Anzielen mit nur einer Kamera erreicht wird, ohne also weitere Mittel, bspw. eine zweite Kamera, in die Zielsucheinheit aufnehmen zu müssen. Zielsucheinheiten nach dem Stand der Technik weisen bereits erforderliche Mittel auf, insbesondere eine Kamera mit einem positionssensitiven Detektor und wenigstens zwei Beleuchtungsmitteln.

Zur Erhöhung der Genauigkeit der Zielauffindung und/oder zur Anpassung an die Grösse des Ziels kann die Zielsucheinheit über wenigstens ein weiteres Paar von Beleuchtungsmitteln verfügen mit einem Abstand zueinander, der von dem des ersten Beleuchtungsmittelpaars differiert, wodurch eine zweite, insbesondere eine grössere, Basislänge definiert ist. Eine grössere Basislänge kann vor allem zur Erhöhung der Genauigkeit der Bestimmung einer Grobposition bzw. Grobentfernung dienen, wenn das Ziel sich relativ weit entfernt vom Lasertracker befindet, da sich das Verhältnis von Basislänge zur Zielentfernung auf den Messfehler auswirkt. Eine grössere Basislänge ist hierfür günstiger. Die Basislänge ist bei Verwendung retroreflektierender Ziele jedoch dadurch begrenzt, dass der Abstand zwischen Beleuchtungsmittel und Kamera nur so gross sein darf, dass retroreflektierte Beleuchtungsstrahlung noch von der Kamera erfassbar ist. Der maximal mögliche Abstand hängt dabei u.a. von der Grösse des kleinsten Reflektorziels ab, das auffindbar sein soll. Um eine möglichst grosse Basislänge und damit Genauigkeit unter Berücksichtigung des maximal möglichen Abstands zu erreichen, kann erfindungsgemäss eine Auswahl des zur Zielauffindung zu benutzenden Beleuchtungsmittelpaars in Abhängigkeit der Zielbeschaffenheit und/oder geschätzten Zieldistanz erfolgen. Dies kann insbesondere durch die Steuerungs- und Auswerteeinheit automatisiert erfolgen. Erfindungsgemäss kann auch ein Beleuchten des Ziels durch mehrere Beleuchtungsmittelpaare und entsprechend ein Erfassen mehrerer Lichtfleckpaare erfolgen und durch eine unabhängige Bestimmung von z.B. vier Lichtfleckpositionen und damit einhergehend zwei Lichtfleckdistanzen die Genauigkeit einer Bestimmung einer Richtung zum Ziel erhöht werden. Insbesondere kann ein Ausführen der Suchfunktionalität zuerst mit der ersten Basislänge durchgeführt werden, und falls dadurch kein eindeutiges Auffinden des Ziels erreichbar ist, ein Umschalten auf eine Verwendung der zweiten Basislänge erfolgen.

Durch die beschriebene Begrenzung des maximal möglichen Abstands der Beleuchtungsmittel zur Kamera und damit auch zueinander, ist der parallaktische Winkel zwischen den Beleuchtungsmitteln eines Beleuchtungsmittelpaars i.d.R. so klein, dass bei gleichzeitiger Beleuchtung sich die Beleuchtungsstrahlungsquerschnittsformen der beiden erfassten Lichtflecke überschneiden, was zu einer Beeinträchtigung der Bestimmung der jeweiligen Lichtfleckposition führen kann. Deshalb kann erfindungsgemäss
- ein Beleuchten zeitlich getrennt erfolgen, so dass die Bestimmung der Lichtfleckposition des ersten Beleuchtungsmittels auf dem Detektor nicht durch die Beleuchtungsstrahlung des zweiten Beleuchtungsmittels beeinträchtigt wird,
- sich die Beleuchtungsstrahlung der einzelnen Beleuchtungsmittel wenigstens eines Beleuchtungsmittelspaars unterscheiden, z.B. durch die jeweilige Wellenlänge oder Polarisierung, so dass ein gegenseitig unbeeinflusste Lichtfleckpositionsbestimmung erfolgen kann, bspw. durch Anwendung eines wellenlängen- oder polarisierungsspezifizierenden Filters, eine entsprechende Sensitivität des positionssensitiven Detektors oder Verwendung mehrerer Detektoren unterschiedlicher Strahlungsempfindlichkeit,
- eine Segmentierung der verschiedenen in einem von der Kamera erfasstes Bild dargestellten Beleuchtungsstrahlungsquerschnittsformen mittels Bildverarbeitung erfolgt, entsprechend der zu erwartenden Form eines einzelnen Lichtflecks insbesondere eine Segmentierung von Kreisformen, besonders eines definierten Durchmessers oder Durchmesserbereichs, der durch eine vorbekannte Beschaffenheit der reflektierten Beleuchtungsstrahlung definiert sein kann, wozu im Speziellen zirkulare Hough-Transformation oder skaleninvariante Kernel-Operatoren Verwendung finden, und/oder
- ähnlich zu der beschriebenen Bestimmung einer einzel auftretenden Lichtfleckposition die Positionen der einzelnen Lichtflecke bei Überschneidung mittels Matchen mit einem "Doppellichtfleck"-Muster bestimmt werden, insbesondere mit einer Best-Fit-Methode und Subbildpunktgenauigkeit.

Ein Matchen mit einem "Doppellichtfleck"-Muster kann erfindungsgemäss auch Verwendung finden, um die Parallaxenkorrigierinformation zu bestimmen. Dazu sind Muster hinterlegt, die für eine jeweilige Parallaxenkorrektur spezifisch sind, bspw. indem sie jeweils aufgrund ihrer Beschaffenheit, z.B. ihrer Grösse, ein Mass der Separation der Lichtflecke sind. Anhand des zum aktuellen Bild passenden Muster wird dann eine Parallaxenkorrigierinformation abgelesen und zum Auffinden des Ziels verwendet. Alternativ lässt sich eine Parallaxenkorrigierinformation aus einer Einzelbildpositionsbestimmung für die erfasste Beleuchtungsstrahlung des ersten und zweiten Beleuchtungsmittels ermitteln, in dem anhand der Bildpositionen eine Distanz der Lichtflecke berechnet wird. Als Mass für die Separation kann erfindungsgemäss auch die Grösse der gemeinsamen Beleuchtungsstrahlungsquerschnittsform aus beiden Lichtflecken benutzt werden, bspw. indem deren längste Ausdehnung mittels Bildverarbeitung bestimmt wird.

Weist der Lasertracker erfindungsgemäss eine Kalibrierfunktion auf, wird bei deren Ausführung als für das Zielauffinden relevante Einheit der Abstand zwischen einem Beleuchtungsmittelpaar, also die Basislänge, und ggf. die Positionierung der Beleuchtungsmittel und/oder der Kamera bzw. deren optischer Achse bestimmt. Im Rahmen der Kalibrierung werden insbesondere für jede vermessene Position des Ziels wenigstens eine Bildposition und eine Parallaxenkorrigierinformation bestimmt. Zudem oder alternativ kann erfindungsgemäss aus so bestimmten Werten und der diesen zugeordneten Position des Ziels eine Referenzzuordnung von Bildpositionen und Parallaxenkorrigierinformation zu Grobpositionen erfolgen, welche anschliessend hinterlegt und für die Bestimmung einer Grobposition zum Auffinden des Ziels bereitgestellt wird.

Hinsichtlich des ersten Aspekts der Erfindung erfolgt im Rahmen des erfindungsgemässen Verfahrens ein Beleuchten des Ziels mit Beleuchtungsstrahlung durch wenigstens ein erstes und ein zweites Beleuchtungsmittel, die einen festen Abstand zueinander aufweisen, welcher eine erste Basislänge definiert. Vom Ziel reflektierte Beleuchtungsstrahlung wird als ein erster und ein zweiter Lichtfleck im Bild einer am Lasertracker angeordneten Kamera erfasst. Das Verfahren ist hinsichtlich des ersten Aspekts der Erfindung dadurch gekennzeichnet, dass ein Bestimmen wenigstens einer Bildpositionen aus wenigstens einem Lichtfleck erfolgt, sowie das Bestimmen einer Parallaxenkorrigierinformation, in welcher eine Separation der Lichtflecke Berücksichtigung findet und welche abhängig ist von deren Distanz, so dass zwei unabhängige Zielpositionsinformationen vorliegen. Das Auffinden des Ziels erfolgt dann unter Heranziehen der wenigstens einen Bildposition und in Abhängigkeit der Parallaxenkorrigierinformation, so dass eine durch die Messachse und die optische Achse der Kamera gegebene Parallaxe berücksichtigt wird.

Durch das erfindungsgemässe Verfahren ist aus den erfassten Lichtflecken nicht nur eine Information über eine Zielrichtung ableitbar, sondern zusätzlich eine Information über eine Entfernung zum Ziel, wodurch ein eindeutiges Auffinden des Ziels trotz des Versatzes der optischen Achse zur Messachse erreichbar ist, so dass ein Ausrichten der Messstrahls auf das Ziel direkt, d.h. in nur einem Suchvorgang durchführbar ist. Insbesondere kann durch das erfindungsgemässe Verfahren eine Grobentfernung zum Ziel bestimmt werden, und/oder im Zusammenhang mit einer bestimmten Zielrichtung eine grobe Position des Ziels ermittelt werden. Auch kann erfindungsgemäss der oder den ermittelten Bildpositionen und der Parallaxenkorrigierinformation, welche erfindungsgemäss z.B. auch aus zwei Bildpositionen anhand deren Distanz im Bild zueinander ermittelbar ist, direkt anhand einer hinterlegten Referenz eine Grobposition des Ziels zugeordnet werden. Eine solche Referenz ist bspw. eine mehrdimensionale Look-Up-Tabelle, in der zu Bildpositionswerten, insbesondere unter Verwendung von Parallaxenkorrigierinformationen, Grobpositionen nachschlagbar sind. Eine Parallaxenkorrigierinformation kann erfindungsgemäss alternativ anhand einer geometrischen Kenngrösse, z.B. der grössten Erstreckung, der Strahlungsquerschnittsform aus beiden Lichtflecken bestimmt werden oder mittels In-Übereinstimmung-Bringen dieser Querschnittsform mit einem hinterlegten Muster, welchen eine Parallaxenkorrigierinformation zugeordnet ist.

Mit erfindungsgemässem Verfahren lassen sich Vieldeutigkeiten, die bei Heranziehen von nur einer mittels der Lichtflecke bestimmten Positionsinformation zum Auffinden des Ziels und durch eine durch die Messrichtung und der optischen Achse der Kamera gegebene Parallaxe vorhanden sind, durch ein unabhängiges Heranziehen von sowohl der ersten als auch der zweiten Lichtfleckposition und deren Distanz zueinander zum Auffinden des Ziels auflösen.

Gemäss einer weiteren Ausführung der Erfindung erfolgt das Auffinden des Ziels unter Heranziehen mehrerer Lichtfleckpositionspaare und deren Distanzen zueinander, wodurch die Genauigkeit der Zielauffindung gesteigert werden kann. Insbesondere kann eine Mittelung über mehrere bestimmte einzelne Grobentfernungen, Zielrichtungen und/oder Grobpositionen durchgeführt werden. Verfügt die konkrete Ausführungsform des erfindungsgemässen Lasertrackers über mehrere Beleuchtungsmittelpaare mit unterschiedlicher Basislänge, kann erfindungsgemäss eine Verbesserung der Genauigkeit durch gemeinsames oder ausgewähltes Verwenden eines dieser Beleuchtungsmittelpaare erfolgen. Insbesondere kann eine Auswahl der zur Zielauffindung benutzten Beleuchtungsmittel abhängig von der Zielgrösse und/oder einem vorbekannten Zielentfernungsschätzwert erfolgen.

Hinsichtlich eines zweiten Aspekts der Erfindung wird mit der Kamera ein Bild erfasst, welches zumindest teilweise durch vom Ziel reflektierte Beleuchtungsstrahlung erzeugt ist, und im Bild eine Position aus dieser erfassten Beleuchtungsstrahlung bestimmt, insbesondere durch Übernahme der Position eines von ihr erzeugten Lichtflecks oder durch Bestimmung einer Position aus mehreren, insbesondere zwei, Lichtfleckpositionen, vorzugsweise durch Positionsmittelung. Bei Ausführung der Suchfunktionalität erfolgt ein Auffinden des Ziels in Abhängigkeit der Bildposition. Ausserdem weißt die Zielsucheinheit ein omnidirektionales Zieldistanzbestimmungsmittel auf, mit welchem bei Ausführung der Suchfunktionalität eine Grobdistanz zum Ziel bestimmt wird, wobei zum Ziel vom Zieldistanzbestimmungsmittel ein Messsignal gesendet und empfangen wird, welches hinsichtlich einer Laufzeit, Phaseninformation und/oder Stärke ausgewertet wird. Ein Auffinden des Ziels erfolgt dann erfindungsgemäss in Abhängigkeit der mittels des positionssensitiven Detektors bestimmten Bildposition unter Heranziehung der bestimmten Grobdistanz.

Im Gegensatz zu Methoden der Zielsuche des Standes der Technik kann die Steuerungs- und Auswerteeinheit dabei erfindungsgemäss derart konfiguriert sein, dass bei Ausführung der Suchfunktionalität Vieldeutigkeiten, die bei einer Heranziehung von nur einer Zielpositionsinformation zum Auffinden des Ziels und durch eine durch die Messrichtung und der optischen Achse der Kamera gegebene Parallaxe vorhanden sind, durch die Grobdistanz als zusätzliche Zielpositionsinformation zum Auffinden des Ziels aufgelöst werden. Damit ist ein eindeutiges Auffinden des Ziels durchführbar. Somit ist trotz des Versatzes zwischen der optischen Kameraachse der Zielsucheinheit und der Messachse der Messstrahl auf das Ziel in einem direkten Schritt ausrichtbar, ohne auf ein iteratives Vorgehen angewiesen zu sein. Zudem ermöglicht das erfindungsgemässe eindeutige Auffinden des Ziels mittels eines Erfassungsvorgangs auch eine Ausrichtung des Messstrahls auf ein bewegtes Ziel.

Erfindungsgemäss kann aus der Zielpositionsinformation eine Zielrichtung abgeleitet werden. Zusammen mit einer mittels des Zielbestimmungsmittels bestimmten Grobdistanz ist bspw. durch allgemein bekannte Triangulationsprinzipien das Ziel lokalisierbar, mit einer ausreichenden Präzision, um eine Feinanzielung zu ermöglichen. In diesem Sinn kann durch die erfindungsgemässe Zielsucheinheit eine eindeutige Grobposition des Ziels ermittelt werden. Eine Grobposition kann erfindungsgemäss auch durch Nachschlagen in einer Look-Up-Tabelle bestimmt werden, in der eine Grobposition anhand von Bildpositionen und Grobdistanzen direkt abgelesen werden kann. Eine solche Zuordnung mit Referenzwerten kann bspw. in der Steuerungs- und Auswerteeinheit hinterlegt sein.

Bei einer Heranziehung nur der einen Bildposition, die aus dem von der Kamera aufgenommenen Bild ermittelt ist, und einem Versatz der optischen Achse der Kamera relativ zur Messachse der Messstrahlung kann das Ziel nicht eindeutig lokalisiert werden, da aus dem Bild so nur eine Richtungsinformation ableitbar ist, jedoch keine Entfernung zum Ziel bestimmbar und somit keine Lokalisierung des Ziels möglich ist. Ein Ausrichten des Messstrahls auf das Ziel ist somit nicht in einem Schritt möglich. Ein Vorteil der erfindungsgemässen Verwendung eines Zieldistanzbestimmungsmittels ist daher, dass das Ziel eindeutig gefunden werden kann und kein iteratives Annähern an das Ziel durchgeführt werden muss, sondern das Anzielen direkt erfolgen kann.

Eine mittels der Auswertung des Detektorbilds bestimmte Zielrichtung kann erfindungsgemäss bei der Bestimmung einer Grobdistanz zum Ziel berücksichtigt werden, insbesondere dadurch, dass ein Ausrichten einer Senderichtung des Messsignals anhand der Zielrichtung erfolgt oder aus bereits anhand des Zieldistanzbestimmungsmittels aufgenommenen Daten anhand der Information über die Zielrichtung eine gezielte Auswahl erfolgt. Dies kann im letztgenannten Fall besonders bei einer grossen Menge an aufgenommenen Daten eine Auswertung vereinfachen und beschleunigen. Ein gezielteres Senden des Messsignals bietet vor allem dann Vorteile, wenn das Signal wenig divergent abgestrahlt werden kann oder soll und deshalb ein relativ kleiner Zielbereich abgedeckt wird.

Das Zieldistanzbestimmungsmittel kann erfindungsgemäss ausgeprägt sein als ein Mittel zur Erstellung eines 3D-Bildes einer Umgebung. Insbesondere eignet sich hierfür erfindungsgemäss eine am Lasertracker angeordnete Range-Image-Kamera (RIM-Kamera), welche Bestandteil der Kamera (24) sein kann. Mit dem 3D-Bilderstellungsmittel als Distanzmesser lassen sich grob Distanz und relative Position einer Vielzahl von Oberflächenpunkten zumindest eines Teils der Umgebung des Lasertrackers, in welcher das Ziel vermutet wird, aufnehmen, woraus erfindungsgemäss ein 3D-Punktwolke erstellt werden kann. Dazu wird, wie nach dem Stand der Technik bekannt, ein Messsignal von der RIM-Kamera emittiert, von der Umgebungsoberfläche reflektiert, von der RIM-Kamera erfasst und nach dem indirekten oder direkten Laufzeitmessverfahren (indirect / direct Time-of-Flight-Verfahren) ausgewertet. Als Grobdistanz wird dann die Distanz eines Oberflächenpunkts übernommen, der in einer bestimmten Zielrichtung liegt, welche insbesondere aus der Zielpositionsinformation folgt. Alternativ kann erfindungsgemäss die 3D-Punktwolke bzw. ein daraus erstelltes Tiefenbild mittels Bildauswertung derart ausgewertet werden, dass eine Abbildung des Ziels darin aufgefunden wird, bspw. durch Erkennen des Ziels mittels Objekterkennung, so dass die Grobdistanz aus wenigstens einem dem Ziel zugeordneten Bildpunkt und seinem zugehörigen Distanzwert hervorgeht.

Das Zieldistanzbestimmungsmittel kann erfindungsgemäss ausgeprägt sein als ein Distanzmesser, welcher auf dem Fachmann bekannte Weise eine Distanz durch Senden und Empfangen eines elektromagnetischen oder akustischen Messsignals bestimmt mit einem im Vergleich zum Feinanzielsichtfeld grossen Sichtfeld, insbesondere ein Laser-, Radar-, Lidar-, Funk- oder Ultraschalldistanzmesser. Dabei wird zumindest ein Teil des Messsignals vom Ziel reflektiert und von einer Empfängereinheit des Distanzmessers erfasst. Insbesondere bei Distanzmessung mittels Funk, im Speziellen bei Verwendung von WLAN-, Bluetooth- oder Ultrawideband-Technologie, kann das Messsignal stattdessen von einer am Ziel angebrachten Empfänger- und Sendeeinheit aufgenommen und unmittelbar zurückgesandt werden. Eine Ermittlung einer Grobdistanz zum Ziel erfolgt durch Auswertung einer Messsignaleigenschaft, welche sich mit der zurückgelegten Distanz ändert, bswp. der Signallaufzeit, dabei vorzugsweise durch Anwendung des direkten Laufzeitmessverfahrens (wodurch eine Distanzmessung auf eine Laufzeitmessung reduziert wird) oder der Signalphase, vorzugsweise mittel indirektem Laufzeitmessverfahrens. Alternativ oder zusätzlich ist erfindungsgemäss eine Grobdistanz über die empfangene Signalstärke ermittelbar, welche mit der bekannten Signalstärke beim Senden verglichen wird, bei einem Lasertracker mit Funkdistanzmesser insbesondere unter Ermittlung eines RSSI-Werts (Radio Signal Strength Indicator - Wert).

Weist der Lasertracker erfindungsgemäss eine Kalibrierfunktion auf, wird bei deren Ausführung als für das Zielauffinden relevante Einheit insbesondere die Positionierung und Ausrichtung des Zieldistanzbestimmungsmittels relativ zur optischen Achse und/oder Messachse der Strahllenkeinheit bestimmt. Im Rahmen der Kalibrierung werden insbesondere für jede vermessene Position des Ziels die Position im Bild der vom Ziel reflektierten und von der Kamera erfassten Beleuchtungsstrahlung und die Grobdistanz oder eine ihr vorausgehende Messgrösse, bspw. die Laufzeit des Distanzmesssignals, bestimmt. Aus diesen kann erfindungsgemäss auch eine Zuordnung von Bildpositionen und Grobdistanzen zu Grobpositionen erstellt und hinterlegt werden, welche zum Auffinden des Ziels als Referenz zur Ermittlung einer Grobposition herangezogen wird.

Hinsichtlich des zweiten Aspekts der Erfindung ist das erfindungsgemässe Verfahren dadurch gekennzeichnet, dass eine Grobdistanz zum Ziel bestimmt wird mittels eines zum Ziel gesendeten und von dort empfangenen Distanzmesssignals, dessen distanzabhängige Laufzeit, Phaseninformation und/oder Stärke ausgewertet wird. Das Messsignal wird von einem am Lasertracker angeordneten Zieldistanzbestimmungsmittel emittiert und empfangen. Das Auffinden des Ziels erfolgt erfindungsgemäss in Abhängigkeit der Bildposition unter Heranziehen der ermittelten Grobdistanz, so dass eine durch die Messachse und die optische Achse der Kamera gegebene Parallaxe berücksichtigt wird.

Durch das erfindungsgemässe Verfahren ist ein eindeutiges Auffinden des Ziels trotz des Versatzes der optischen Achse zur Messachse erreichbar, da die Grobdistanz eine Zielpositionsinformation so ergänzt, dass sich aus ihr ergebende Vieldeutigkeiten aufgelöst werden. Insbesondere kann durch das erfindungsgemässe Verfahren aus einer aus der Bildposition abgeleiteten Zielrichtung und der Grobdistanz eine Grobposition des Ziels bestimmt werden, mit welcher ein Ausrichten der Messstrahls auf das Ziel direkt, d.h. in nur einem Vorgang durchführbar ist. Auch kann erfindungsgemäss einer ermittelten Zielpositionsinformation und Grobdistanz direkt anhand einer hinterlegten Referenz eine Grobposition des Ziels zugeordnet werden. Eine solche Referenz ist bspw. eine mehrdimensionale Look-Up-Tabelle, in der zu Zielpositionsinformationen oder Lichtfleckpositionswerten, und Grobdistanzen Grobpositionen nachschlagbar sind.

Insbesondere ist das erfindungsgemässe Verfahren dadurch gekennzeichnet, dass das Zieldistanzbestimmungsmittel als ein 3D-Bilderstellungsmittel, insbesondere eine RIM-Kamera, ausgeprägt ist und ein Bestimmen einer Grobdistanz aus einer damit erstellten 3D-Punktwolke erfolgt, die eine Vielzahl von Oberflächenpunkten wenigstens eines Teils der Lasertrackerumgebung repräsentiert. Dabei wird als Grobdistanz der Distanzwert eines Punktes der 3D-Punktwolke übernommen, der in einer Zielrichtung liegt, die insbesondere aus einer Zielpositionsinformation ermittelt ist. Alternativ oder zusätzlich kann erfindungsgemäss aus der 3D-Punktwolke ein Tiefenbild erstellt werden und mittels Bildauswertung, bspw. Objekterkennung oder Auswertung von Helligkeitswerten, darin das Ziel aufgefunden und die Distanz des entsprechenden Datenpunktes verwendet werden.

Als Alternative zu einem Verwenden eines 3D-Bilderstellungsmittels kann im erfindungsgemässen Verfahren eine Grobdistanz ermittelt werden, indem ein Senden eines elektromagnetischen oder akustischen Messsignals durch das Zieldistanzbestimmungsmittel, welches bspw. als ein Radardistanzmesser ausgeprägt ist, erfolgt und das Ziel das Messsignal reflektiert, oder aufnimmt und, insbesondere unmittelbar, zurückschickt. Aus einer sich mit der Distanz ändernden Signaleigenschaft kann aus dem vom Zieldistanzbestimmungsmittel empfangenen Messsignal auf eine Grobdistanz geschlossen werden. Erfindungsgemäss findet ein Auswerten statt
- einer Messsignalstärke, insbesondere unter Ermittlung eines RSSI-Werts,
- einer Signalphase, insbesondere als indirekte Laufzeitmessung des Messsignals, und/oder
- einer Signallaufzeit, insbesondere als direkte Laufzeitmessung des Messsignals.

Erfindungsgemäss kann im Rahmen des Verfahrens ein Heranziehen mehrerer Zielpositionsinformationen und/oder Grobdistanzen erfolgen, so dass nach dem bekannten Prinzip der mehrmaligen Durchführung einer gleichartigen Messung und Mittelung der jeweils erhaltenen Messwerte eine Steigerung der Genauigkeit der Zielauffindung erfolgt. Insbesondere kann dabei eine Mittelung über mehrere Zielrichtungen und/oder Grobdistanzen erfolgen oder mehrere Grobpositionen bestimmt und daraus eine mittlere Grobposition berechnet werden.

Hinsichtlich eines dritten Aspekts der Erfindung weist der Lasertracker Beleuchtungsmittel auf, durch deren vom Ziel reflektierte Beleuchtungsstrahlung in einem von der am Lasertracker angeordneten Kamera Lichtflecke erfassbar sind. Die Steuerungs- und Auswerteeinheit weist eine Suchfunktionalität auf, mit der ein Auffinden des Ziels in Abhängigkeit der Lichtflecke durchführbar ist. Bei Ausführung der Suchfunktionalität erfolgt das Auffinden des Ziels basierend auf aktiver optischer Triangulation unter Verwendung einer fixen Basislänge, die entweder definiert ist durch den Abstand
a) eines Paars von Beleuchtungsmitteln zueinander,
b) eines Beleuchtungsmittels zur gerichteten Strahlungsemission zum Projektionszentrum einer am Lasertracker angeordneten Kamera, oder
c) von zwei am Ziel angeordneten optischen Markierungen, ausgeprägt als Leuchtmittel, insbesondere LEDs, oder Retroreflektoren, zueinander,
so dass eine durch die Messachse und die optische Achse der ersten Kamera gegebene Parallaxe berücksichtigt wird.

Unter aktiver optischer Triangulation wird im Rahmen der Erfindung eine Bestimmung von Winkel- und/oder Längenmassen zu Vermessungszwecken, im Speziellen zur Ermittlung einer Richtung und/oder Entfernung zum Ziel, unter Verwendung von wenigstens einem Dreieck mit einer Seite vorbekannter Länge, welche eine Basis des Dreiecks darstellt, verstanden, wobei das Dreieck teilweise durch den Schnitt räumlicher Lichtstrahlen definiert ist, welche von wenigstens einem Lichtmittel, im Speziellen einem Beleuchtungsmittel oder Leuchtmittel, erzeugtes Licht repräsentieren.

Die erfindungsgemässe Triangulation ermöglicht eine Konfiguration der Steuerungs- und Auswerteeinheit derart, dass bei Ausführung der Suchfunktionalität ein eindeutiges Auffinden des Ziels erfolgen kann, obwohl eine durch die Messrichtung und der optischen Achse der Kamera gegebene Parallaxe vorhanden ist. Somit ist der Messstrahl auf das Ziel in einem direkten Schritt ausrichtbar, ohne auf ein iteratives Vorgehen angewiesen zu sein, was ein Vorteil im Vergleich zu Suchfunktionalitäten des Stands der Technik darstellt. Ein weiterer Vorteil der vorliegenden Erfindung ist, dass durch das erfindungsgemässe eindeutige Auffinden des Ziels mittels eines Erfassungsvorgangs auch eine Ausrichtung des Messstrahls auf ein bewegtes Ziel erfolgen kann.

Mit einer Zielsucheinheit nach dem Stand der Technik ist lediglich eine Zielpositionsinformation bestimmbar, welche Vieldeutigkeiten beinhaltet, welche einem eindeutigen Auffinden des Ziels entgegenstehen. Insbesondere ist mit einer herkömmlichen Zielsucheinheit lediglich eine Zielrichtung bestimmbar, welche aufgrund des Versatzes zwischen der optischen Kameraachse der Zielsucheinheit und der Messachse nur eine iterative Ausrichtung der Strahllenkeinheit auf das Ziel ermöglicht. Durch die erfindungsgemässe Suchfunktionalität, welche zum Auffinden des Ziels aktive optische Triangulation unter Verwendung einer durch vorgenannte Mittel definierten Basislänge verwendet, wird eine Information über die Lage des Ziels erhalten, die derart eindeutig ist, dass die Strahllenkeinheit in einem einzigen Schritt auf das Ziel ausgerichtet werden kann. Mittels der aktiven optischen Triangulation ist nach allgemein bekannten Triangulationsprinzipien unter Verwendung der erfindungsgemässen fixen Basislänge eine erste und eine zweite Zielrichtung ableitbar und damit eine Grobposition des Ziels bestimmbar, wodurch der Messstrahl direkt auf das Ziel ausgerichtet werden kann. Durch die erfindungsgemässe Triangulation kann alternativ oder zusätzlich eine Grobentfernung zum Ziel bestimmt werden. Auch kann erfindungsgemäss eine Grobentfernung oder Grobposition aufgrund ermittelter Triangulationsdaten anhand einer hinterlegten referenzierten Zuordnung nachgeschlagen werden, in der Grobentfernungen oder Grobpositionen Triangulationsmassen zugeordnet sind. Insbesondere können mittels Triangulation bestimmte Winkel- und/oder Längenmasse in einer Look-Up-Tabelle hinterlegt sein, aus der sich referenzierte Grobpositionen auslesen lassen.

Bei Ausführung der Suchfunktionalität wird zur Triangulation einer der Abstände nach a), b) oder c) als Basis eines Triangulationsdreiecks herangezogen. Als weitere Dreiecksbestimungsgrösse wird je nach Ausführungsform erfindungsgemäss ermittelt
a) eine Distanzinformation hinsichtlich der Beabstandung von Lichtflecken zueinander, die durch von einem Ziel zurückgeworfene Beleuchtungsstrahlung erzeugt sind. Dieses Lichtfleckpaar stellt eine Abbildung des Beleuchtungsmittelpaars über den Lichtweg zum und vom reflektierenden Ziel dar, wodurch der zielentfernungsabhängige parallaktische Winkel zu der durch die Beleuchtungsmittel definierten Basislänge beobachtet werden kann, welcher sich aus der Beabstandung der Lichtflecke zueinander ergibt. Durch Kenntnis einer weiteren Bestimmungsgrösse, bspw. der Positionierung des Detektors der Kamera oder einer aus der Bildposition einer der beiden oder beider Lichtflecke abgeleiteten Zielrichtung oder Richtung des reflektierten Lichtstrahls ist erfindungsgemäss eine Grobposition des Ziels ableitbar, welche zum Auffinden des Ziels dient.
b) eine Richtung wenigstens eines vom Beleuchtungsmittel zur gerichteten Strahlungsemission emittierten Lichtstrahls und die Position des von ihm nach Reflektion am Ziel erzeugten Lichtflecks auf dem positionssensitiven Detektor der Kamera. Durch diese Lichtfleckposition wird zusammen mit dem Projektionszentrum der Kamera eine Empfangsrichtung des Lichtstrahls festgelegt. Aus der Länge der Basis, deren Endpunkte die Anknüpfungspunkte der Lichtstrahlen bilden, und den beiden Strahlrichtungen ist eine Grobposition des Ziels ableitbar. Insbesondere wird erfindungsgemäss anhand der benannten Dreiecksbestimmungsgrössen eine Grobentfernung zum Ziel ermittelt. Zusammen mit einer in Abhängigkeit der Lichtflecke ermittelten Zielpositionsinformation, insbesondere einer Zielrichtung, ist damit eine Grobposition des Ziels bestimmbar, welche zum Auffinden des Ziels dient.
c) eine Distanzinformation hinsichtlich weiterer Lichtflecke, welche erzeugt sind von der jeweiligen Strahlung zweier optischer Markierungen am Ziel, welche von der Kamera der Zielsucheinheit erfasst wird. Dieses Paar aus Lichtflecken stellt eine Abbildung eines Paars aus optischen Markierungen dar, wodurch die Distanz der Lichtfleckpositionen zueinander abhängig von der Zielentfernung ist, welche ein Mass für den parallaktische Winkel zu der durch die Beleuchtungsmittel definierten Basislänge darstellt. Durch Kenntnis einer weiteren Bestimmungsgrösse, bspw. der Positionierung des die Strahlung erfassenden Detektors oder einer aus einer oder beiden Lichtfleckpositionen abgeleiteten Zielrichtung oder Richtung des reflektierten Lichtstrahls ist, unter Kenntnis der Positionierung der optischen Markierungen relativ zum Ziel, prinzipiell eine Grobposition des Ziels ableitbar. Erfindungsgemäss wird insbesondere durch die Triangulation eine Grobentfernung zum Ziel bestimmt. Zusammen mit einer in Abhängigkeit der Lichtflecke der Beleuchtungsmittel ermittelten Zielpositionsinformation ist damit eine Grobposition des Ziels bestimmbar, welche zum Auffinden des Ziels dient. Insbesondere zur Steigerung der Zuverlässigkeit und/oder Genauigkeit der erfindungsgemässen Grobent-fernungsbestimmung können analog zusätzliche Lichtflecke von weiteren am Ziel angeordneten optischen Markierungen zu einer aktiven optischen Dreiecksberechnung verwendet werden.

Um eine Distanzinformation zu bestimmen, kann erfindungsgemäss ein Matchen mit einem hinterlegten "Doppellicht-fleck"-Muster erfolgen. Dazu sind Muster hinterlegt, die für eine jeweilige Beabstandung zweier Lichtflecke spezifisch sind, bspw. indem sie jeweils aufgrund ihrer Beschaffenheit, z.B. ihrer Grösse, ein Mass der Trennung der Lichtflecke sind. Anhand des zum aktuellen Bild passenden Muster wird dann eine Distanzinformation, welche insbesondere ein Distanzwert sein kann, abgelesen und zum Auffinden des Ziels verwendet. Alternativ lässt sich eine Distanzinformation aus einer Bildpositionsbestimmung für jeweils einen einzelnen Lichtfleck ermitteln, in dem anhand der Bildpositionen eine Distanz der Lichtflecke berechnet wird. Als Mass für die Distanz kann erfindungsgemäss auch die Grösse der gemeinsamen Strahlungsquerschnittsform aus beiden Lichtflecken benutzt werden, bspw. indem deren längste Ausdehnung mittels Bildverarbeitung bestimmt wird.

Zur Triangulation nach der Ausführungsform a) kann die Zielsucheinheit erfindungsgemäss zur Erhöhung der Genauigkeit der Zielauffindung und/oder zur Anpassung an die Grösse des Ziels über wenigstens zwei Paare von Beleuchtungsmitteln verfügen, deren jeweiliger Abstand zueinander jeweils eine Basislänge definiert. Der Abstand zueinander ist verschieden, wodurch zwei unterschiedlich grosse Basislängen definiert sind. Eine grosse Basislänge kann vor allem zur Erhöhung der Genauigkeit der Bestimmung einer Grobposition dienen, wenn das Ziel sich relativ weit entfernt vom Lasertracker befindet, da sich das Verhältnis von Basislänge zur Zielentfernung auf den Messfehler auswirkt. Eine grössere Basislänge ist hierfür günstiger. Die Basislänge ist bei Verwendung retroreflektierender Ziele jedoch dadurch begrenzt, dass der Abstand zwischen Beleuchtungsmittel und Kamera nur so gross sein darf, dass retroreflektierte Beleuchtungsstrahlung noch von der Kamera erfassbar ist. Der maximal mögliche Abstand hängt dabei u.a. von der Grösse des kleinsten Reflektorziels ab, das aufgefunden werden soll. Um eine möglichst grosse Basislänge und damit Genauigkeit unter Berücksichtigung des maximal möglichen Abstands zu erreichen, kann erfindungsgemäss eine Auswahl des zur Zielauffindung nach der Ausführungsform a) zu benutzenden Beleuchtungsmittelpaars in Abhängigkeit der Zielbeschaffenheit und/oder geschätzten Zieldistanz erfolgen. Dies kann insbesondere durch die Steuerungs- und Auswerteeinheit automatisiert erfolgen. Erfindungsgemäss kann auch ein Beleuchten des Ziels durch mehrere Beleuchtungsmittelpaare und entsprechend ein Erfassen mehrerer Lichtfleckpaare erfolgen und durch eine unabhängige Bestimmung von z.B. vier Lichtfleckpositionen und zweier Distanzwerte die Genauigkeit einer Bestimmung einer Richtung zum Ziel erhöht werden. Insbesondere kann ein Ausführen der Suchfunktionalität zuerst mit der ersten Basislänge durchgeführt werden und falls dadurch kein eindeutiges Auffinden des Ziels erreichbar ist, ein Umschalten auf eine Verwendung der zweiten Basislänge erfolgen.

Zur Triangulation nach der Ausführungsform b) weist der erfindungsgemässe Lasertracker wenigstens ein Beleuchtungsmittel auf, insbesondere das dritte Beleuchtungsmittel, das Beleuchtungsstrahlung gerichtet emittieren kann. Die Zielsucheinheit weist entsprechend Mittel zur Bestimmung der Beleuchtungsstrahlemissionsrichtung auf. Weiterhin kann mit der gerichteten Beleuchtungsstrahlung das Ziel strukturiert beleuchtbar sein, z.B. mittels Streifenprojektion oder durch Projektion eines Lichtmusters. Insbesondere ist dieses Beleuchtungsmittel ausgeprägt als Laserdiode, vorzugsweise zur Emission von Licht einer Wellenlänge im IR-Bereich, welche sich insbesondere von der Wellenlänge oder Polarisierung des ersten und zweiten Beleuchtungsmittels unterscheidet. Die gerichtete Beleuchtungsstrahlung kann entweder von der ersten Kamera erfasst werden, welche dazu bspw. über Mittel verfügt, um gerichtete von anderweitiger Beleuchtungsstrahlung unterscheiden zu können, bspw. Bildverarbeitungsalgorithmen, die eine wellenlängenabhängige Bildauswertung ermöglichen oder einen Detektor mit mehreren spezifisch wellenlängensensitiven Erfassungsbereichen. Alternativ kann die Zielsucheinheit eine zweite Kamera bekannter Positionierung mit einem zweiten positionssensitiven Detektor speziell zur Erfassung der Beleuchtungsstrahlung des dritten Beleuchtungsmittels aufweisen, welche bspw. über einen Filter verfügt, der vor oder nach der Erfassung die unterschiedlichen Beleuchtungsstrahlungsarten voneinander trennen kann, und die erste Kamera über einen entsprechend gegensätzlichen Filter verfügen. Die Emissionsrichtung und die Positionierung des Beleuchtungsmittels relativ zur jeweiligen zugeordneten Kamera, insbesondere relativ zu deren optischer Achse, sind erfindungsgemäss bekannt oder bestimmbar.

Zur Triangulation nach der Ausführungsform c) sind die Beleuchtungsmittel der Zielsucheinheit erfindungsgemäss insbesondere derart ausgeprägt, dass Beleuchtungsstrahlung emittiert wird, die sich vom Licht der optischen Markierungen hinsichtlich Wellenlänge, Phase und/oder Polarisierung unterscheidet, um eine Zuordnung von von der Zielsucheinheit erfasster Strahlung zur jeweiligen Lichtquelle zu ermöglichen. Entsprechend kann die Kamera über Mittel verfügen, um beide Strahlungsarten voneinander unterscheiden zu können, bspw. Bildverarbeitungsalgorithmen, die eine wellenlängenabhängige Bildauswertung ermöglichen oder einen Detektor mit mehreren spezifisch wellenlängensensitiven Erfassungsbereichen oder Mitteln zur Lichtphasenunterscheidung. Alternativ dazu kann die Zielsucheinheit eine zweite Kamera bekannter Positionierung mit einem zweiten positionssensitiven Detektor speziell zur Erfassung des Lichts, das von den optischen Markierungen des Ziels ausgehend auf den Lasertracker trifft, aufweisen, welche bspw. über einen Filter verfügt, der vor oder nach der Erfassung Leuchtmittelstrahlung von Beleuchtungsstrahlung trennen kann. Entsprechend kann dann die erste Kamera über einen gegensätzlichen Filter verfügen, der Licht der optischen Markierungen aussortiert.

Weist der Lasertracker erfindungsgemäss eine Kalibrierfunktion auf, wird bei deren Ausführung der Abstand der eine Triangulationsbasis definierenden Bestandteile zueinander bestimmt, also der Abstand eines Beleuchtungsmittelpaars, eines Beleuchtungsmittels zu einem Kameraprojektionszentrum oder der Abstand zweier optischer Markierungen am Ziel. Im Rahmen der Kalibrierung werden insbesondere für jede mittels der Strahllenkeinheit vermessene Position des Ziels die erfassten Lichtfleckpositionen bestimmt. Zusätzlich können weitere Positionierungen und/oder Ausrichtungen von Zielsucheinheitskomponenten im Rahmen der erfindungsgemässen Kalibrierung bestimmt werden, bspw. bei Vorhandensein eines Beleuchtungsmittels zur Emission gerichteter Beleuchtungsstrahlung dessen Emissionsrichtung und Positionierung relativ zur zugehörigen Kamera oder bei die Positionierung optischer Markierungen am Ziel relativ zum Ziel. Ausserdem oder alternativ kann anhand der Kalibrierung eine Referenzzuordnung von Lichtfleckpositionen auf dem Detektor und/oder Triangulationsmassen, bspw. Strahlemissionswinkel, zu Grobpositionen gebildet und hinterlegt und zum Auffinden des Ziels herangezogen werden. Durch eine solche Zuordnung kann insbesondere auf eine explizite Kenntnis einer Basislänge zum Auffinden des Ziels verzichtet werden, da diese implizit durch das Kalibrierverfahren in die Zuordnung eingeht.

Hinsichtlich des dritten Aspekts der Erfindung erfolgt im Rahmen des erfindungsgemässen Verfahrens ein Auffinden des Ziels in Abhängigkeit der erfassten Lichtflecke der Beleuchtungsstrahlung. Das Verfahren ist erfindungsgemäss gekennzeichnet durch ein Auffinden des Ziels basierend auf aktiver optischer Triangulation unter Verwendung einer fixen Basislänge, welche definiert ist durch den Abstand
a) eines Paars von Beleuchtungsmitteln zueinander,
b) eines Beleuchtungsmittels zur Emission gerichteter Beleuchtungsstrahlung zum Projektionszentrum einer am Lasertracker angeordneten Kamera, oder
c) von zwei am Ziel angeordneten optischen Markierungen, ausgeprägt als Leuchtmittel oder Retroreflektoren, zueinander,
so dass eine durch die Messachse und die optische Achse der ersten Kamera gegebene Parallaxe berücksichtigt wird.

Durch das erfindungsgemässe Verfahren ist ein eindeutiges Auffinden des Ziels trotz des Versatzes der optischen Achse zur Messachse erreichbar, da durch die Triangulation ein eindeutige Lokalisierung des Ziels erfolgen kann, so dass ein Ausrichten der Messstrahls auf das Ziel direkt, d.h. in nur einem Suchvorgang durchführbar ist. Insbesondere kann durch das erfindungsgemässe Verfahren ein Ableiten einer ersten und einer zweiten Zielrichtung erfolgen, aus denen eine Grobposition des Ziels bestimmt werden kann. Alternativ oder zusätzlich zu einer Zielrichtung kann mittels der Triangulation eine Grobentfernung zum Ziel bestimmt werden. Auch kann erfindungsgemäss den ermittelten Triangulationsdaten direkt anhand einer hinterlegten Referenz eine Grobposition des Ziels zugeordnet werden. Eine solche Referenz ist bspw. eine Look-Up-Tabelle, in der zu mittels der aktiven optischen Triangulation bestimmten Winkel- und Längenmasse Grobpositionen nachschlagbar sind. Mit erfindungsgemässem Verfahren lassen sich Vieldeutigkeiten, die bei Heranziehen von nur einer mittels der Lichtfleckpositionen bestimmten Positionsinformation zum Auffinden des Ziels und durch eine durch die Messrichtung und der optischen Achse der Kamera gegebene Parallaxe vorhanden sind, durch die zusätzliche Information der Grobposition oder Grobentfernung, welche aus dem erfindungsgemässe Triangulationsverfahren hervorgehen, auflösen.

Erfindungsgemäss bildet einer der Abstände nach a), b) oder
c) die Basislänge eines Triangulationsdreiecks. Im Rahmen des Verfahrens kann zur Triangulation zudem erfolgen
   a) ein Bestimmen einer Distanzinformation hinsichtlich der Beabstandung von Lichtflecken zueinander, welche durch von einem Ziel zurückgeworfene Beleuchtungsstrahlung des Beleuchtungsmittelspaars erzeugt sind. Insbesondere wird anhand dieser Lichtfleckpositionsdistanzinformation, der Basislänge und der Positionierung des positionssensitiven Detektors oder einer Zielrichtung, welche anhand einer oder beider Lichtfleckpositionen bestimmt sein kann, eine Grobposition des Ziels bestimmt,
   b) ein Erfassen einer Beleuchtungsstrahlungsemissionsrichtung wenigstens eines Beleuchtungsmittels zur gerichteten Emission von Strahlung und das Bestimmen der Position eines dadurch erzeugten Lichtflecks, durch welche zusammen mit dem Projektionszentrum einer zugehörigen Kamera der Zielsucheinheit eine Empfangsrichtung definiert ist. Insbesondere erfolgt ein Bestimmen einer Grobentfernung zum Ziel anhand der Emissionsrichtung, der Empfangsrichtung und der Basislänge und/oder einer Grobposition aus den Triangulationsdaten und der ersten und zweiten Lichtfleckposition,
   c) ein Bestimmen einer Distanzinformation hinsichtlich der Beabstandung von Lichtflecken, welche durch erfasste Strahlung von am Ziel angeordneten optischen Markierungen erzeugt sind. Insbesondere erfolgt ein Bestimmen einer Grobentfernung zum Ziel anhand der Distanzinformation, welche die Lichtfleckpositionsdistanz selbst sein kann, der Basislänge und der Positionierung des positionssensitiven Detektors oder einer Zielrichtung und/oder einer Grobposition aus den Triangulationsdaten und der Zielpositionsinformation, welche in Abhängigkeit der Beleuchtungsstrahlungslichtflecke ermittelt ist.

Um eine Distanzinformation zu bestimmen, kann erfindungsgemäss ein Matchen mit einem hinterlegten "Doppellichtfleck"-Muster erfolgen. Dazu sind Muster hinterlegt, die für eine jeweilige Beabstandung zweier Lichtflecke spezifisch sind, bspw. indem sie jeweils aufgrund ihrer Beschaffenheit, z.B. ihrer Grösse, ein Mass der Trennung der Lichtflecke sind. Anhand des zum aktuellen Bild passenden Muster wird dann eine Distanzinformation, welche insbesondere ein Distanzwert sein kann, abgelesen und zum Auffinden des Ziels verwendet. Alternativ lässt sich eine Distanzinformation aus einer Bildpositionsbestimmung für jeweils einen einzelnen Lichtfleck ermitteln, in dem anhand der Bildpositionen eine Distanz der Lichtflecke berechnet wird. Als Mass für die Distanz kann erfindungsgemäss auch die Grösse der gemeinsamen Strahlungsquerschnittsform aus beiden Lichtflecken benutzt werden, bspw. indem deren längste Ausdehnung mittels Bildverarbeitung bestimmt wird.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben. Im Einzelnen zeigen:
- Fig.1: zwei Ausführungsformen für erfindungsgemässe Lasertracker und ein Messhilfsinstrument mit optischen Markierungen;
- Fig.2a-c: drei konzeptionelle Ausführungsformen eines erfindungsgemässen Lasertrackers;
- Fig.3a-f: drei Beispiele für die Zielauffindung mit erfindungsgemässen Lasertrackerausführungsformen;
- Fig.4a-c: drei weitere Ausführungsformen eines erfindungsgemässen Lasertrackers;
- Fig.5a-c: drei Ausführungsformen der Anzieleinheit erfindungsgemässer Lasertracker;
- Fig.6a-c: ein mit einer Kamera eines erfindungsgemässen Lasertrackers mit einem positionssensitiven Detektor erfasstes Bild und eine Methode zur Bestimmung der jeweiligen Zielposition; und
- Fig.8a-c: eine erfindungsgemässe Kalibrierung von Position und Ausrichtung dreier Ausführungsformen eines erfindungsgemässen Lasertrackers.

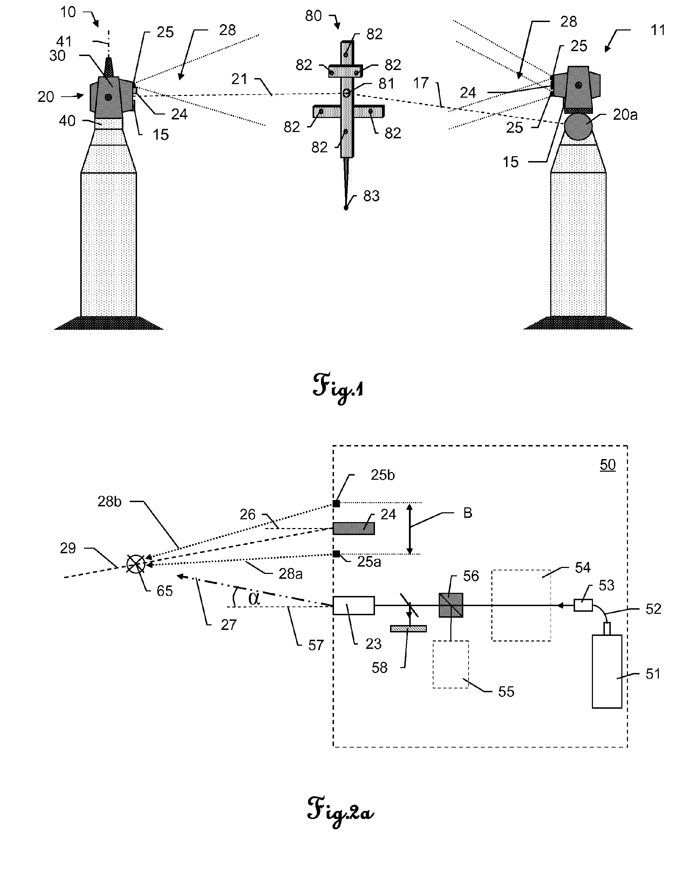

Figur 1 zeigt zwei Ausführungsformen für erfindungsgemässe Lasertracker 10,11 und ein Messhilfsinstrument 80, z.B. ein taktiles Messgerät, welches ein Ziel 81 aufweist. Der erste Lasertracker 10 weist einen Sockel 40 und eine Stütze 30 auf, wobei die Stütze 30 um eine durch den Sockel 40 definierte Schwenkachse 41 relativ zum Sockel 40, insbesondere motorisiert, schwenkbar bzw. rotierbar angeordnet ist. Zudem ist eine Anzieleinheit 20, welche als Strahllenkeinheit ausgebildet sein kann, derart an der Stütze 30 angeordnet, dass die Anzieleinheit 20 relativ zur Stütze 30 um eine Neigungsachse (Transitachse), insbesondere motorisiert, schwenkbar ist. Durch eine so um zwei Achsen bereitgestellte Ausrichtungsmöglichkeit der Strahllenkeinheit 20 kann ein von dieser Einheit 20 emittierter Laserstrahl 21 flexibel ausgerichtet und damit Ziele angezielt werden. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 21 auf das Ziel 81, welches ausgebildet ist als ein Reflektor, gerichtet und wird an diesem zurück zum Lasertracker 10 retroreflektiert. Mittels dieses Messlaserstrahls 21 kann eine Entfernung zum Zielreflektor 81, insbesondere mittels Laufzeitmessung, mittels des Phasenmessprinzips oder mittels des Fizeau-Prinzips, bestimmt werden. Der Lasertracker 10 verfügt über eine Feindistanzmesseinheit zur Bestimmung dieser Entfernung zwischen dem Tracker 10 und dem Zielreflektor 81 und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Anzieleinheit 20, eine Bilderfassungseinheit 15 zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Objekt in Kontakt gebracht werden kann. Während dieser Kontakt zwischen dem Tastwerkzeug 80 und dem Gegenstand besteht, können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Zielreflektor 81 und zu am Messhilfsinstrument 80 angeordneten optischen Markierungen 82, die beispielsweise als Leuchtdioden ausgebildet sein können. Alternativ können die optischen Markierungen 82 auch derart ausgebildet sein, dass diese bei einem Beleuchten, z.B. mit Strahlung einer definierten Wellenlänge, die auftreffende Strahlung reflektieren (als Retroreflektoren ausgebildete Hilfspunkt-Markierungen 82), insbesondere eine bestimmte Leuchtcharakteristik zeigen, oder dass diese ein definiertes Muster oder Farbkodierung aufweisen. Aus der Lage bzw. Verteilung der optischen Markierungen 82 in einem mit dem Sensor der Bilderfassungseinheit 15 erfassten Bild kann somit eine Orientierung des Tastwerkzeugs 80 bestimmt werden.

Der zweite Lasertracker 11 weist eine von der Bilderfassungseinheit 15 separierte Strahllenkeinheit 20a zur Emission eines zweiten Laserstrahls 17 auf, welcher ebenfalls auf den Reflektor 81 ausgerichtet ist. Sowohl der Laserstrahl 17 als auch die Bilderfassungseinheit 15 sind jeweils um zwei Achsen motorisiert schwenkbar und können dadurch derart ausgerichtet werden, dass mittels der Bilderfassungseinheit 15 das mit dem Laserstrahl 17 angezielte Ziel 81 und die Markierungen 82 des Messhilfsinstruments 80 erfasst werden können. Somit können auch hier eine präzise Entfernung zum Zielreflektor 81 und eine Orientierung des Instruments 80 anhand der räumlichen Lage der Markierungen 82 bestimmt werden.

Zur jeweiligen Ausrichtung der Laserstrahlen 17,21 auf den Zielreflektor 81 sind an den Lasertrackern 10,11 als Teil einer Zielsucheinheit jeweils Beleuchtungsmittel 25 zur divergenten Beleuchtung des Messhilfsinstruments 80 und dabei vor allem des Zielreflektors 81 mit Strahlung 28 einer bestimmten Wellenlänge, insbesondere im infraroten Wellenlängenbereich, und zusätzlich zumindest eine Kamera 24 mit einem positionssensitiven Detektor vorgesehen. Die an dem Zielreflektor 81 reflektierte und zum Lasertracker 10,11 rückgestrahlte Beleuchtungsstrahlung 28 kann in einem Bild der Kamera 24 als ein Lichtfleck für die Beleuchtungsstrahlung eines jeden Beleuchtungsmittels detektiert und mit dem positionssensitiven Detektor eine Position des Ziels 81 auf dem Detektor abgebildet werden, welche als eine Bildposition wenigstens eines Lichtflecks bestimmbar ist. Somit kann mittels einer Steuerungs- und Auswerteeinheit mit Suchfunktionalität, welche die Lasertracker 10,11 aufweisen, sowohl mit dem ersten Lasertracker 10 als auch mit dem zweiten Lasertracker 11 eine Zielposition des Zielreflektors 81 bestimmt und in Abhängigkeit dieser das Ziel (Reflektor 81) aufgefunden und eine Ausrichtung der Strahllenkeinheit 20 auf das Ziel 81 ausgeführt werden. Beispielsweise kann erfindungsgemäss nach erfolgtem Auffinden des Ziels 81 eine Richtung zum Ziel 81 von der Anzieleinheit aus gesehen und deren Abweichung von der bekannten Ausrichtung des Messlaserstrahls 17,21 ermittelt werden. Die Abweichung kann hinsichtlich des Unterschieds der beiden durch die Winkelmesser bekannten Richtungswinkel der Laserstrahlrichtung und der entsprechenden berechneten Winkel der Zielrichtung quantifiziert werden, bspw. durch eine jeweilige Differenzbildung. Eine Ausrichtung der Messstrahlung 17, 21 auf den Zielreflektor 81 kann automatisch erfolgen, z.B. indem die Laserstrahlrichtung solange verändert wird, bis keine Abweichungen der Richtungswinkel mehr vorliegen oder diese innerhalb spezifizierter Grenzen liegen.

Die Lasertracker 10,11 weisen neben der Zielsucheinheit zum Auffinden des Ziels 81 einen Feinanzieldetektor auf, der zur Feinanzielung und Verfolgung eines aufgefundenen Ziels 81 dient. Deshalb kann erfindungsgemäss eine Ausrichtung der Strahllenkeinheit 20 anhand des Suchergebnisses, insbesondere einer dadurch ermittelten Zielrichtung, auf den Zielreflektor 81 auch solange erfolgen, bis vom Ziel 81 reflektierte Messstrahlung 17,21 auf den Feinanzieldetektor trifft, wodurch der Laserstrahl 17,21 an das Ziel 81 angekoppelt ist ("lock-on") und dadurch die Ausrichtung des Laserstrahls 17,21 basierend auf dem Zielauffinden beendet wird. Eine anschliessende Feinausrichtung des Messstrahls 17,21, insbesondere auf das Zentrum des Zielreflektors 81, und Verfolgung eines bewegten Ziels 81 wird dann anhand der Informationen des Feinanzieldetektors gesteuert. Geht danach die Kopplung verloren, bspw. durch ein Sichthindernis, welches sich in die Sichtlinie zwischen Lasertracker 10,11 und Messhilfsinstrument 80 bewegt, erfolgt ein erneutes Auffinden des Ziels 81 mit der Zielsucheinheit, insbesondere sobald eine Sichtverbindung wieder gegeben ist.

Die Beleuchtungsmittel 25 und die Kameras 24 können in diesem Zusammenhang z.B. an der Bilderfassungseinheit 15, der Strahllenkeinheit 20a, der Stütze 30 oder dem Sockel 40 in jeweils definierten Positionen angeordnet sein.

Ausserdem kann eine erfindungsgemässe Ausrichtung der Strahllenkeinheit 20a bzw. Anzieleinheit 20 auch bei Lasertrackern ohne Bilderfassungseinheit 15 zur Orientierungsbestimmung (6-DoF Kamera) eines Messhilfsinstruments 80 Anwendung finden (3D-Lasertracker).

Die Figuren 2a-c zeigen Ausführungsformen eines erfindungsgemässen Lasertrackers, besonders hinsichtlich seines optischen Aufbaus. Allen Ausführungsformen ist gemeinsam, dass eine optische Einheit 50 des Lasertrackers eine Laserstrahlquelle 51 - beispielsweise eine HeNe-Laserquelle oder eine Laserdiode - und einen Kollimator 53 zur Einkopplung der mit der Strahlquelle 51 erzeugten Laserstrahlung in den Messstrahlengang aufweist. Die Strahlung wird im gezeigten Aufbau mittels einer optischen Faser 52 von der Laserstrahlquelle 51 zum Kollimator 53 geführt, kann aber alternativ auch direkt oder durch optische Umlenkmittel in den Messstrahlengang eingekoppelt werden. Durch eine Optik 23 wird der Messlaserstrahl in den Aussenraum geführt. Die optische Einheit 50 verfügt zudem über eine Interferometereinheit 54 mittels deren Entfernungsänderungen zum Ziel 65 detektiert und gemessen werden können. Die mit der Strahlquelle 51 erzeugte Strahlung wird als Messstrahlung für das Interferometer 54 benutzt, im Interferometer 54 in einen Referenzpfad und Messpfad aufgespaltet und nach Reflexion des Messstrahls am Ziel 65 zusammen mit dem Referenzstrahl an einem Detektor detektiert. Ausserdem ist eine Absolutdistanzmesseinheit 55 mit einer weiteren Strahlquelle und einem weiteren Detektor vorgesehen. Diese Einheit 55 dient zur Distanzbestimmung zum Ziel 65, wobei die damit erzeugte Strahlung vermittels eines Strahlteilers 56 zusammen mit der Interferometerstrahlung auf einen gemeinsamen Messstrahlengang geführt wird. Die Anordnung der optischen Bauteile und die Führung der Messstrahlung in der optischen Einheit 50 definierten eine Messrichtung bzw. eine Messachse 57. Für eine präzise Bestimmung einer Entfernung zum Ziel können Messwerte von sowohl Absolutdistanzmesser 55 und Interferometer 54 berücksichtigt und insbesondere verknüpft werden. In einer speziellen Ausführungsform eines Lasertrackers können Absolutdistanzmesser 55 und Interferometer 54 unterschiedliche Messstrahlengänge definieren und/oder baulich separiert, insbesondere in unterschiedlichen Messgruppen, angeordnet sein. Die optische Einheit 50 weist ferner in allen Ausführungsformen als Teil einer Zielsucheinheit eine Kamera 24 mit einer optischen Achse bzw. Erfassungsrichtung 26 und einem positionssensitiven Detektor auf, welche ein Sichtfeld definiert. Zudem sind bei der Kamera 24 Beleuchtungsmittel 25a, 25b angeordnet, mit denen elektromagnetische Strahlung 28a, 28b zur Beleuchtung des Ziels 65 emittiert werden kann. Bei Ausführung der Suchfunktionalität wird vom Ziel 65 reflektierte Beleuchtungsstrahlung in einem Bild der Kamera 24, bspw. als als wenigstens ein Lichtfleck, erfasst. Eine daraus gewonnen Bildinformation, insbesondere eine Position im Bild eines oder mehrerer Lichtflecke, wird zum Auffinden des Ziels 65 herangezogen. Eine solche Heranziehung ist möglich, da die Lage im Bild der erfassten Strahlung abhängig ist von der Position des Ziels 65. Zudem ist in der optischen Einheit 50 ein Feinanzieldetektor 58 (PSD) derart angeordnet, dass am Ziel 65 reflektierte Messlaserstrahlung auf diesem detektiert werden kann. Mittels dieser PSD 58 kann eine Ablage des erfassten Strahls aus einem Detektornullpunkt bestimmt und auf Basis der Ablage ein Nachführen des Laserstahls auf das Ziel 65 erfolgen. Zu diesem Zweck und zum Erreichen einer hohen Genauigkeit ist das Sichtfeld dieses Feinanzieldetektors 58 möglichst klein, d.h. korrespondierend zum Strahldurchmesser des Messlaserstrahls, gewählt. Eine Erfassung mit der PSD 58 erfolgt koaxial zur Messachse 57, sodass die Erfassungsrichtung des Feinanzieldetektors 58 der Messrichtung entspricht. Die Anwendung des PSD-basierten Trackings und der Feinanzielung kann erst erfolgen, nachdem der Messlaser anhand des Auffindens des Ziels 65 auf dieses ausgerichtet worden ist.

Der Zusammenhang zwischen einer von einem Beleuchtungsmittel erzeugten Bildposition eines Lichtflecks und Position des Ziels 65 ist nicht eineindeutig. Insbesondere ist hieraus nur eine Zielrichtung 29 bestimmbar. Es liegt also eine vieldeutige Zielpositionsinformation vor. Aufgrund des Versatzes zwischen der optischen Achse 26 und der Messachse 57 ist somit ein Ausrichten des Laserstrahls auf das Ziel 65 in einem Schritt nicht möglich, da dies nur bei einer eindeutigen bestimmten Grobposition des Ziels 65 durchführbar ist.

Die erfindungsgemässe Ausführungsform des Lasertrackers nach Fig.2a löst diese Vieldeutigkeit auf, indem aus im Bild der Kamera 24 erfasster Beleuchtungsstrahlung 28a und/oder Beleuchtungsstrahlung 28b wenigstens eine Bildposition ermittelt wird, woraus eine Zielpositionsinformation ableitbar ist und zudem eine Parallaxenkorrigierinformation ermittelt wird, welche abhängig ist von einer Distanz der durch beide Beleuchtungsstrahlungen erzeugte Lichtflecke, wodurch die Separation der beiden Lichtflecke Berücksichtigung findet. Das Ausmass der Separation, also wie sehr die Lichtflecke, welche erzeugt sind von den Beleuchtungsmitteln 25a und 25b, im Bild voneinander getrennt sind, ist bei fixer Basislänge B abhängig von der Entfernung des Ziels 65 zur Kamera 24 bzw. zum Lasertracker, welche massgeblich ist für das Ausmass der Parallaxe, weshalb folglich aus dem Ausmass der Separation eine Information zur Korrektur der Parallaxe bestimmbar ist. Unter Berücksichtigung der Ausrichtung und Positionierung des Detektors kann somit aus der wenigstens einen Bildposition und der Parallaxenkorrigierinformation prinzipiell eine Grobposition des Ziels bestimmt werden, bspw. mittels einer mathematisch-geometrischen Dreieckskonstruktion. Somit ist ein eindeutiges Auffinden des Ziels 65 derart möglich, dass trotz der Parallaxe zwischen optischen Achse 26 und der Messachse 57 die Messstrahlung auf das Ziel 65 in einem Schritt ausrichtbar ist. Insbesondere kann aus den gegebenen und durch die Zielsucheinheit ermittelten Daten eine Grobentfernung zum Ziel 65 berechnet oder anhand einer hinterlegten Parallaxenkorrigierinformationszuordnung bestimmt werden, welche zusammen mit einer aus einer oder beiden Lichtfleckpositionen bestimmten Zielrichtung 29 zur Bestimmung der Grobposition des Ziels 65 und/oder zur Bestimmung einer Richtung 27 vom Lasertracker zum Ziel 65 benutzt wird. Als Aufhängepunkt der Richtung 27 zum Ziel 65 wird bspw. der Austrittspunkt der Messachse aus der optischen Einheit 50 verwendet, dessen Position relativ zur optischen Achse 26 der Kamera 24 oder Detektorposition bekannt ist. Aus Kenntnis der Richtung 27 zum Ziel 65 und der Ausrichtung der Messachse 57 wird eine Abweichung α der jeweiligen Richtungswinkel berechnet (in Figur 2a ist beispielhaft eine Abweichung α für einen Richtungswinkel eingezeichnet), welche als Mass zur Ausrichtung der Strahllenkeinheit auf das Ziel 65 dient.

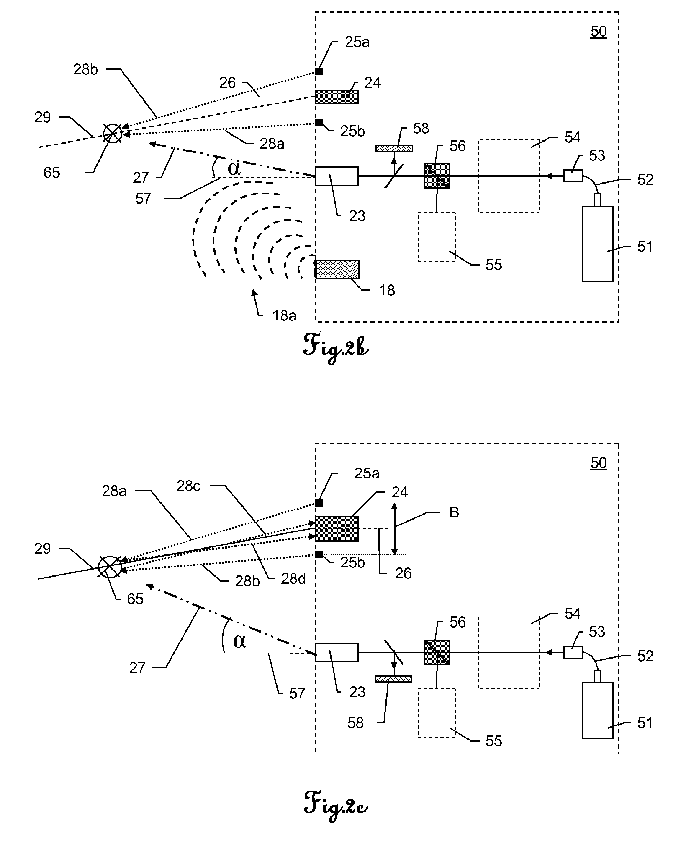

Die erfindungsgemässe Ausführungsform des Lasertrackers nach Fig.2b löst die vorgenannte Vieldeutigkeit der Zielpositionsinformation auf, indem die Zielsucheinheit zusätzlich zur Kamera 24 ein omnidirektionales Zieldistanzbestimmungsmittel 18 aufweist, mit dem eine Grobdistanz zum Ziel 65 bestimmt wird, ausgebildet bspw. als Funkdistanzmesser. Aus der erfassten Beleuchtungsstrahlung 28a und 28b der Beleuchtungsmittel 25a und 25b wird eine Position auf dem Detektor der Kamera 24 bestimmt, bspw. indem eine mittlere Position auf dem Detektor aus beiden durch jeweils das Licht 28a und 28b erzeugten Lichtflecken ermittelt wird, also aus beiden Lichtflecken eine einzige, gemeinsame Positionsinformation gebildet wird. Diese Bildposition als Zielpositionsinformation, welche für sich kein eindeutiges Auffinden des Ziels erlaubt, wird nun erfindungsgemäss durch eine mittels des omnidirektionalen Distanzbestimmungsmittels 18 erhaltenen Grobdistanz zum Ziel 65 ergänzt, wodurch prinzipiell eine Grobposition des Ziels 65 bestimmbar ist. Ein Auffinden des Ziels erfolgt erfindungsgemäss in Abhängigkeit der Bildposition unter Heranziehung der Grobdistanz, so dass trotz der Parallaxe zwischen optischen Achse 26 und der Messachse 57 die Messstrahlung auf das Ziel in einem Schritt ausrichtbar ist. Zur Bestimmung der Grobdistanz wird vom Distanzbestimmungsmittel 18 ein Messsignal 18a emittiert, welches zumindest teilweise vom Ziel 65 zurückgeworfen oder -gesendet, von einer Empfangseinheit des Distanzbestimmungsmittels 18 erfasst und hinsichtlich einer distanzabhängigen Laufzeit, Phaseninformation und/oder Stärke ausgewertet wird, wodurch auf eine Distanz zum Ziel 65 geschlossen wird. Somit ist ein eindeutiges Auffinden des Ziels derart möglich, dass trotz der Parallaxe zwischen optischen Achse 26 und der Messachse 57 die Messstrahlung auf das Ziel 65 in einem Schritt ausrichtbar ist. Insbesondere kann aus den gegebenen und durch die Zielsucheinheit ermittelten Daten eine Grobentfernung zum Ziel 65 berechnet werden, welche zusammen mit einer aus einer oder beiden Lichtfleckpositionen bestimmten Zielrichtung zur Bestimmung der Grobposition des Ziels 65 und/oder zur Bestimmung einer Richtung vom Lasertracker zum Ziel 65 benutzt wird, bspw. mittels einer geometrischen Konstruktion oder trigonometrischen Berechnung. Als Aufhängepunkt der Richtung 27 zum Ziel 65 wird bspw. der Austrittspunkt der Messachse 57 aus der optischen Einheit 50 verwendet, dessen Position relativ zur optischen Achse 26 der Kamera 24 oder Detektorposition bekannt ist. Aus Kenntnis der Richtung 27 zum Ziel 65 und der Ausrichtung der Messachse 57 wird eine Abweichung (in Figur 2b ist beispielhaft eine Abweichung α für einen Richtungswinkel eingezeichnet) der jeweiligen Richtungswinkel berechnet, welche als Mass zur Ausrichtung der Strahllenkeinheit auf das Ziel 65 dient.

Die erfindungsgemässe Ausführungsform des Lasertrackers nach Fig.2c löst die vorgenannte Vieldeutigkeit der Zielpositionsinformation auf, indem ein Auffinden des Ziels 65 basierend auf aktiver optischer Triangulation unter Verwendung einer fixen Basislänge B erfolgt, welche definiert ist durch den Abstand der beiden Beleuchtungsmittel 25a und 25b. Alternativ dazu erfolgt in anderen erfindungsgemässen Ausführungsformen ein Zielauffinden basierend auf aktiver optischer Triangulation, bei der eine Basislänge verwendet wird, welche entweder durch den Abstand von optischer Markierungen am Ziel 65 oder durch den Abstand eines, insbesondere dritten, Beleuchtungsmittels zum Projektionszentrum einer am Lasertracker angeordneten Kamera festgelegt ist. Eine weitere Grösse, die zur Triangulation benutzt wird, ist in der Ausführungsform nach Figur 2c der Abstand des ersten und des zweiten Lichtflecks zueinander, welche durch am Ziel 65 reflektierte Beleuchtungsstrahlung 28c (vom ersten Beleuchtungsmittel 25a stammend) und am Ziel 65 reflektierte Beleuchtungsstrahlung 28d (vom zweiten Beleuchtungsmittel 25b stammend) auf dem positionssensitiven Detektor der Kamera 24 erzeugt sind. Da die Grösse dieses Lichtfleckabstands von der Entfernung des Ziels 65 abhängig ist, kann durch Triangulation prinzipiell eine Entfernungsinformation ermittelt werden, insbesondere unter Berücksichtigung der Positionierung des positionssensitiven Detektors, wodurch die Vieldeutigkeit der Zielpositionsinformation aufgelöst werden und ein eindeutiges Auffinden des Ziels 65 trotz der durch die Messachse 57 und der optischen Achse 26 gegebenen Parallaxe erfolgen kann. Somit ist ein eindeutiges Auffinden des Ziels 65 derart möglich, dass die Messstrahlung auf das Ziel 65 in einem Schritt ausrichtbar ist. Insbesondere kann aus den gegebenen und durch die Zielsucheinheit ermittelten Daten eine Grobentfernung zum Ziel 65 berechnet werden, welche zusammen mit einer aus einer oder beiden Lichtfleckpositionen bestimmten Zielrichtung, ggf. unter Berücksichtigung der Anordnung der Kamera 24, zur Bestimmung der Grobposition des Ziels 65 und/oder zur Bestimmung einer Richtung vom Lasertracker zum Ziel 65 benutzt wird. Als Aufhängepunkt der Richtung 27 zum Ziel 65 wird bspw. der Austrittspunkt der Messachse 57 aus der optischen Einheit 50 verwendet, dessen Position relativ zur optischen Achse 26 der Kamera 24 oder Detektorposition bekannt ist. Aus Kenntnis der Richtung 27 zum Ziel 65 und der Ausrichtung der Messachse 57 wird eine Abweichung (in Figur 2c ist beispielhaft eine Abweichung α für einen Richtungswinkel eingezeichnet) der jeweiligen Richtungswinkel berechnet, welche als Mass zur Ausrichtung der Strahllenkeinheit auf das Ziel 65 dient.

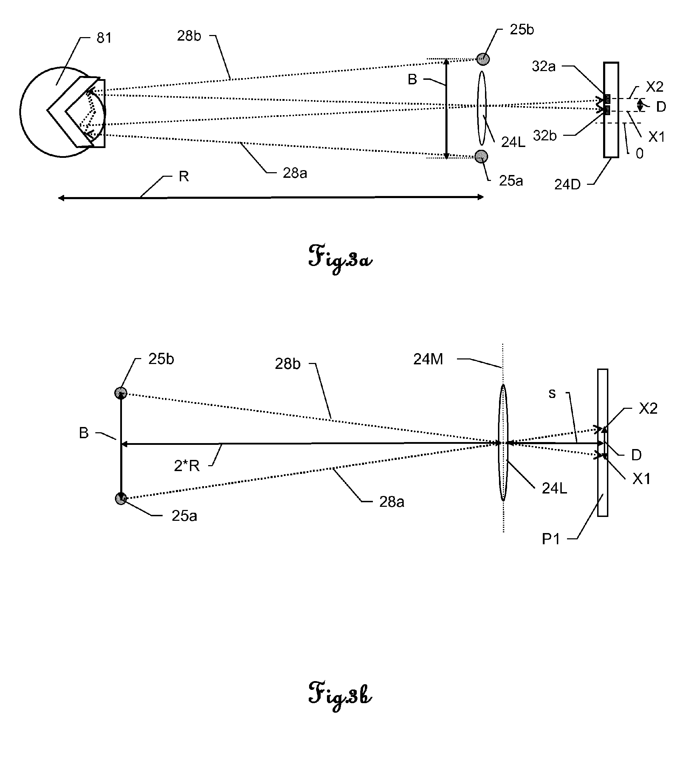

Die Figuren 3a - 3f illustrieren Beispiele für Vorgehensweisen zur Zielauffindung mit erfindungsgemässen Lasertrackerausführungsformen. Es versteht sich dabei, dass die in den Figuren gezeigten Längen und Grössen nur beispielhaften Charakter haben und nicht massstäblich zu verstehen sind.

Figur 3a und 3b illustrieren den Strahlengang der Beleuchtung eines retroreflektierenden Ziels 81 mit einer erfindungsgemässen Ausführungsform der Zielsucheinheit mit zwei Beleuchtungsmitteln 25a und 25b, deren Abstand eine Basislänge B definiert und bei dem ein Auffinden des Ziels 81 durch eine Bestimmung wenigstens einer Bildposition aus mittels des Detektors 24D erfasster Beleuchtungsstrahlung 28a und 28b und einer Parallaxenkorrigierinformation und ein Beispiel für eine darauf basierende geometrische Zielgrobpositionsbestimmung.

In Figur 3a wird das Ziel, der Retroreflektor 81 von Licht 28a des Beleuchtungsmittels 25a, bspw. eine IR-LED, beleuchtet. Die vom Retroreflektor 81 zurückgestrahlte Beleuchtungsstrahlung wird durch die Kameraoptik 24L auf den positionssensitiven Detektor 24D abgebildet, wodurch auf dem Detektor ein erster Lichtfleck 32a erzeugt wird. Entsprechend wird durch Beleuchtungsstrahlung 28b des Beleuchtungsmittels 25b ein Lichtfleck 32b erzeugt und beide Lichtflecke 32a und 32b in einem Bildvon der Kamera erfasst. Aus einer oder beiden Positionen der Lichtflecke 32a und 32b wird wenigstens eine Bildposition X1 bzw. X2 bestimmt, hinsichtlich eines zuvor definierten Nullpunkts 0 des Detektors bzw. im Bild. Beispielhaft ist dies in Figur 3a bezogen auf eine Dimension dargestellt. Eine Bildposition kann erfindungsgemäss auch aus einer gemeinschaftlichen Betrachtung der beiden Lichtflecke 32a und 32b erstellt werden. Bei der Bestimmung der Parallaxenkorrigierinformation wird jedenfalls eine Separation der beiden Lichtfleckpositionen berücksichtigt, welche abhängig ist von deren Distanz zueinander. Dies kann bspw. dadurch erfolgen, dass die Distanz selbst als Parallaxenkorrigierinformation herangezogen wird, welche z.B. anhand der beiden Bildpositionen X1 und X2 berechnet werden kann. Diese beiden Zielpositionsinformationen (wenigstens eine Bildposition und die Parallaxenkorrigierinformation) dienen erfindungsgemäss z.B. zur Bestimmung einer Grobentfernung R zum Ziel, die im Beispiel bezogen ist auf die Entfernung zwischen dem Zentrum des Retroreflektors 81 und der gemeinsamen Nullachse der Beleuchtungsmittel 25a und 25b und dem Zentrum der Kameraoptik 24L.

Das Auffinden des Retroreflektorziels 81 durch eine Bestimmung von dessen Grobposition ist für die erfindungsgemässe Ausführungsform nach Figur 3a beispielhaft in Figur 3b dargestellt. Die Beleuchtungsmittel 25a und 25b werden durch die Kameraoptik 24L in einer Position X1 bzw. X2 im Bild P1 abgebildet, welches mittels des positionssensitiven Detektors 24D im bekannten Abstand s zur Mittelebene 24M der Kameraoptik 24L aufgenommen ist, wodurch eine Positionierung des Bilds festlegt ist. Da der Retroreflektor 81 aus Figur 3a, welcher zum Zentrum der Kameraoptik 24L den Abstand R in der z-Richtung des kartesischen Koordinatensystems hat, das Licht 28a bzw. 28b retroreflektiert, entspricht dies einer Abbildung der Basislänge B auf die Distanzlänge D zwischen den beiden Lichtfleck- bzw. Bildpositionen, bei der die beiden Beleuchtungsmittel 25a und 25b den doppelten Abstand 2*R in z-Richtung zum Zentrum der Kameraoptik 24L haben. Dieser Abstand 2*R wird erfindungsgemäss nach grundlegenden geometrischen Verfahren (z.B. Strahlensatz, Trigonometrie) bspw. mit Methoden der Triangulation unter Verwendung der Distanzlänge D, der Basislänge B und des Abstands s bestimmt. Zusammen mit einer aus einer oder beiden Bildpositionen X1, X2 bestimmten Zielrichtung wird damit eine eindeutige Grobposition des Ziels bestimmt. Erfindungsgemäss kann alternativ anhand bekannter Zielpositionen, bspw. durch Kalibrierung, eine Look-Up-Tabelle erstellt und im Lasertracker hinterlegt werden, in der Bildpositionen X1 und/oder X2 und Parallaxenkorrigier-informationen (welche auch nur implizit anhand der Bildpositionen X1 und X2 enthalten sein kann) den zugrunde liegenden Ziel(grob)positionen zugeordnet sind und bei Ausführung der Suchfunktionalität, statt eine Grobposition anhand der Bestimmungsgrössen zu berechnen, diese anhand der Bestimmungsgrössen in der referenzierten Look-Up-Tabelle nachgeschlagen werden.

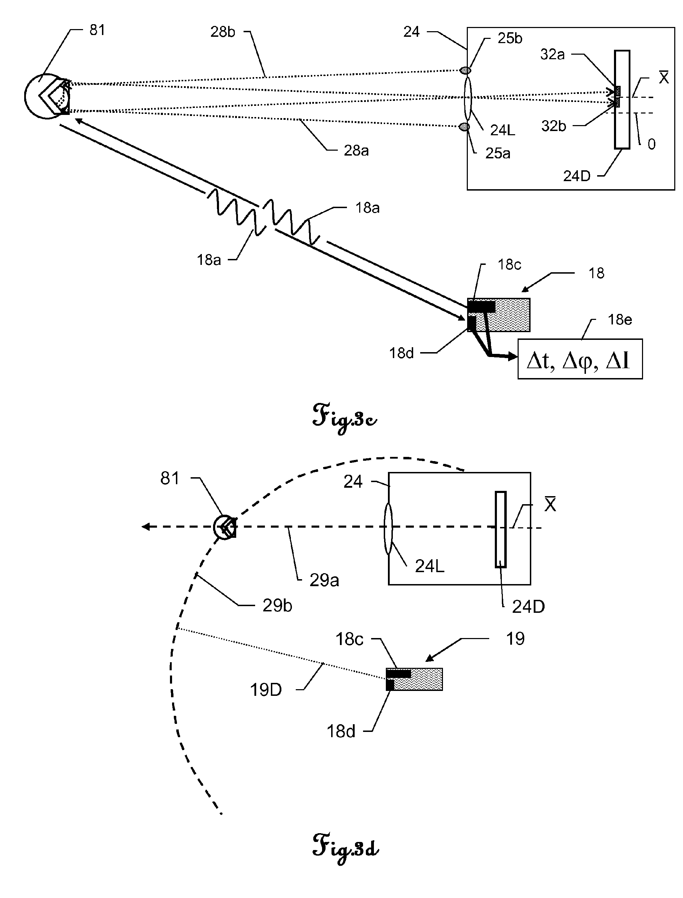

Die Figuren 3c und 3d illustrieren den Strahlengang der Beleuchtung eines retroreflektierenden Ziels 81 mit einer erfindungsgemässen Ausführungsform der Zielsucheinheit mit Beleuchtungsmittel, z.B. ausgeprägt als LEDs 25a und 25b, und Kamera 24 mit Kameraoptik 24L, auf deren Detektor 24D aus der erfassten Beleuchtungsstrahlung 28a und 28b der LEDs 25a und 25b eine Zielpositionsinformation bestimmt wird und einem omnidirektionalen Zieldistanzbestimmungsmittel 18 zum Bestimmen einer Grobdistanz 19D zum Ziel und ein Beispiel für eine darauf basierende geometrische Zielpositionsbestimmung.

In Figur 3c wird das Ziel, der Retroreflektor 81 von Licht 28a des Beleuchtungsmittels 25a, bspw. eine IR-LED, beleuchtet. Die vom Retroreflektor 81 zurückgestrahlte Beleuchtungsstrahlung wird durch die Kameraoptik 24L auf den positionssensitiven Detektor 24D abgebildet, wodurch auf dem Detektor ein Lichtfleck 32a erzeugt wird. Entsprechend wird Beleuchtungsstrahlung 28b des Beleuchtungsmittels 25b als Lichtfleck 32b von der Kamera erfasst. Aus beiden wird in einer Zusammenschau eine mittlere Bildposition *X̅*, bezogen auf einen Nullpunkt 0 des Detektors, bestimmt. Alternativ kann auch nur eine durch eine der beiden Beleuchtungsstrahlungen erzeugte Bildposition Verwendung finden. Da die Lage der mittleren Position *X̅* von der Position des Ziels 81 abhängig ist, kann daraus eine Zielpositionsinformation abgeleitet werden, die allerdings uneindeutig ist. Zum Auflösen der Mehrdeutigkeiten wird durch eine Signalsendeeinheit 18c des am Lasertracker in bekannter relativer Positionierung zur Kamera 24 angeordneten Zieldistanzbestimmungsmittel 18 zum Zwecke einer Distanzermittlung ein Messsignal 18a emittiert, z.B. modulierte Strahlung, welches zumindest teilweise vom Retroreflektor 81 in Richtung des Laserdistanzmessers 18 zurückgeworfen wird und von einer Signalempfangseinheit 18d erfasst wird, wobei ein moduliertes Signal bspw. durch integrierende Intensitätsmessungen demoduliert wird. Ein Zurückwerfen des Messsignals durch den Reflektor 81 kann dabei durch den die eigentlichen retroreflektierenden Teile erfolgen, jedoch bspw. je nach Ausprägung des omnidirektionalen Zieldistanzbestimmungsmittel 18, dessen Ausrichtung zum Lasertracker und/oder Beschaffenheit des Signals 18a auch durch andere Bestandteile des Ziels 81 wie z.B. dessen Gehäuse. Sowohl beim Emittieren als auch beim Empfangen wird jeweils wenigstens eine kennzeichnende Signalmessgrösse festgehalten und anschliessend der diesbezügliche Unterschied 18e zwischen auslaufendem und einlaufendem Signal bestimmt. Die Grösse eines solchen Unterschieds ist erfindungsgemäss abhängig von der Distanz zum Ziel 81, weswegen erfindungsgemäss die Signalmessgrösse die Zeit (Δt, Signallaufzeit), die Signalphase (Δϕ, Phasendifferenz) und/oder die Signalstärke (ΔI, Signalintensität) ist. Es eignen sich allerdings auch andere Messsignaleigenschaften, die sich mit einer Entfernung verändern.

Das Auffinden des Retroreflektorziels 81 durch eine Bestimmung von dessen Grobposition ist für die erfindungsgemässe Ausführungsform nach Figur 3c beispielhaft in Figur 3d dargestellt. Aus der mittleren Bildposition *X̅* ist, unter Berücksichtigung von Parametern der Kamera 24 wie Ausrichtung und Positionierung der optischen Achse und des Detektors 24D eine Zielrichtung 29a ableitbar. Erfindungsgemäss wird eine solche Zielpositionsinformation zum Auffinden des Ziels 81 verwendet. Da eine Zielrichtung 29a aufgrund der Parallaxe zwischen optischer Achse und Messachse allein nicht ausreichend ist, um den Messstrahl direkt auf das Ziel 81 auszurichten, wird als zweite Information eine Grobdistanz 19D zum Ziel 81 verwendet. Zur Distanzermittlung wird in diesem Beispiel ein Distanzmesser 19 verwendet, mit welchem Distanzen zu einzelnen Objekten oder Punkten bestimmt werden. Ausgeprägt kann ein solcher erfindungsgemäss sein bspw. als Laserdistanzmesser, der eine Grobdistanz mittels Senden eine Laserpulses durch die Signalsendeeinheit 18c und Empfangen des vom Ziel reflektierten Laserpulses durch die Empfangseinheit 18d ermittelt. Dieser weist dazu insbesondere einen weit grösseren Laserstrahlöffnungswinkel auf als derjenige der Messstrahlung, damit das Ziel vom Licht des Distanzmessers 19 getroffen wird. Die Grobdistanz 19D wird erfindungsgemäss aus dem Signalmessgrössenunterschied berechnet. Dazu eignen sich bei Verwendung der Signallaufzeit bspw. ein direktes Laufzeitmessverfahren, bei Verwendung der Signalphase ein indirektes Laufzeitmessverfahren, und bei Verwendung der Signalstärke eine Auswertung anhand von RSSI-Werten, welchen, insbesondere nach erfolgter Kalibrierung, Distanzen, z.B. anhand einer per Ausgleichsrechnung ermittelten Funktion, zugeordnet sind. Mit der Grobdistanz 19D liegt eine zweite Zielpositionsinformation vor. Geometrisch betrachtet ist damit die Zielposition auf eine Linie 29b eines Kreises um den Lasertracker mit dem Radius 19D festgelegt, wobei sich Kreismittelpunkt und Distanz 19D bspw. wie in Figur 3d dargestellt auf einen Nullpunkt des Distanzmessgeräts 18 beziehen können. Die Grobposition des Reflektors 81 ergibt sich damit erfindungsgemäss mittels geometrischer Konstruktion, unter Einbeziehung eines bekannten Abstands von Distanzmesser 19 zur Kamera 24, als Schnitt einer Geraden, welche die Zielrichtung 29a darstellt, mit der Kreislinie 29b. Erfindungsgemäss kann alternativ anhand bekannter Zielpositionen eine Look-Up-Tabelle erstellt und im Lasertracker hinterlegt werden, in der mittlere Bildpositionen *X̅* und Grobdistanzwerte 19D den zugrunde liegenden Ziel(grob)positionen zugeordnet sind und bei Ausführung der Suchfunktionalität, statt eine Grobposition aus der Zielrichtung 29a und Grobdistanz 19D zu berechnen, diese anhand der Werte von *X̅* und R in der referenzierten Look-Up-Tabelle nachgeschlagen werden.

Zum Zweck der Vereinfachung, Steigerung der Genauigkeit oder der Beschleunigung der kann erfindungsgemäss vor Ermittlung der Grobdistanz 19D eine Zielrichtung 29a bestimmt werden und diese zur Distanzbestimmung dahingehend Berücksichtigung finden, indem eine Richtung, in die das Messsignal 18a emittiert wird, anhand der Zielrichtung 29a ausgewählt wird. Dadurch kann der Bereich näher spezifiziert werden, in dem sich das Ziel 81 befindet, wodurch bspw. ein Zieldistanzbestimmungsmittels 18 mit kleinerem Sichtfeld d.h. weniger divergentem Messsignal verwendbar ist, welches dadurch z.B. platzsparender ausfallen oder eine höhere Messgenauigkeit aufweisen kann. Ist das Zieldistanzbestimmungsmittel 18 derart ausgeprägt, dass innerhalb eines grossen Sichtfelds eine Vielzahl von Distanzrohdaten erstellt wird, z.B. als ein 3D-Bilderstellungsmittel, kann durch eine Anwendung der Zielrichtung 29a die Auswahl auszuwertender Rohdaten eingeschränkt werden, wodurch sich bspw. kürzere Auswertezeiten ergeben.

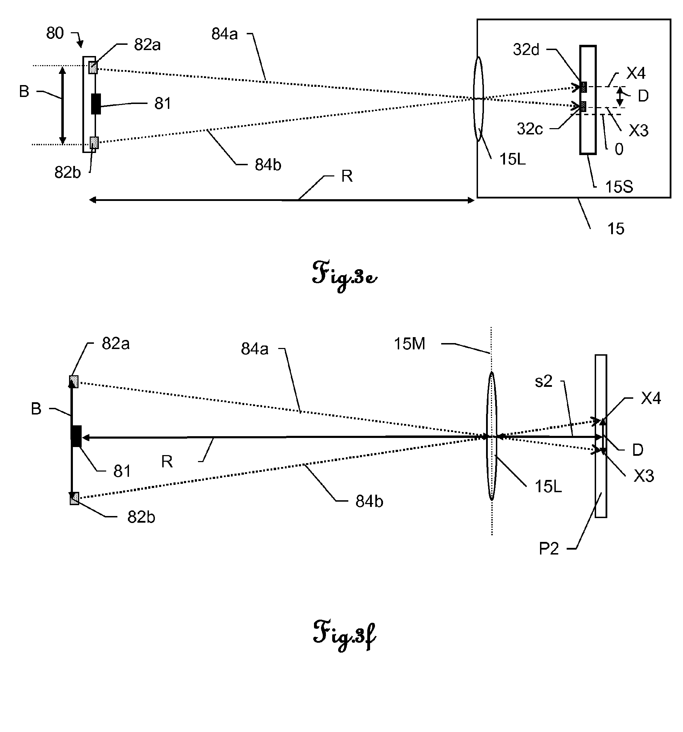

Die Figuren 3e und 3f illustrieren den Strahlengang für eine Zielsucheinheit eines einer Ausführungsform eines erfindungsgemässen Lasertrackers, bei der aktive optische Triangulation zum Auffinden des Ziels 80 verwendet wird und ein Beispiel für eine darauf basierende geometrische Zielpositionsbestimmung. Im Beispiel ist die Basis B durch den Abstand von zwei optischen Markierungen 82a und 82b am Ziel 80 definiert.

In Figur 3e ist das Messhilfsinstrument 80, das sich im unbekannten Abstand R zum Lasertracker befindet, in einer Aufsicht schematisch dargestellt, das Träger des Ziels 81 und zweier optischer Markierungen 82a und 82b in bekannter Anordnung relativ zum Ziel 81 ist, durch deren gegenseitigem Abstand eine Basislänge B festgelegt ist. Diese sind ausgeprägt als LEDs, welche, insbesondere von der Beleuchtungsstrahlung 28a und 28b bspw. durch eine andere Wellenlänge unterscheidbare, Strahlung 84a bzw. 84b emittieren. Alternativ dazu können die optischen Markierungen als Retroreflektoren ausgebildet sein, die vom Lasertracker ausgehendes Licht zu diesem zurückwerfen. Die Strahlung 84a und 84b wird von einer Bilderfassungseinheit 15 des Lasertrackers erfasst und durch eine Optik 15L der Bilderfassungseinheit 15 auf einen positionssensitiven Sensor 15S abgebildet. Dadurch werden, neben dem ersten und zweiten durch die Beleuchtungsstrahlung 28a und 28b der beiden Beleuchtungsmittel 25a und 25b (siehe Figur 2c) entstandenen Lichtflecke, ein dritter Lichtfleck 32c und ein vierter Lichtfleck 32d erzeugt, deren Position in einem Bild als Bildpositionen X3 bzw. X4, bezogen auf einen Bildnullpunkt 0, bestimmt werden. Alternativ kann erfindungsgemäss auch nur eine Bildposition X3 oder X4 oder eine gemeinesame mittlere Bildposition aus beiden Lichtflecken bestimmt werden. Ausserdem wird eine Distanzinformation hinsichtlich des Abstands der beiden Lichtflecke ermittelt, im Beispiel die Distanz D, die sich aus den beiden Bildpositionen X3 und X4 ergibt.

Das Auffinden des Ziels 81 durch eine Bestimmung von dessen Grobposition ist für die erfindungsgemässe Ausführungsform nach Figur 3e beispielhaft in Figur 3f dargestellt. Die optischen Markierungen 82a und 82b werden durch die Optik 15L der Bilderfassungseinheit in einer Position X3 bzw. X4 im Bild P2 erfasst, im bekannten Abstand s1 zur Mittelebene 15M der Optik 15L. Dies entspricht einer Abbildung der Basislänge B auf die Distanz D zwischen den beiden Bildpositionen, wobei die beiden LEDs 82a und 82b (und das Ziel 81) den Abstand, entsprechend der zu bestimmenden Grobentfernung R zum Ziel, in z-Richtung zum Zentrum der Optik 15L haben. Dieser Abstand R wird erfindungsgemäss nach grundlegenden geometrischen Grundsätzen (z.B. Strahlensatz, Trigonometrie) bspw. mit Methoden der Triangulation unter Verwendung der Distanzlänge D, der Basislänge B und des Abstands s2 bestimmt. Zusammen mit einer bswp. anhand der Bildposition des ersten oder zweiten Lichtflecks oder einer aus einer Zusammenschau beider bestimmten Bildposition bestimmten Zielrichtung wird damit eine eindeutige Grobposition des Ziels 81 bestimmt. Erfindungsgemäss kann alternativ anhand bekannter Zielpositionen eine Look-Up-Tabelle erstellt und im Lasertracker hinterlegt werden, in der Bildpositionen den zugrunde liegenden Ziel(grob)positionen zugeordnet sind und bei Ausführung der Suchfunktionalität, statt eine Grobposition anhand der Bildpositionen X1 bis X4 über eine Grobentfernung und Zielrichtung zu berechnen, diese anhand der Positionen auf dem Kameradetektor und dem Sensor 15S in der referenzierten Look-Up-Tabelle nachgeschlagen werden.

Für eine aktive optische Triangulation mit einer Basislänge B, die durch den Abstand zweier Beleuchtungsmittel der Zielsucheinheit festgelegt ist, ergeben sich analoge Strahlengänge, wie sie in Figur 3b, hervorgehend aus Figur 3a, dargestellt sind, wodurch zur Triangulation anstatt der oben beschriebenen Grössen die Distanz D aus dem Abstand der ersten und zweiten Bildposition X1 und X2 der zwei Beleuchtungsmittel, der Abstand s des Kameradetektors bzw. Bilds und die benannte Basislänge verwendet werden. Ist die Basislänge B durch den Abstand eines Beleuchtungsmittels zum Projektionszentrum einer Kamera definiert, entspricht der Strahlung 84a die vom Beleuchtungsmittel zum Ziel emittierte Strahlung, der Strahlung 84b die vom Ziel reflektierte und der Kamera erfassten Strahlung. Die Triangulation erfolgt unter Verwendung der Basislänge B und der beiden Strahlrichtungen.

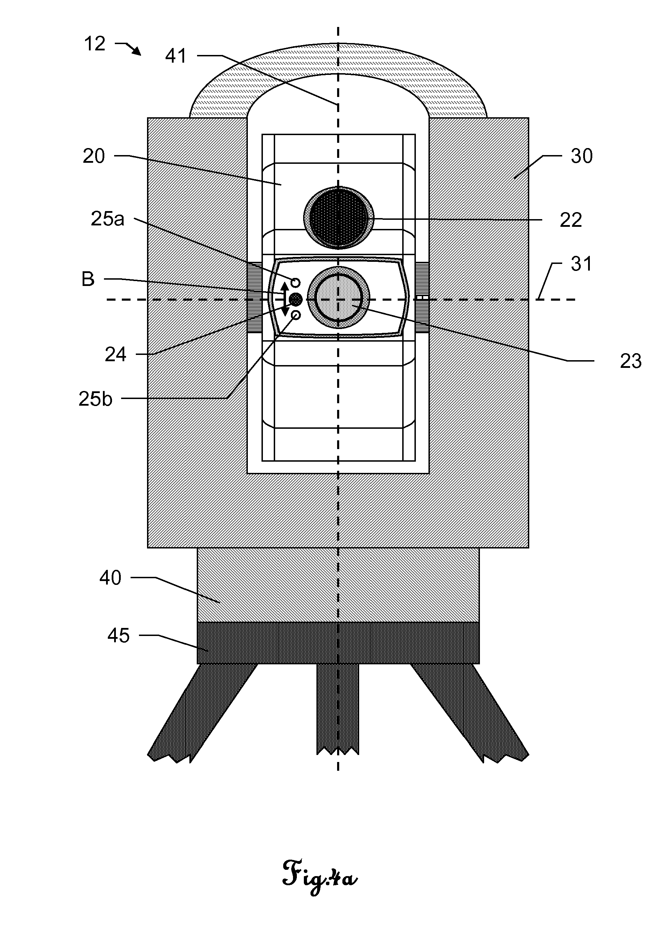

Die Figuren 4a-c zeigen weitere Ausführungsformen eines erfindungsgemässen Lasertrackers. Allen Ausführungsformen ist gemeinsam, dass sie einen Sockel 40, die auf einem Stativ 45 angeordnet ist und eine Schwenkachse 41 definiert, und eine, auf dem Sockel 40 angeordnete, eine Neigungsachse 31 definierende, um die Schwenkachse 41 relativ zum Sockel 40 motorisiert schwenkbare Stütze 30 mit einem Griff aufweisen. Weiters ist bei allen drei Ausführungen eine Anzieleinheit 20 vorgesehen, wobei diese Anzieleinheit 20 um die Neigungsachse 31 relativ zur Stütze 30 motorisiert schwenkbar verbaut ist und eine Teleskopeinheit aufweist zur präzisen Bestimmung einer Entfernung zu einem Ziel vermittels der Messstrahlung. Die Strahllenkeinheit 20 weist ferner eine Variokamera mit einem Variokameraobjektiv 22 und eine Optik 23 auf, die einer in der Strahllenkeinheit 20 angeordneten Entfernungsmess- und Trackingeinheit zugeordnet ist, wobei vermittels der Optik 23 ein Messlaserstrahl von der Entfernungsmessund Trackingeinheit zur präzisen Bestimmen einer Entfernung zu einem Ziel und zum Verfolgen des Ziels emittiert wird. Als Teil einer Zielsucheinheit weisen alle Ausführungsformen eine Kamera 24 mit einer Kameraoptik, welche eine optische Achse definiert, und einem positionssensitiven Detektor und zudem ein erstes Beleuchtungsmittel 25a und ein zweites Beleuchtungsmittel 25b, welche beispielsweise als LEDs ausgebildet sind und im Betrieb insbesondere Licht dynamisch variierbarer Intensität divergent im Infrarotbereich emittieren, auf. Die Kamera 24 ist zur Erfassung speziell des Lichts der Beleuchtungsmittel 25a und 25b ausgebildet, weswegen sie eine Filtereinheit aufweist, die im Wesentlichen ausschliesslich infrarotes Licht, insbesondere der Wellenlänge der Beleuchtungsstrahlung, auf den Detektor durchlässt. Die beiden Beleuchtungsmittel 25a und 25b sind symmetrisch um die optische Achse angeordnet.

Bei der Ausführungsform nach Fig. 4a ist durch den Abstand der beiden Beleuchtungsmittel 25a und 25b zueinander eine Basislänge B festgelegt. Mit diesen Beleuchtungsmitteln 25a und 25b kann ein Ziel, z.B. ein Reflektor, beleuchtet bzw. angestrahlt werden und zumindest ein Teil der Strahlung durch den Reflektor in Richtung des Lasertrackers 12 bzw. in Richtung der Kamera 24 zurückreflektiert werden. Das reflektierte Licht wird dann mit der Kamera 24 erfasst und vermittels der Kameraoptik auf den positionssensitiven Detektor als Lichtfleck abgebildet. Durch die Beleuchtungsstrahlung des Beleuchtungsmittels 25a wird ein erster Lichtfleck erzeugt, durch die des Beleuchtungsmittels 25b ein zweiter, deren Position in einem von der Kamera 24 erfassten Bild einzeln oder als gemeinsamer Wert bestimmt werden. Zudem wird eine Parallaxenkorrigierinformation anhand der Lichtflecke ermittelt, bspw. indem eine aufeinander bezogene Ausdehnung der Lichtflecke bzw. eine Ausdehnung deren gemeinsamen Strahlungsquerschnittsform bestimmt wird, wodurch eine von der Distanz der Lichtflecke abhängige Information vorliegt. Unter Berücksichtigung der Basislänge und der Ausrichtung und Positionierung des Detektors wird damiteine Grobposition des Ziels bestimmt, bspw. mittels einer mathematisch-geometrischen Dreieckskonstruktion. Somit ist ein eindeutiges Auffinden des Ziels derart möglich, dass trotz des Versatzes zwischen der Kamera 24 und der Optik 23 die Messstrahlung auf das Ziel in einem Schritt ausrichtbar ist. Insbesondere kann aus den gegebenen und durch die Zielsucheinheit ermittelten Daten eine Grobentfernung zum Ziel berechnet werden, welche zusammen mit einer aus einer oder beiden Lichtfleckpositionen bestimmten Zielrichtung zur Bestimmung der Grobposition des Ziels und/oder zur Bestimmung einer Richtung vom Lasertracker zum Ziel benutzt wird. Als Aufhängepunkt der Richtung zum Ziel wird bspw. der Schnittpunkt der beiden Achsen 31 und 41 verwendet, dessen Position relativ zur optischen Achse der Kamera oder Detektorposition bekannt ist.

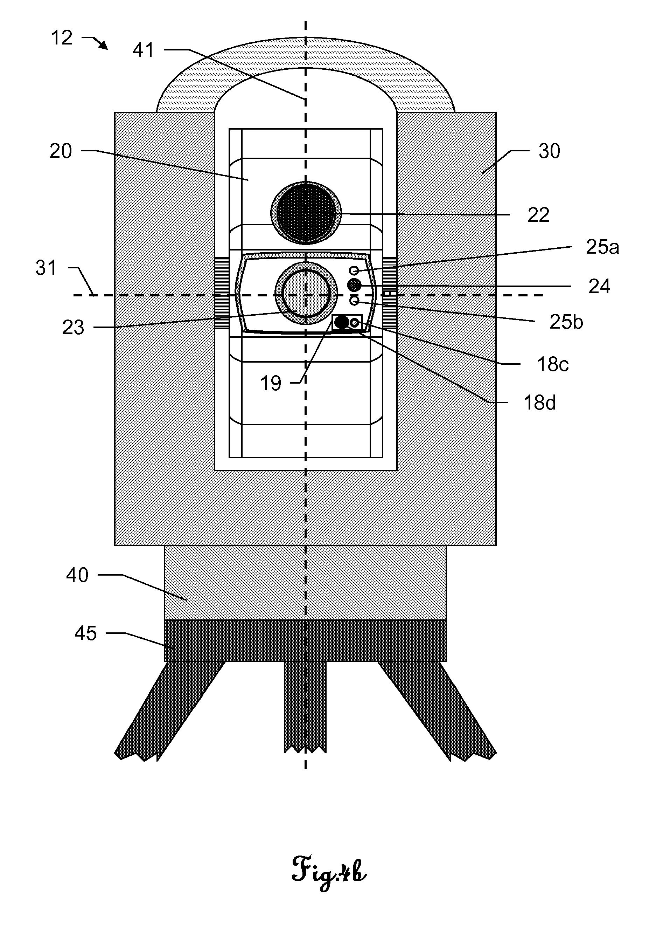

In der Ausführungsform nach Fig. 4b kann mit den Beleuchtungsmitteln 25a und 25b ein Ziel, z.B. ein Reflektor, beleuchtet bzw. angestrahlt werden und zumindest ein Teil der Strahlung durch den Reflektor in Richtung des Lasertrackers 12 bzw. in Richtung der Kamera 24 zurückreflektiert werden. Das reflektierte Licht wird dann mit der Kamera 24 erfasst und vermittels der Kameraoptik auf den positionssensitiven Detektor als Lichtfleck abgebildet. Aus der Position der erfassten Beleuchtungsstrahlung auf dem Detektor wird eine Zielpositionsinformation bestimmt, insbesondere eine Zielrichtung. Für ein eindeutiges Auffinden des Ziels weist die erfindungsgemässe Zielsucheinheit weiterhin ein Distanzmesser 19 auf, welcher mit einer bekannten Positionierung auf der Anzieleinheit 20 angeordnet ist und über eine Signalsendeeinheit 18c und Signalempfangseinheit 18d verfügt. Der Distanzmesser 19 kann bspw. ausgeprägt sein als Laserdistanzmesser, welcher durch die Messung der Laufzeit eines vom Sender 18c emittierten, vom Ziel reflektierten und vom Empfänger 18d, bspw. mittels Avalanche-Photo-Diode (APD), registrierten Laserpulses nach dem direct Time-of-Flight-Prinzip eine Grobdistanz zum Ziel ermittelt. Entsprechend eignen sich erfindungsgemäss zum Bestimmen des Abstands zwischen Lasertracker und Ziel Radar-, Lidar-, Ultraschall-, oder Funkdistanzmesser. Letzterer kann auf Ultrawideband-, Bluetooth-, oder WLAN-Technologie o.ä. aufbauen, bspw. unter Verwendung des IEEE 802.11-Standards. Das Sichtfeld eines erfindungsgemässen Distanzmessers ist verglichen mit dem des Feinanzieldetektors gross, bspw. kann der Öffnungswinkel der Messstrahlung des Laserdistanzmessers wenigstens ein Grad betragen. Dabei kann das Messsignal statt vom Ziel reflektiert zu werden von einer am Ziel angebrachten Signalsende- und empfangseinheit erfasst und damit das Aussenden eines äquivalenten Messsignals getriggert und somit also das Messsignal zum Distanzmesser zurückgesendet werden. Insbesondere bei Verwendung der Signallaufzeit zur Distanzermittlung kann bei deren Auswertung die Zeitdauer zwischen Empfangen und Senden durch das Ziel berücksichtigt werden. Dazu ist z.B. eine referenzierte mittlere Zeitdauer in der Steuerungs- und Auswerteeinheit hinterlegt. Bei Distanzermittlung mittels Signalstärke ist dies nicht notwendig. Speziell bei Verwendung von Licht als Messsignalträger kann eine Distanz erfindungsgemäss alternativ zum direkten Laufzeitverfahren durch das indirect-Time-of-Flight-Prinzip bestimmt werden, indem also eine modulierte Welle hinsichtlich ihrer Phase ausgewertet wird.

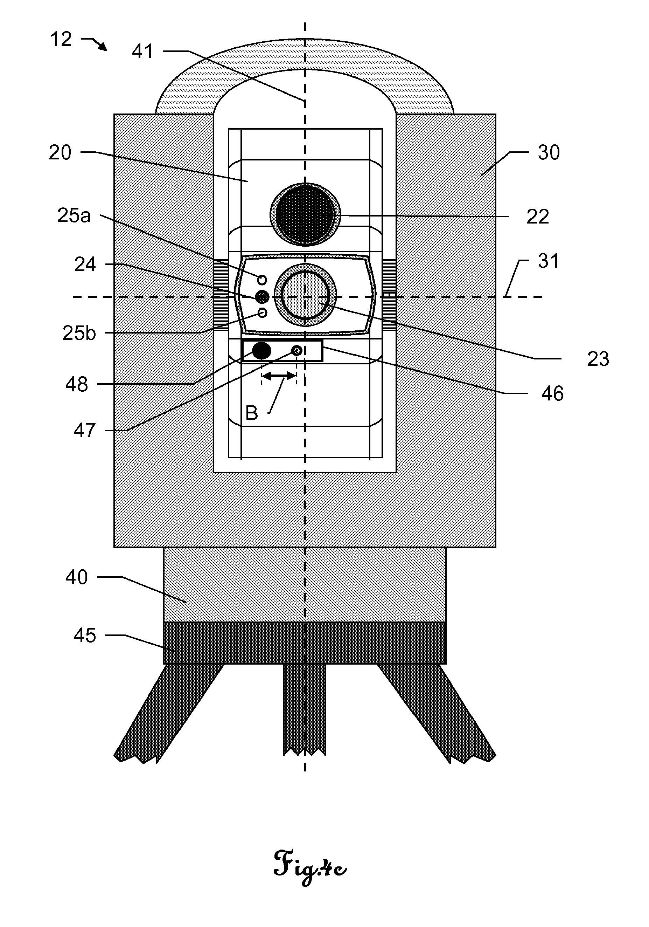

Nach der Ausführungsform nach Fig. 4c kann mit den Beleuchtungsmitteln 25a und 25b jeweils ein Ziel, z.B. ein Reflektor, beleuchtet bzw. angestrahlt werden und zumindest ein Teil der Strahlung durch den Reflektor in Richtung des Lasertrackers 12 bzw. in Richtung der Kamera 24 zurückreflektiert werden. Das reflektierte Licht wird dann als Lichtflecke mit der Kamera 24 in einem Bild erfasst. Aus der Position im Bild der erfasster Beleuchtungsstrahlung auf dem Detektor, welche sich bspw. aus einer Mittlung aus den beiden Lichtfleckpositionen des ersten und zweiten Beleuchtungsmittels ergibt, wird eine erste Zielpositionsinformation, bspw. eine Zielrichtung, bestimmt.

Für ein eindeutiges Auffinden des Ziels ist an der Anzieleinheit 20 als Bestandteil der erfindungsgemässen Zielsucheinheit weiterhin eine Einheit 46 zur Bestimmung einer Entfernung zum Ziel mittels aktiver optischer Triangulation angeordnet. Dazu weist die Einheit 46, welche bspw. als Streifenprojektionsscanner ausgebildet sein kann, ein drittes Beleuchtungsmittel 47 und eine zweite Kamera 48 auf mit einem zweiten positionssensitiven Detektor, deren Abstand zueinander, insbesondere der Abstand des Projektionszentrum der zweiten Kamera 48 zum Zentrum des dritten Beleuchtungsmittels, die Triangulationsbasislänge B definiert. Das dritte Beleuchtungsmittel 47 kann Beleuchtungsstrahlung gerichtet emittieren, wobei die Emissionsrichtung erfassbar ist, und ist bspw. als Laserdiode, insbesondere als IR-Laserdiode, ausgebildet. Zur Unterscheidung der einzelnen Beleuchtungsstrahlungen kann dabei die Wellenlänge und/oder Polarisierung oder eine andere Eigenschaft des Lichts der Laserdiode definiert anders sein als jenes des ersten und zweiten Beleuchtungsmittels 25a und 25b. Bei Ausführung der Suchfunktionalität erfolgt die aktive optische Triangulation dadurch, dass vom Ziel reflektierte Strahlung, welche vom Beleuchtungsmittel 47 gezielt emittiert ist, vom Detektor der zweiten Kamera 48 erfasst wird und die Position auf dem Detektor des dadurch erzeugten Lichtflecks bestimmt wird. Durch das Projektionszentrum der Kamera 48 und die Lichtfleckposition auf dem Detektor ist eine Strahlempfangsrichtung definiert, durch die Emissionsrichtung eine zweite Richtung, welche an das Zentrum des Beleuchtungsmittels 47 anknüpft. Das bestrahlte Ziel ist gemeinsamer Punkt der beiden Richtungen und ein Eckpunkt eines Triangulationsdreiecks. Die beiden anderen Dreieckspunkte sind die Endpunkte der Basis B, also das Projektionszentrum der zweiten Kamera 48 und das Zentrum des dritten Beleuchtungsmittels. Bei bekannter Positionierung und Orientierung von Kamera 48 und drittem Beleuchtungsmittel 47 lässt sich daraus eine z.B. anhand einer einfachen geometrischen Konstruktion oder trigonometrischen Berechnung eine zweite Zielpositionsinformation bestimmen. Erfindungsgemäss wird insbesondere mittels der aktiven optischen Triangulation eine Entfernung zum Ziel ermittelt. Zusammen mit der ersten Zielpositionsinformation wird daraus erfindungsgemäss eine Grobposition des Ziels bestimmt, wodurch ein Ausrichten der Entfernungsmess- und Trackingeinheit auf das Ziel in einem Anfahrschritt möglich ist.

Statt einer einzelnen zweiten Kamera 48 kann die Einheit 46 zwei oder mehr zweite Kameras 48 und/oder mehrere Beleuchtungsmittel 47 zur Emission gerichteter Beleuchtungsstrahlung beinhalten, wobei jeweils durch den Abstand eines Beleuchtungsmittel zu einer Kamera eine Triangulationsbasis festgelegt ist. Anstelle einer zweiten Kamera 47 kann die erste Kamera 24 derart ausgebildet ist, dass ein Trennen erfassbarer gerichteten Beleuchtungsstrahlung von erfassbarer anderer Beleuchtungsstrahlung durchführbar ist, insbesondere mittels eines optischen Filters, eines Filteralgorithmus, der bei Auswertung eines Detektorbildes angewandt wird oder durch das Vorhandensein mehrerer für unterschiedliches Licht sensitiver Detektoren oder Detektorelemente. Erfindungsgemäss kann das dritte Beleuchtungsmittel 47 zur strukturierten Beleuchtung des Ziels geeignet sein, bspw. indem die Einheit 46 als Lichtstrukturen-3D-Scanner ausgeprägt ist. Es eignen sich weiterhin jegliche andere Mittel nach dem Stand der Technik, mit denen mittels aktiver optischer Triangulation eine Entfernung zum Ziel bestimmbar ist und bei denen eine Basis durch den Abstand eines Beleuchtungsmittels zu einer ihm zugeordneten Kamera definiert ist.

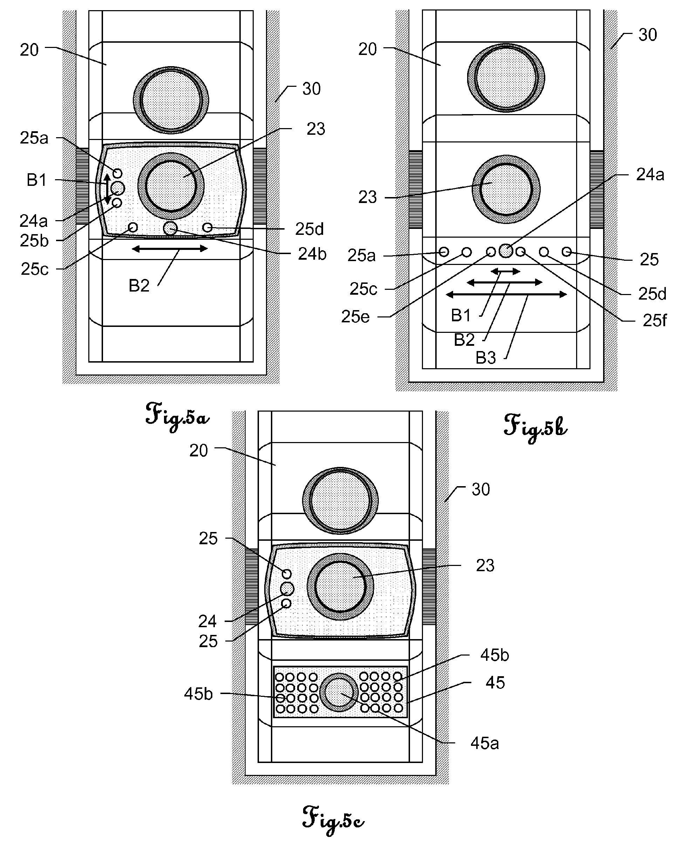

Die Figuren 5a - c zeigen jeweils eine weitere Ausführungsform einer erfindungsgemässen Anzieleinheit 20 eines Lasertrackers. Die Anzieleinheiten 20 sind wiederum um eine Neigungsachse schwenkbar relativ zu einer Stütze 30 angeordnet und weisen eine Optik 23 einer Teleskopeinheit zur Emission einer Messstrahlung und zur präzisen Bestimmung einer Entfernung zu einem Ziel vermittels der Messstrahlung auf.

In Figur 5a und 5b weisen die Anzieleinheiten 20 jeweils mehr als zwei Beleuchtungsmittel auf. Bei einer geraden Anzahl von Beleuchtungsmittel 25a - 25f wird jeweils durch ein Distanz eines Paars von Beleuchtungsmitteln 25a/b, 25c/d, 25e/f zueinander eine Basislänge B1, B2 bzw. B3 definiert, welche sich in ihrer Länge unterscheiden. Die Beleuchtungsmittel 25a - 25f sind jeweils paarweise symmetrisch um die optische Achse einer Kamera 24a oder 24b angeordnet. Prinzipiell ist die Zielsucheinheit des jeweiligen Lasertrackers nach Figur 5a oder 5b so konfiguriert, dass durch ein jeweiliges Paar aus erstem und zweitem Beleuchtungsmittel, z.B. 25a und 25b, alleine ein Auffinden des Ziels erfolgen kann, ohne auf ein zusätzliches Beleuchten durch ein drittes und viertes Beleuchtungsmittel, z.B. 25c, 25d, zurückgreifen zu müssen. Da sich unterschiedliche Basislängen auf die Genauigkeit des Zielauffindens und die minimale Grösse eines Ziels, bei welcher es noch aufgefunden werden kann, auswirken, ist durch das Vorhandensein mehrerer Beleuchtungsmittelpaare 25a/b, 25c/d, 25e/f mit unterschiedlichen Abstand eine höhere Genauigkeit der Zielauffindung und/oder ein Auffinden von Zielen mit verschiedener Grösse erreichbar. Mit einer relativ grossen Basislänge, bspw. B3, welche eine vergleichsweise hohe Genauigkeit ermöglicht, wird ein relativ grosses Ziel aufgefunden, und mit der relativ kleinen Basislänge B1 ein relativ kleines Ziel, von welchem bedingt durch den relativ grossen Abstand des Beleuchtungsmittels 25a zur Kamera 24a kein retroreflektiertes Beleuchtungslicht mehr von deren Detektor erfasst werden kann, da solchermassen reflektierte Beleuchtungsstrahlung an der optischen Eintrittsöffnung der Kamera 24a vorbeigelenkt wird. Ein zweites Beleuchtungsmittelpaar aus einem dritten und vierten Beleuchtungsmittel, z.B. 25c, 25d in Figur 5b, kann dabei alternativ zu einem ersten und zweiten Beleuchtungsmittel, z.B. 25e, 25f in Figur 5b, zum Beleuchten des Ziels benutzt werden, z.B. falls die Grösse des Ziels vorbekannt ist, andernfalls zusätzlich zu diesen. Eine zusätzliche Verwendung kann auch generell nach dem Prinzip der Mehrfachmessung zur Steigerung der Genauigkeit eines Messverfahrens, hier der Zielauffindung, erfolgen, bspw. falls das Ziel für mehrere Basislängen geeignet ist. Alternativ zu den gezeigten Anordnungen von mehr als zwei Beleuchtungsmitteln können erfindungsgemäss unterschiedliche Basislängen auch durch nur ein erstes und ein zweites Beleuchtungsmittel realisiert werden, deren Position auf der Anzieleinheit veränderbar ist.

Um die Beleuchtungsstrahlung der einzelnen Beleuchtungsmittel 25a bis 25f für das Auffinden des Ziels unterscheidbar zu machen, insbesondere, um Lichtflecke trennen zu können, die sich auf dem positionssensitiven Detektor überschneiden (würden), kann erfindungsgemäss ein Beleuchten jeweils nur durch ein einzelnes der Beleuchtungsmittel 25a bis 25f erfolgen, also bei Ausführung der Suchfunktionalität eine (kurze) Beleuchtungssequenz ausgeführt werden. Alternativ können die Beleuchtungsmittel 25a bis 25f zum Aussenden von Beleuchtungsstrahlung mit zueinander unterschiedlicher Eigenschaft konzipiert sein. Bspw. emittiert das Beleuchtungsmittel 25a Licht einer ersten Farbe, das Beleuchtungsmittel 25b Licht einer zweiten Farbe, usw. Entsprechend weisen die Kameras 24a, 24b Möglichkeiten der Lichttrennung auf, bspw. durch in den Strahlengang zuschaltbare optische Filter, mehrere verschieden wellenlängesensitive Detektoren oder wellenlängenspezifische Auswertung eines Detektorbildes. Insbesondere um die Positionen der Lichtflecke, welche durch ein einzelnen Beleuchtungsmittelpaar 25a/b, 25c/d oder 25e/f erzeugt sind, selbst bei Verwendung identischer, bezüglich ihrer Eigenschaften nicht unterscheidbarer, Beleuchtungsstrahlung und gleichzeitigem Beleuchten unabhängig voneinander bestimmen zu können, kann erfindungsgemäss ein Auswerten eines Detektorbildes eines erfindungsgemässen Lasertracker, in welchem erste und zweite Beleuchtungsstrahlung, bspw. vom ersten Beleuchtungsmittel 25a und vom zweiten Beleuchtungsmittel 25b erfasst ist, dergestalt erfolgen, dass eine Segmentierung der einzelnen Beleuchtungsstrahlungsquerschnittformen erfolgt. Da der Querschnitt eines Beleuchtungsstrahls i.d.R. zumindest weitgehend kreisförmig ist, werden insbesondere zwei einzelne Kreisformen segmentiert, was z.B. mittels zirkularer Hough-Transformation (CHT) oder skaleninvarianter Kernel-Operatoren erfolgen kann, wobei ein vorbekannter Durchmesser der beiden Beleuchtungsstrahlen berücksichtigt werden kann. Alternativ zu einer solchen Bildauswertung kann erfindungsgemäss ein gespeichertes Muster, welches z.B. in der Steuerungs- und Auswerteeinheit hinterlegt ist und zwei sich überdeckende Lichtflecke repräsentiert, anhand einer Best-Fit-Methode mit den erfassten Lichtflecken gematcht und aus der Lage des in Übereinstimmung gebrachten Musters eine erste und eine zweite Lichtfleckposition des vom ersten und vom zweiten Beleuchtungsmittel erzeugten Lichtflecks bestimmt werden. Ein solches Vorgehen ermöglicht insbesondere Positionsbestimmungen mit Subbildpunktgenauigkeit.

In der Ausführungsform nach Figur 5a ist jeweils einem Paar eine separate Kamera mit einem positionssensitiven Detektor zugeordnet, dem Paar 25a/b die Kamera 24a, dem Paar 25c/d die Kamera 24b. Alternativ können mehrere oder alle Beleuchtungsmittelpaare einer Kamera zugeordnet sein. Eine Bestimmung einer jeweiligen Lichtfleckposition als Bildposition auf dem Detektor der Kamera 24a oder 24b, die durch Beleuchtungsstrahlung eines Beleuchtungsmittels 25a - 25d hervorgerufen ist, kann unabhängig von einer anderen Lichtfleckposition erfolgen. Zusätzlich zu einer einzelnen Lichtfleckposition wird deren Distanz zur Position eines Lichtflecks bestimmt, der durch das zweite Beleuchtungsmittel eines Paars 25a/b,25c/d verursacht ist. Ein Auffinden des Ziels erfolgt bei Ausführen der Suchfunktionalität unter Heranziehung wenigstens einer Bildposition wenigstens eines Paars von Lichtflecken in Abhängigkeit deren Distanz zueinander, bspw. wie zu Figur 3b beschrieben.

Beim Lasertracker nach Figur 5b wird jegliche Beleuchtungsstrahlung vom Detektor der Kamera 24a erfasst. Eine jegliche Basislänge B1, B2 oder B3 wird also bei Beleuchten des Ziels, z.B. einem Retroreflektor, durch eines der Beleuchtungsmittelpaare 25a/b, 25c/d oder 25e/f auf den gleichen positionssensitiven Detektor abgebildet. Alternativ kann für jedes einzelne Beleuchtungsmittelpaar eine separate Kamera vorhanden sein. Die von der zugrunde liegenden Basislänge B1 - B3 und der Zielentfernung abhängige Abbildungslänge bildet zusammen mit der jeweiligen vorbekannten Basislänge B1, B2 oder B3 die Grundlage für eine aktive optische Triangulation, anhand derer das Ziel bei Ausführung der Suchfunktionalität erfindungsgemäss aufgefunden wird.

In Figur 5c weist die Anzieleinheit zur Zielsuche eine Kamera 24 mit einem positionssensitiven Detektor und Beleuchtungsmittel 25 auf zur Bestimmung einer Zielrichtung mittels Auswertung einer aus Beleuchtungsstrahlung ermittelten Position auf dem positionssensitiven Detektor der Kamera 24. Ausserdem weist die Anzieleinheit zur Zielsuche einen Distanzmesser zum Senden eines elektromagnetischen Signals als Zieldistanzbestimmungsmittel auf, ausgeprägt als ein 3D-Bilderstellungsmittel 45, welches in der konkreten Ausführungsform eine Range-Image-Kamera (RIM-Kamera) ist. Die RIM-Kamera weist ein Objektiv 45a und Beleuchtungsmittel 45b auf sowie einen RIM-Detektor, mit dem ein dreidimensionales Erfassen von Umgebungspunkten erfolgen kann, z.B. ein CMOS-Time-of-Flight-range-image-Sensor mit Current Assisted Photonic Demodulation (CAPD) oder einem Photogate Photonic Mixer Device (PG-PMD). Mit den Beleuchtungsmitteln 45b wird ein Teil der Umgebung des Lasertrackers angestrahlt, in welchem sich insbesondere das Ziel befindet oder vermutet wird, und aus der reflektierten und vom Objektiv 45a auf den RIM-Detektor geleiteten Strahlung eine 3D-Punktwolke des Umgebungsbereiches erstellt, welche räumliche Positionsinformationen einer Vielzahl von Umgebungspunkten repräsentiert, darunter insbesondere eine Positionsinformation über das Ziel. Dabei arbeiten Beleuchtungsmittel 45b und RIM-Kamera insbesondere mit Licht einer von der Beleuchtungsstrahlung des Zielrichtungserstellungsmittels aus Kamera 24 und Beleuchtungsmittel 25 differierenden Wellenlänge, wodurch ein gegenseitig ungestörtes Bestimmen von Zielrichtung und Grobdistanz ermöglicht ist. In einer speziellen Ausführungsform kann die Anzieleinheit lediglich eine Kamera aufweisen, welche sowohl zum Erfassen der Beleuchtungsstrahlung der Beleuchtungsmittel 45b als auch der Beleuchtungsstrahlung der Beleuchtungsmittel 25 ausgebildet ist, und ein Range-Imaging mittels dieser einen Kamera erfolgt. Alternativ kann ein erfindungsgemässer Lasertracker mit einer RIM-Kamera zum Zielauffinden mit Range-Imaging mittels Mikrowellstrahlung oder Ultraschall aufweisen. Als Grobdistanz zum Ziel kann ausgehend von erfassten Daten der RIM-Kamera 45 die Distanz desjenigen Punktes der 3D-Punktwolke übernommen werden, der in der zuvor bestimmten Zielrichtung, zumindest näherungsweise, liegt. Alternativ kann erfindungsgemäss das Zielobjekt durch eine Helligkeitsanalyse des RIM-Bildes oder anhand der Punktwolke bzw. einem daraus erstellten Tiefenbild mittels Objekterkennung erkannt werden und die Zielgrobdistanz als Entfernung eines das Zielobjekt repräsentierenden direkt erfassten oder berechneten Punktes ermittelt werden. Aus der Zielrichtung und der Zielgrobdistanz wird erfindungsgemäss eine Zielgrobposition erstellt, wodurch das Ziel eindeutig aufgefunden ist.

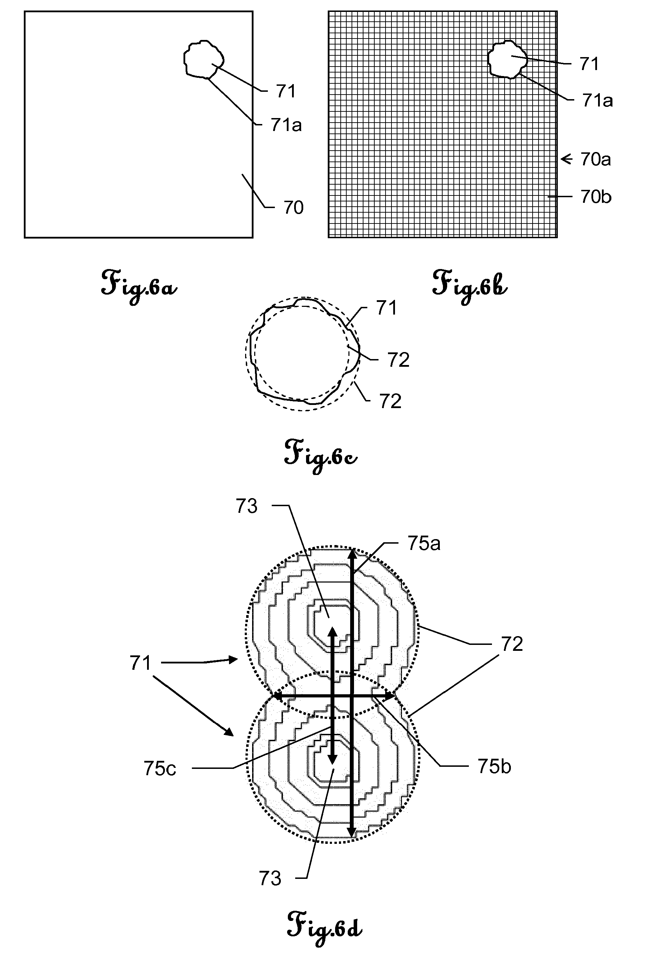

Figur 6a zeigt ein mit einer Kamera eines erfindungsgemässen Lasertrackers mit einem positionssensitiven Detektor erfasstes Bild 70 mit einem im Bild erfassten Lichtfleck 71, welcher durch Strahlung, die von einem beleuchteten Ziel reflektiert oder von einer optischen Markierung am Ziel emittiert oder reflektiert wurde, erzeugt ist. Gemäss der Form des Querschnitts der Strahlung ist im Bild 70 der Lichtfleck 71 durch eine Strahlungsquerschnittsform 71a dargestellt, deren Position erfindungsgemäss als Lichtfleckposition bestimmbar ist. Figur 6b zeigt in diesem Zusammenhang die Lage des eingestrahlten Lichts auf dem positionssensitiven Detektor 70a der Kamera. Die auf den Detektor 70a treffende Strahlung erstreckt sich als Lichtfleck über eine Anzahl einzelner Sensorbildpunkte 70b, wobei die Form der Strahlung in Abhängigkeit der Grösse und Anzahl von Sensorbildpunkten 70b bestimmt werden kann.

Zur Bestimmung der Lage der Strahlungsquerschnittsform 71a auf dem Sensor 70a bzw. im Bild 70 kann eine Analyse basierend auf Bildverarbeiten derart ausgeführt werden, dass damit Lichtfleckposition bestimmt wird, welcher die Lage der Strahlung im Bild repräsentiert. Die Steuerungsund Auswerteeinheit des Lasertrackers weist hierzu erfindungsgemäss eine Bildpositionsbestimmungsfunktionalität auf, bei deren Ausführung die Position der Strahlung mittels Bildverarbeiten derart bestimmt werden, dass durch die Strahlungsposition eine Lage im Bild 70 der im jeweiligen Bild 70 erfassten Strahlungsquerschnittsform 71a repräsentiert wird. Dies kann insbesondere mittels Schwerpunktberechnen basierend auf der im jeweiligen Bild 70 erfassten Strahlungsquerschnittsform 71a, insbesondere mittels Helligkeits- und/oder Kontrastanalyse, erfolgen. Alternativ oder zusätzlich kann das Bestimmen der Lage - wie in Figur 6c gezeigt - mittels Matchen, insbesondere InÜbereinstimmung-Bringen, der im jeweiligen Bild erfassten Strahlungsquerschnittsform 71a mit einem gespeicherten Muster 72 (hier: Kreisform) anhand einer Best-Fit-Methode erfolgen, insbesondere mit Subbildpunktgenauigkeit, wobei anhand der in Übereinstimmung gebrachten Lage des Musters 72 im Bild die jeweilige Position der im Bild erfassten Strahlung bestimmt wird, insbesondere mit Subbildpunktgenauigkeit.

Insbesondere kann dabei für das gespeicherte Muster eine Information mitgespeichert sein, die eine musterintern definierte, für die letztendliche Ermittlung der Lichtfleck- bzw Bildposition heranzuziehende Muster-Position innerhalb des Musters ableiten lässt, im Speziellen wobei die Information die musterintern definierte Muster-Position selbst ist oder ein definierter Muster-Positions-Bestimmungsalgorithmus wie etwa ein Musterschwerpunkt-Bestimmungsalgorithmus.

Ist also das Muster 72 an die Form der erfassten Strahlung angepasst, so kann aufgrund der bereits gespeicherten Mustereigenschaften ein bestimmter Punkt - bei der hier gezeigten Kreisform beispielsweise der Kreismittelpunkt - als zu bestimmende Bildposition im Bild 70 bzw. auf dem Sensor 70a abgeleitet werden. Das Muster 72 kann hierbei z.B. auch als Ellipse oder Polygon definiert sein.

Setzt sich im Bild 70 ein Lichtfleck aus der Strahlung mehrerer Beleuchtungsmittel oder optischer Markierungen zusammen, kann erfindungsgemäss eine Bildpositionsbestimmungsfunkionalität derart vorhanden sein, dass analog zur oben beschriebenen Weise, bspw. mittels schwerpunktsberechnenden Bildverarbeiten und/oder Matchen mit einem eine Überlagerung darstellenden gespeicherten Muster die Positionen der einzelnen Lichtflecke bestimmt werden.

Fig. 6d zeigt zwei in einem Bild 70 einer Kamera mit einem positionssensitiven Detektor eines erfindungsgemässen Lasertrackers erfasste Lichtflecken 71, welche durch Strahlung zweier Leuchtmittel, insbesondere von vom Ziel reflektierter Beleuchtungsstrahlung zweier Beleuchtungsmittel, erzeugt sind. Die erfasste Strahlungsquerschnittsform setzt sich aus den beiden sich überlagernden Lichtflecken 71, welche jeweils ein Intensitäts- bzw. Helligkeitsmaximum 73 aufweisen, zusammen. Die vom Detektor aufgenommene Strahlung erstreckt sich auf diesem über eine Anzahl einzelner Sensorbildpunkte, wobei Helligkeitswerte und die Form der Strahlung in Abhängigkeit der Grösse und Anzahl von Sensorbildpunkten bestimmt werden kann. Mittels einer erfindungsgemäss Funktionalität der Steuerund Auswerteeinheit ein Bildverarbeiten derart ausgeführt werden, dass eine Separation der Lichtflecke 71 auf dem Sensor 70a bzw. im Bild 70 bestimmt werden kann, wodurch eine Distanzinformation oder Parallaxenkorrigierinformation erhalten werden kann. Hierzu kann erfindungsgemäss eine jeweilige Bildposition eines jeden Lichtflecks 71 wie zu Figur 6b oder 6c beschrieben bestimmt werden und eine Distanz 75c aus beiden Positionen berechnet werden. Bspw. können mittels einer Helligkeitsanalyse die beiden Intensitätspeaks 73 ermittelt und als jeweilige Bildposition herangezogen werden. Alternativ lassen sich bspw. mittels Helligkeitsanalyse die Form bzw. Berandungen oder Intensitätsgrenzen der oder innerhalb der Strahlungsquerschnittsform bestimmen und hieraus eine kennzeichnende geometrische Grösse der Querschnittsform bestimmen, z.B. deren längste Erstreckung 75a oder die Taillenweite 75b. Alternativ oder zusätzlich kann das Bestimmen der Separation mittels Matchen, insbesondere In-Übereinstimmung-Bringen, der im jeweiligen Bild erfassten Strahlungsquerschnittsform aus beiden Lichtflecken 72 mit einem oder mehreren gespeicherten Mustern 72 (hier: sich überschneidende Kreisformen) anhand einer Best-Fit-Methode erfolgen, insbesondere mit Subbildpunktgenauigkeit, wobei anhand der in Übereinstimmung gebrachten Lage des Musters 72 im Bild eine Distanzinformation oder Parallaxenkorrigierinformation der im Bild erfassten Strahlung bestimmt wird, insbesondere mit Subbildpunktgenauigkeit.

Insbesondere kann dabei für das gespeicherte Muster eine Information mitgespeichert sein, die eine musterintern definierte, für die letztendliche Ermittlung einer Distanzinformation oder Parallaxenkorrigierinformation heranzuziehende Information über den Grad der Separation ableiten lässt, im Speziellen wobei die Information die musterintern definierte Distanzinformation oder Parallaxenkorrigierinformation selbst ist oder ein entsprechend definierter Bestimmungsalgorithmus.

Im Beispiel kann bspw. anhand des Matchens der Kreismusterformen 72, welche auch als ein einziges zusammenhängendes Muster abgespeichert sein können, eine Taillenweite 75b oder Länge 75a als Kenngrösse für die Separation anhand der Kreislinienschnittpunkte z.B. rechnerisch oder anhand eines für das zutreffende Kreismuster mit hinterlegten Werts bestimmt werden.

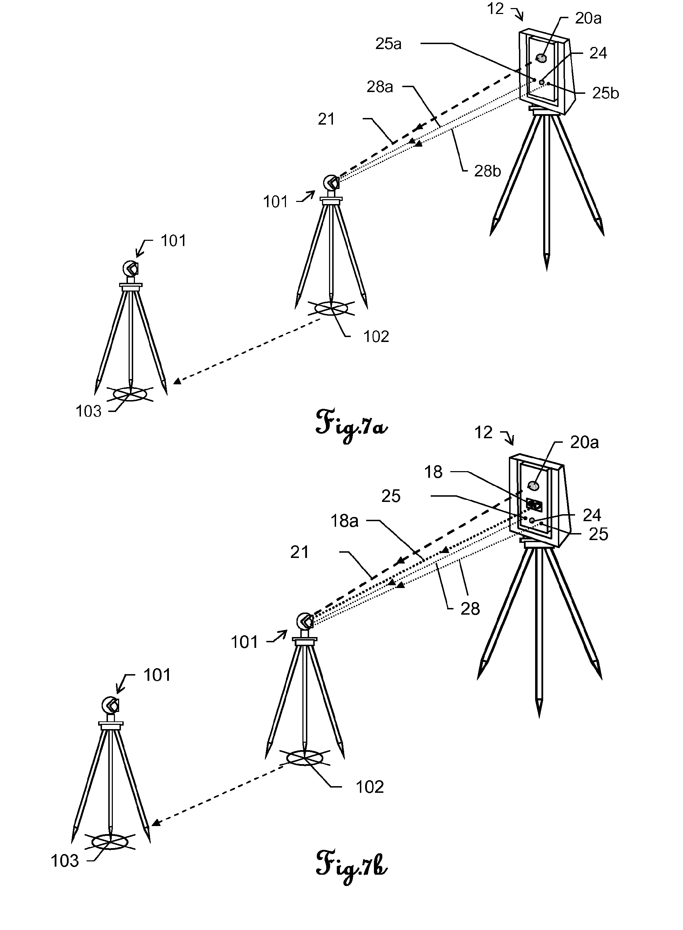

Figuren 7a bis 7c zeigen eine erfindungsgemässe Vorgehensweise zur Kalibrierung von Positionierung und Ausrichtung von massgebenden Elementen der Zielsucheinheit verschiedener Ausführungsformen erfindungsgemässer Lasertracker 12, insbesondere gemäss einer Ausführungsform nach einer der Figuren 1 - 5. Die Lasertracker weisen jeweils eine Strahllenkeinheit 20a zur Emission einer Messstrahlung 21, welche eine Messachse definiert und mit der die Entfernung zum Ziel und durch Kenntnis der Ausrichtung der Messstrahlung 21 die Position des Ziels 101 exakt bestimmt werden, zunächst die erste Position 102, dann die zweite Position 103. Dabei wird ausserdem jeweils durch die Zielsucheinheit das Ziel 101 erfasst. Im Rahmen eines erfindungsgemässen Kalibrierverfahrens können insbesondere noch unbestimmte Geräteparameter ermittelt und hinterlegt werden, welche für eine anschliessende Bestimmung einer Grobposition im Rahmen des Auffinden eines Ziels herangezogen werden, und/oder eine Zuordnung von Messwerten, insbesondere Bildpositionen, zu Grobpositionen gebildet und hinterlegt werden, welche für ein späteres Auffinden eines Ziels als Nachschlagetabelle oder als funktionale Referenz herangezogen wird.

In Figur 7a weist die Zielsucheinheit dazu eine Kamera 24 und zwei Beleuchtungsmittel 25a und 25b mit einem eine Basislänge definierenden Abstand zueinander auf, welche das Ziel 101 mit Licht 28a und 28b beleuchten. Von den dadurch in einem Bild der Kamera 24 erfassten beiden Lichtflecke wird zumindest einer positionsbestimmt. Ausserdem wird als Parallaxenkorrigierinformation deren Abstand zueinander bestimmt. Aus den damit erfassten Messdaten erfolgt die Kalibrierung des Systems 12 so, dass die relativen Positionierungen der Beleuchtungsmittel 25a und 25b zur Kamera 24, insbesondere zur deren optischer Achse, und der Kamera 24 zur Messachse abgeleitet werden, womit also die äussere Orientierung, bezogen auf das Koordinatensystem der Strahllenkeinheit 20a, bestimmt ist. Alternativ oder zusätzlich können die relative Positionierung der Beleuchtungsmittel 25a und 25b zur Messachse und die Basislänge und Parameter der inneren Orientierung der Kamera 24 bestimmt werden. Die Anzielrichtung für die Messstrahlung 21 ist dabei jeweils bekannt und die Lichtfleckpositionen können dieser Richtung jeweils zugeordnet werden.

In der Ausführungsform nach Figur 7b weist die Zielsucheinheit eine Kamera 24 und Beleuchtungsmittel 25 auf, welche das Ziel 101 mit Licht 28 beleuchten. Die durch vom Ziel 101 reflektierte Beleuchtungsstrahlung wird auf dem positionssensitiven Detektor der Kamera 24 positionsbestimmt. Ausserdem weist die Zielsucheinheit ein Zieldistanzbestimmungsmittel 18 auf, z.B. einen Ultraschalldistanzmesser, welches eine Grobdistanz zum Ziel 101 mittels Senden und Empfangen eines Messsignals 18a, bspw. einer Ultraschallwelle, ermittelt. Aus den damit erfassten Messdaten erfolgt die Kalibrierung des Systems 12 so, dass die relativen Positionierungen der Beleuchtungsmittel 25 zur Kamera 24, insbesondere zur deren optischer Achse, und der Kamera 24 zur Messachse, und des Zieldistanzbestimmungsmittels 18 zur Kamera 24 und/oder zur Messachse und die Positionierungen der Sende- und Empfangseinheit des Zieldistanzbestimmungsmittels 18 abgeleitet werden, womit schliesslich die äusseren Orientierungen dieser Zielsucheinheitsbestandteile, bezogen auf das Koordinatensystem der Strahllenkeinheit 20a, bestimmt sind. Alternativ oder zusätzlich können die relative Positionierung der Beleuchtungsmittel 25 zur Messachse und Parameter der inneren Orientierung der Kamera 24 und des Zieldistanzbestimmungsmittels 18 bestimmt werden. Die Anzielrichtung für die Messstrahlung 21 ist dabei jeweils bekannt und die Positionsdaten der Einheiten der Zielsucheinheit können dieser Richtung jeweils zugeordnet werden.

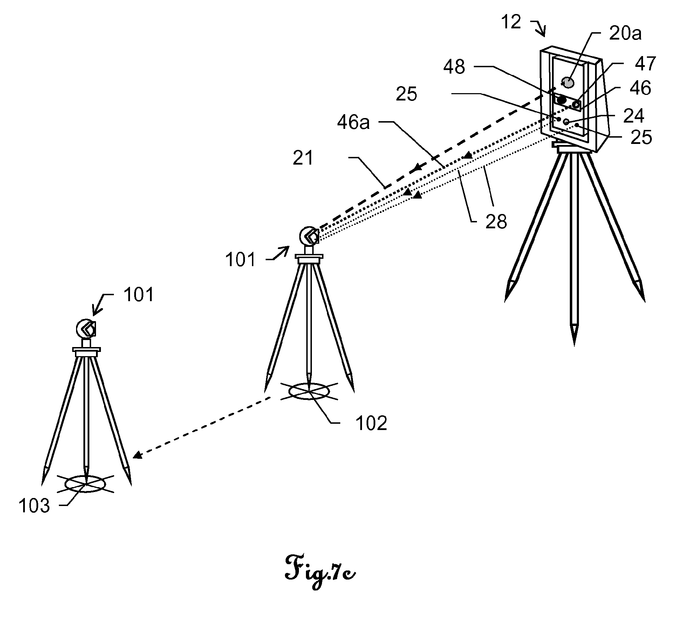

In der Ausführungsform nach Figur 7c weist die Zielsucheinheit eine erste Kamera 24 und Beleuchtungsmittel 25 auf, welche das Ziel 101 mit Licht 28 beleuchten. Die durch vom Ziel 101 reflektierte Beleuchtungsstrahlung wird auf dem positionssensitiven Detektor der Kamera 24 positionsbestimmt. Ausserdem weist die Zielsucheinheit einen Einheit 46 zur aktiven optischen Triangulation auf, ausgeprägt z.B. als Projektionstiefensensorsystem, mit einer Projektionseinheit 47 zur gerichteten Emission von Strahlung 46a und einer zweiten Kamera 48, durch deren Abstand die Triangulationsbasislänge vorgegeben ist. Aus den damit erfassten Messdaten erfolgt die Kalibrierung des Systems 12 so, dass die relativen Positionierungen der Beleuchtungsmittel 25 zur ersten Kamera 24, insbesondere zur deren optischer Achse, und der ersten Kamera 24 zur Messachse, und der Triangulationseinheit 46 zur ersten Kamera 24 und/oder zur Messachse und der Positionierungen und Ausrichtung der Projektionseinheit 47 bzw. deren Emissionsrichtung und der zweiten Kamera 48, womit schliesslich die äusseren Orientierungen dieser Zielsucheinheitsbestandteile, bezogen auf das Koordinatensystem der Strahllenkeinheit 20a, bestimmt sind. Alternativ oder zusätzlich können die relative Positionierung der Beleuchtungsmittel 25 zur Messachse und Parameter der inneren Orientierung der Kameras 24 und 48 bestimmt werden. Die Anzielrichtung für die Messstrahlung 21 ist dabei jeweils bekannt und die Positionsdaten der Einheiten der Zielsucheinheit können dieser Richtung jeweils zugeordnet werden.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Bestimmung von Entfernungen und/oder Positionen und mit gattungsgemässen Messgeräten, insbesondere Lasertrackern, des Stands der Technik kombiniert werden.

## Patentansprüche

1. Lasertracker (10,11,12) zur fortlaufenden Verfolgung eines reflektierenden Ziels (65,81,101) und zur Positionsbestimmung des Ziels (65,81,101) mit
• einen eine Stehachse (41) definierenden Sockel (40),
• einer Strahllenkeinheit (20a) zur Emission einer Messstrahlung (17,21) und zum Empfang von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel (40) motorisiert schwenkbar ist und
□ durch eine Emissionsrichtung der Messstrahlung (17,21) eine Messachse (57) definiert ist,
• einem ein Feinanzielsichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
• einer Feindistanzmesseinheit zur präzisen Distanzbestimmung zum Ziel (65,81,101) vermittels der Messstrahlung (17,21),
• einer Winkelmessfunktionalität zur Bestimmung einer Ausrichtung der Strahllenkeinheit (20a) relativ zum Sockel (40) und
• einer Zielsucheinheit mit
□ wenigstens einem ersten und zweiten Beleuchtungsmittel (25,25a-d) mit fixer Distanz zueinander, welche eine erste Basislänge (B) definiert, zum Beleuchten des Ziels (65,81,101) mit elektromagnetischer Beleuchtungsstrahlung (28,28a,28b),
□ einer ein Sichtfeld (27a) definierenden Kamera (24,24a,24b) mit einem positionssensitiven Detektor (28a), wobei
· die Kamera (24,24a,24b) mit deren optischer Achse (26) versetzt, insbesondere parallel versetzt, zur Messachse (57) angeordnet ist,
· mit der Kamera (24) ein Bild (P1, 70, 74) erfassbar ist,
· im Bild (P1, 70, 74) zumindest ein Teil von am Ziel (65,81,101) reflektierter Beleuchtungsstrahlung (28,28a,28b) des ersten und zweiten Beleuchtungsmittels (25,25a-d) als erster und zweiter Lichtfleck (32a,32b,71) erfassbar ist, und
□ einer Steuerungs- und Auswerteeinheit mit Suchfunktionalität zum Auffinden des Ziels in Abhängigkeit der Lichtflecke (32a,32b,71)sodass ein Ausrichten der Messstrahlung (17,21) auf das Ziel (65,81,101) basierend auf dem Auffinden ausführbar ist,
**dadurch gekennzeichnet, dass**
bei Ausführen der Suchfunktionalität
• mindestens eine Bildposition (X1,X2) in Abhängigkeit des ersten und/oder zweiten Lichtflecks (32a,32b,71)auf dem Detektor bestimmt wird,
• eine Parallaxenkorrigier-Information durch Bildverarbeitung des aufgenommenen Bilds (P1, 70, 74) bestimmt wird, in welcher eine Separation der Lichtflecke (32a,32b,71) berücksichtigt wird und welche abhängig ist von einer Distanz der beiden Lichtflecke (32a,32b,71) zueinander, und
• das Auffinden des Ziels (65,81,101) unter Heranziehung der mindestens einen Bildposition (X1,X2) und in Abhängigkeit von der Parallaxenkorrigier-Information erfolgt, so dass eine durch die Messachse (57) und die optische Achse (26) der Kamera (24,24a,24b) gegebene Parallaxe berücksichtigt wird.

2. Lasertracker (10,11,12) nach Anspruch 1,
**dadurch gekennzeichnet, dass**
die Steuerungs- und Auswerteeinheit derart konfiguriert ist, dass bei Ausführen der Suchfunktionalität unter Heranziehung der mindestens einen Bildposition (X1,X2) und in Abhängigkeit der Parallaxenkorrigier-Information eine, insbesondere richtungswinkelbezogene, Abweichung der Richtung der Messachse (57) von der Richtung zum Ziel (65,81,101) bestimmt wird, wobei insbesondere
• eine Grobentfernung (R) zum Ziel (65,81,101) bestimmt wird, insbesondere anhand einer hinterlegten referenzierten Zuordnung von Parallaxenkorrigier-Informationen zu Grobentfernungen (R) und/oder
• wenigstens eine, insbesondere eine erste und eine zweite, Zielrichtung (29) abgeleitet und eine Grobposition des Ziels (65,81,101) in Abhängigkeit der Zielrichtung (29) bestimmt wird, insbesondere unter Verwendung einer ermittelten Grobentfernung (R), insbesondere mittels Triangulation, oder
• eine Grobposition des Ziels (65,81,101) anhand einer hinterlegten referenzierten Zuordnung von Bildpositionen (X1,X2) und Parallaxenkorrigier-Informationen zu Grobpositionen bestimmt wird.

3. Lasertracker (10,11,12) nach einem der Ansprüche 1 oder 2,
**dadurch gekennzeichnet, dass**
die Strahllenkeinheit (20a) vermittels der Steuerungsund Auswerteeinheit derart steuerbar ist, dass eine automatische Ausrichtung der Messstrahlung (17,21) basierend auf dem Ergebnis der Suche erfolgt, sodass Messstrahlung (17,21) auf das Ziel (65,81,101) trifft und mittels des Feinanzieldetektors (58) detektierbar ist.

4. Lasertracker (10,11,12) nach einem der Ansprüche 1 bis 3,
**dadurch gekennzeichnet, dass**
die Beleuchtungsmittel (25,25a-d) derart ausgebildet sind, dass die elektromagnetische Beleuchtungsstrahlung (28,28a,28b) divergent mit einer Wellenlänge im infraroten Bereich emittierbar ist, insbesondere wobei
• die Beleuchtungsmittel (25,25a-d) ausgebildet sind als lichtemittierende Dioden zur Emission von Licht einer Wellenlänge im infraroten Bereich,
• die Intensität der Beleuchtungsstrahlung (28,28a,28b) dynamisch variierbar ist, und/oder
• die Kamera (24,24a,24b) derart ausgebildet ist, dass im Wesentlichen nur infrarote Beleuchtungsstrahlung (28,28a,28b) erfassbar ist, insbesondere wobei die Kamera (24,24a,24b) einen Filter aufweist, im Speziellen zur im Wesentlichen ausschliesslichen Transmission der infraroten Strahlung (28,28a,28b) auf den positionssensitiven Detektor.

5. Lasertracker (10,11,12) nach einem der Ansprüche 1 bis 4,
**dadurch gekennzeichnet, dass**
die Steuerungs- und Auswerteeinheit eine Bildpositionsbestimmungsfunktionalität aufweist, bei deren Ausführung eine Bildposition (X1,X2) in einem durch die Kamera (24,24a,24b) erfassten Bild (P1, 70, 74) mittels Bildverarbeiten derart bestimmt wird, dass durch die Bildposition (X1,X2) eine Lage im Bild einer im Bild (P1, 70, 74) erfassten Beleuchtungsstrahlungsquerschnittsform (71a) repräsentiert wird, insbesondere
• mittels Schwerpunktberechnen basierend auf der im Bild erfassten Lichtfleckform, insbesondere mittels Helligkeits- und/oder Kontrastanalyse, und/oder
• mittels Matchen, insbesondere In-Übereinstimmung-Bringen, der im Bild (P1, 70, 74) erfassten Beleuchtungsstrahlungsquerschnittsform (71a) mit einem gespeicherten Muster (72) anhand einer Best-Fit-Methode, insbesondere mit Subbildpunktgenauigkeit, wobei anhand der in Übereinstimmung gebrachten Lage des Musters (72) im Bild (P1, 70, 74) wenigstens eine Bildposition (X1,X2) der im Bild (P1, 70, 74) erfassten Beleuchtungsstrahlung (28,28a,28b) bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Bildposition (X1,X2) heranzuziehende Musterposition innerhalb des Musters (72) ableiten lässt, im Speziellen wobei die Information die musterintern definierte Musterposition selbst ist oder ein definierter Musterpositions-Bestimmungsalgorithmus wie etwa ein Musterschwerpunkt-Bestimmungsalgorithmus.

6. Lasertracker (10,11,12) nach einem der Ansprüche 1 bis 5,
**dadurch gekennzeichnet, dass**
eine eine gesonderte Bildpositionsbestimmung in Abhängigkeit eines jeweiligen Lichtflecks beeinträchtigende Überschneidung von in einem Bild (P1, 70, 74) einer Kamera (24,24a) erfassten Beleuchtungsstrahlungsquerschnittsformen des ersten und zweiten Beleuchtungsmittels (25,25a-d) dadurch vermieden oder aufgelöst wird, dass
• bei Ausführen der Suchfunktionalität ein Beleuchten des Ziels (65,81,101) durch das erste und das zweite Beleuchtungsmittel und ein Erfassen einer dadurch generierten einzelnen Lichtfleckposition (X1,X2) zeitlich versetzt zueinander erfolgen,
• das durch das erste und das zweite Beleuchtungsmittel (25,25a-d) jeweils Beleuchtungsstrahlung (28,28a,28b) verschiedener, durch die Kamera (24,24a,24b), insbesondere mittels Filter, trennbarer, Wellenlängen und/oder Polarisierung emittierbar ist,
• mittels Bildverarbeitung des Bilds (P1, 70, 74), insbesondere unter Verwendung von Kantendetektion, eine Segmentierung der einzelnen Querschnittsformen erfolgt, insbesondere eine Segmentierung von Kreisformen, insbesondere von Kreisformen eines definierten Durchmessers oder Durchmesserintervalls, im Speziellen unter Verwendung zirkularer Hough-Transformation (CHT) oder skaleninvarianter Kernel-Operatoren, und/oder
• mittels Matchen, insbesondere In-Übereinstimmung-Bringen, der im Bild (P1, 70, 74) erfassten Lichtfleckform aus den sich überschneidenden einzelnen Beleuchtungsstrahlungsquerschnittsformen mit einem gespeicherten Muster anhand einer Best-Fit-Methode, insbesondere mit Subbildpunktgenauigkeit, wobei anhand der in Übereinstimmung gebrachten Lage des Musters im Bild die jeweilige einzelne Lichtfleckposition (X1,X2) der im Bild erfassten Beleuchtungsstrahlung (28,28a,28b) des jeweiligen Beleuchtungsmittels (25,25a-d) bestimmt wird, insbesondere mit Subbildpunktgenauigkeit, insbesondere wobei für das gespeicherte Muster wenigstens eine, insbesondere zwei, Information mitgespeichert ist, die musterintern definierte, für die letztendliche Ermittlung der jeweiligen Lichtfleckposition (X1,X2) heranzuziehende Musterpositionen innerhalb des Musters ableiten lässt, im Speziellen wobei die Information die musterintern definierte Musterposition selbst ist oder ein definierter Musterpositions-Bestimmungsalgorithmus.

7. Lasertracker (10,11,12) nach einem der Ansprüche 1 bis 6,
**dadurch gekennzeichnet, dass**
die Bestimmung einer Parallaxenkorrigier-Information durch Bildverarbeitung des aufgenommenen Bilds (70, 74) derart erfolgt, dass
• eine Distanz (75c) zweier Bildpositionen auf dem Detektor bestimmt wird, welche aus einer gesonderten Bildpositionsbestimmung in Abhängigkeit jeweils des ersten und zweiten Lichtflecks (71) bestimmt sind,
• mittels Matchen, insbesondere In-Übereinstimmung-Bringen, der im Bild (70, 74) erfassten Beleuchtungsstrahlungsquerschnittsform mit einem gespeicherten Muster (72) anhand einer Best-Fit-Methode, insbesondere mit Subbildpunktgenauigkeit, wobei anhand der in Übereinstimmung gebrachten Form des Musters (72) im Bild (70, 74) eine Grösseninformation über die im Bild erfassten Beleuchtungsstrahlungsquerschnittsform bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Parallaxenkorrigier-Information heranzuziehende Information über das Ausmass der Lichtfleckseparation ableiten lässt, im Speziellen wobei die Information die musterintern definierte Parallaxenkorrigier-Information selbst ist oder ein definierter Parallaxenkorrigier-Informations-Bestimmungsalgorithmus, oder
• eine geometrische Kenngrösse für die im Bild (70, 74) erfasste Beleuchtungsstrahlungsquerschnittsform bestimmt wird, insbesondere eine Taillenweite 75b und/oder Länge 75a einer Beleuchtungsstrahlungsquerschnittsform, welche sich aus dem ersten und zweiten Lichtfleck (71) zusammensetzt.

8. Lasertracker (10,11,12) nach einem der Ansprüche 1 bis 7,
**dadurch gekennzeichnet, dass**
die Zielsucheinheit wenigstens ein drittes und ein viertes Beleuchtungsmittel (25,25a-d) mit einer von der ersten Basislänge (B) verschiedenen Basislänge (B1-B3) aufweist, welche anstatt der ersten und zweiten Beleuchtungsmittel (25,25a-d) oder zusätzlich zu diesen zum Beleuchten des Ziels (65,81,101) eingesetzt werden, insbesondere wobei bei Ausführen der Suchfunktionalität eine, insbesondere automatische, Auswahl der zu verwendenden Beleuchtungsmittel (25,25a-d) in Abhängigkeit einer bekannten Beschaffenheit des Ziels (65,81,101), insbesondere dessen Grösse und/oder eines Zieldistanzschätzwertes erfolgt.

9. Lasertracker (10,11,12) nach einem der Ansprüche 1 bis 8,
**dadurch gekennzeichnet, dass**
der Lasertracker (10,11,12) aufweist
• eine um die Stehachse (41) relativ zum Sockel (40) motorisiert schwenkbare und die Neigungsachse (31) definierende Stütze (30) und
• eine als Strahllenkeinheit (20a) ausgebildete, um die Neigungsachse (31) relativ zur Stütze (30) motorisiert schwenkbare Anzieleinheit (20) mit einer Teleskopeinheit zur Emission der Messstrahlung (17,21) und zum Empfang von zumindest einem Teil der am Ziel (65,81,101) reflektierten Messstrahlung (17,21).

10. Lasertracker (10,11,12) nach einem der Ansprüche 1 bis 9,
**dadurch gekennzeichnet, dass**
der Lasertracker (10,11,12) eine Kalibrierfunktionalität aufweist, bei deren Ausführung eine referenzierte Zuordnung von Bildpositionen (X1,X2) und Parallaxenkorrigier-Informationen zu Grobpositionen des Ziels (65,81,101) gebildet und hinterlegt wird und/oder die bekannte Positionierung der Beleuchtungsmittel (25,25a-d) relativ zur optischen Achse (57) und/oder Messachse (57) und/oder die fixe Basislänge (B,B1-B3) der Beleuchtungsmittel und/oder die bekannte Positionierung der optischen Achse relativ zur Messachse (57) bestimmt werden, insbesondere wobei bei Ausführung der Kalibrierfunktionalität
• die Feindistanzmesseinheit (29c,65,81) ein in verschiedenen Positionen bereitgestelltes Ziel (65,81,101) mittels der Messstrahlung (17,21) anzielt und vermisst,
• für jede Position des Ziels (65,81,101) die wenigstens eine Bildposition (X1,X2) bestimmt wird und
• aus dem Vermessen des Ziels (65,81,101) und der dazu bestimmten wenigstens einen Bildpositionen (X1,X2) und Parallaxenkorrigierinformation die relativen Positionierungen der Beleuchtungsmittel (25,25a-d) zur Messachse (57) und die Basislänge (B,B1-B3) abgeleitet werden.

11. Verfahren zum Suchen eines Ziels (65,81,101) mit einem Lasertracker (10,11,12), wobei der Lasertracker (10,11,12) aufweist
• einen eine Stehachse (41) definierenden Sockel (40)
und
• eine Strahllenkeinheit (20a) zum Emittieren einer Messstrahlung (17,21) und zum Empfangen von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel (40) motorisiert schwenkbar ist und
□ durch eine Emissionsrichtung der Messstrahlung (17,21) eine Messachse (57) definiert ist, und
• einen ein Feinanziel-Sichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
sowie mit
• einem Beleuchten des Ziels (65,81,101) mit elektromagnetischer Beleuchtungsstrahlung (28,28a,28b) durch wenigstens ein erstes und ein zweites Beleuchtungsmittel (25,25a-d), welche einen fixen Abstand zueinander haben, welcher eine erste Basislänge (B) definiert,
• einem positionssensitiven Erfassen wenigstens eines Bildes (P1, 70, 74) mit einer am Lasertracker (10,11,12) angeordneten und ein Sichtfeld (27a) definierenden Kamera (24,24a,24b), wobei im Bild (P1, 70, 74) zumindest ein Teil der am Ziel reflektierten Beleuchtungsstrahlung (28,28a,28b) des ersten und zweiten Beleuchtungsmittels (25,25a-d) als erster und zweiter Lichtfleck (32a,32b,71) erfasst wird,
• einem Auffinden des Ziels (65,81,101) basierend auf einem Auswerten der erfassten Lichtflecke (32a,32b,71) und Ausrichten der Messstrahlung auf das Ziel (65,81,101) basierend auf dem Auffinden, **gekennzeichnet durch**
• ein Bestimmen wenigstens einer Bildposition (X1,X2) auf dem Detektor in Abhängigkeit des ersten und/oder zweiten Lichtflecks (32a,32b,71),
• Bestimmen einer Parallaxenkorrigier-Information **durch** Bildverarbeitung des aufgenommenen Bilds (P1, 70, 74), in welcher eine Separation der Lichtflecke (32a,32b,71) berücksichtigt wird und welche abhängig ist von einer Distanz der beiden Lichtflecke (32a,32b,71), zueinander,
• Auffinden des Ziels (65,81,101) unter Heranziehen der mindestens einen Bildposition (X1,X2) und in Abhängigkeit von der Parallaxenkorrigier-Information, so dass eine **durch** die Messachse (57) und die optische Achse (26) der Kamera (24,24a,24b) gegebene Parallaxe berücksichtigt wird.

12. Verfahren nach Anspruch 11,
**gekennzeichnet durch**
ein Bestimmen einer, insbesondere richtungswinkelbezogener, Abweichung zwischen der Richtung der Messachse (57) von der Richtung zum Ziel (65,81,101) unter Heranziehung der wenigstens einen Bildposition (X1,X2) und in Abhängigkeit der Parallaxenkorrigier-Information, insbesondere mit
• Bestimmen einer Grobentfernung (R) zum Ziel (65,81,101), insbesondere anhand einer hinterlegten referenzierten Zuordnung Parallaxenkorrigier-Informationen zu Grobentfernungen (R) und/oder
• Ableiten wenigstens einer, insbesondere einer ersten und einer zweiten, Zielrichtung (29) zum Ziel (65,81,101) und in Abhängigkeit von den Zielrichtungen (29) Bestimmen einer Grobposition des Ziels (65,81,101), insbesondere unter Verwendung einer ermittelten Grobentfernung (R), insbesondere mittels Triangulation, oder
• Bestimmen einer Grobposition des Ziels (65,81,101) anhand einer hinterlegten Referenztabelle, in der Grobpositionen des Ziels (65,81,101) Bildpositionen (X1,X2) und Parallaxenkorrigier-Informationen zugeordnet sind.

13. Verfahren nach einem der Ansprüche 11 oder 12,
**gekennzeichnet durch**
ein automatisches Ausrichten der Strahllenkeinheit (20a) basierend auf dem Ergebnis der Suche, insbesondere in Abhängigkeit einer dabei bestimmten Grobposition des Ziels (65,81,101), sodass die Messstrahlung (17,21) auf das Ziel (65,81,101) trifft und mittels des Feinanzieldetektors (58) detektierbar ist.

14. Verfahren nach einem der Ansprüche 11 bis 13,
**dadurch gekennzeichnet, dass**
das Bestimmen einer Parallaxenkorrigier-Information durch Bildverarbeitung des aufgenommenen Bilds derart erfolgt, dass
• eine Distanz zweier Bildpositionen auf dem Detektor bestimmt wird, welche aus einer gesonderten Bildpositionsbestimmung in Abhängigkeit jeweils des ersten und zweiten Lichtflecks (32a,32b,71) bestimmt sind,
• mittels Matchen, insbesondere In-Übereinstimmung-Bringen, der im Bild (P1, 70, 74) erfassten Beleuchtungsstrahlungsquerschnittsform mit einem gespeicherten Muster (72) anhand einer Best-Fit-Methode, insbesondere mit Subbildpunktgenauigkeit, wobei anhand der in Übereinstimmung gebrachten Form des Musters (72) im Bild (P1, 70, 74) eine Grösseninformation über die im Bild (P1, 70, 74) erfassten Beleuchtungsstrahlungsquerschnittsform bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Parallaxenkorrigier-Information heranzuziehende Information über das Ausmass der Lichtfleckseparation ableiten lässt, im Speziellen wobei die Information die musterintern definierte Parallaxenkorrigier-Information selbst ist oder ein definierter Parallaxenkorrigier-Informations-Bestimmungsalgorithmus, oder
• eine geometrische Kenngrösse für die im Bild (P1, 70, 74) erfasste Beleuchtungsstrahlungsquerschnittsform bestimmt wird, insbesondere eine Taillenweite (75b)und/oder Länge (75a) einer Beleuchtungsstrahlungsquerschnittsform, welche sich aus dem ersten und zweiten Lichtfleck (32a,32b,71) zusammensetzt,
und/oder ein Auffinden des Ziels (65,81,101) unter Heranziehen mehrerer erster und zweiter Lichtflecke erfolgt, insbesondere durch Mittelung über eine jeweils in Abhängigkeit dazu bestimmter Grobentfernung (R) zum Ziel (65,81,101) und/oder Grobposition des Ziels (65,81,101), und/oder zusätzlich oder alternativ zum Beleuchten des Ziels durch das erste und zweite Beleuchtungsmittel (25,25a-d) ein Beleuchten durch ein drittes und viertes Beleuchtungsmittel mit einer von der ersten Basislänge (B) verschiedenen Basislänge (B1-B3) erfolgt.

15. Computerprogrammprodukt mit Programmcode, der auf einem maschinenlesbaren Träger gespeichert ist, zur Steuerung bzw. Durchführung des Verfahrens nach einem der Ansprüche 11 bis 14.

16. Lasertracker (10,11,12) zur fortlaufenden Verfolgung eines reflektierenden Ziels (65,81,101) und zur Positionsbestimmung des Ziels (65,81,101) mit
• einem eine Stehachse (41) definierenden Sockel (40),
• einer Strahllenkeinheit (20a) zur Emission einer Messstrahlung (17,21) und zum Empfang von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel (40) motorisiert schwenkbar ist und
□ durch eine Emissionsrichtung der Messstrahlung (17,21) eine Messachse (57) definiert ist,
• einem ein Feinanzielsichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
• einer Feindistanzmesseinheit zur präzisen Distanzbestimmung zum Ziel (29c,65,81) vermittels der Messstrahlung (17,21),
• einer Winkelmessfunktionalität zur Bestimmung einer Ausrichtung der Strahllenkeinheit (20a) relativ zum Sockel (40) und
• einer Zielsucheinheit mit
□ Beleuchtungsmitteln (25,25a,25b) zur Beleuchtung des Ziels (65,81,101) mit elektromagnetischer Beleuchtungsstrahlung (28,28a,28b),
□ einer ein Sichtfeld (27a) definierenden Kamera (24) mit einem positionssensitiven Detektor (28a), wobei
• die Kamera (24) mit deren optischer Achse (26) versetzt zur Messachse (57) angeordnet ist, insbesondere parallel versetzt,
• mit der Kamera (24) ein Bild (70) erfassbar ist,
• im Bild (70) eine Bildposition *X̅* aus am Ziel (65,81,101) reflektierter Beleuchtungsstrahlung (28,28a,28b) bestimmbar ist, und
□ einer Steuerungs- und Auswerteeinheit mit Suchfunktionalität zum Auffinden des Ziels (65,81,101), derart konfiguriert, dass bei Ausführung der Suchfunktionalität ein Auffinden des Ziels (65,81,101) in Abhängigkeit von der Bildposition erfolgt, sodass ein Ausrichten der Messstrahlung auf das Ziel (65,81,101) basierend auf dem Auffinden ausführbar ist,
**dadurch gekennzeichnet, dass**
• die Zielsucheinheit ein omnidirektionales Zieldistanzbestimmungsmittel (18) zum Senden und Empfangen eines Messsignals (18a) aufweist, mit welchem bei Ausführung der Suchfunktionalität die Bestimmung einer Grobdistanz (19D) zum Ziel (65,81,101) mittels Erfassung einer Laufzeit, Phaseninformation und/oder Stärke des Messsignals (18a) erfolgt, und
• das Auffinden des Ziels (65,81,101) in Abhängigkeit der Bildposition *X̅* unter Heranziehung der bestimmten Grobdistanz (19D) erfolgt, so dass eine durch die Messachse (57) und die optische Achse (26) der Kamera (24) gegebene Parallaxe berücksichtigt wird.

17. Lasertracker (10,11,12) nach Anspruch 16,
**dadurch gekennzeichnet, dass**
die Steuerungs- und Auswerteeinheit derart konfiguriert ist, dass bei Ausführen der Suchfunktionalität in Abhängigkeit der Bildposition *X̅* unter Heranziehung der Grobdistanz eine, insbesondere richtungswinkelbezogene, Abweichung der Richtung der Messachse (57) von der Richtung zum Ziel (65,81,101) bestimmt wird, wobei insbesondere
• in Abhängigkeit der Bildposition *X̅* eine Zielrichtung (29a,29) abgeleitet und eine Grobposition des Ziels (65,81,101) in Abhängigkeit der Zielrichtung (29a,29) und der Grobdistanz (19D) bestimmt werden, oder
• eine Grobposition des Ziels (65,81,101) anhand einer hinterlegten referenzierten Zuordnung von Bildpositionen *X̅* und Grobdistanzen (19D) zu Grobpositionen bestimmt wird.

18. Lasertracker (10,11,12) nach einem der Ansprüche 16 oder 17,
**dadurch gekennzeichnet, dass**
die Strahllenkeinheit (20a) vermittels der Steuerungsund Auswerteeinheit derart steuerbar ist, dass eine automatische Ausrichtung der Messstrahlung (17,21) basierend auf dem Ergebnis der Suche erfolgt, sodass Messstrahlung (17,21) auf das Ziel (65,81,101) trifft und mittels des Feinanzieldetektors (58) detektierbar ist.

19. Lasertracker (10,11,12) nach einem der Ansprüche 16 bis 18,
**dadurch gekennzeichnet, dass**
bei Ausführen der Suchfunktionalität aus der Bildposition *X̅* eine Zielrichtung (29a,29) abgeleitet wird und die Grobdistanz (19D) unter Berücksichtigung der Zielrichtung (29a,29) bestimmt wird, insbesondere indem vor dem Senden die Senderichtung des Messsignals (18a) aus der Information über die Zielrichtung (19b, 29) festgelegt wird oder nach dem Senden eine Auswahl aus den durch das Zieldistanzbestimmungsmittel (18) erfassten Daten anhand der Information über die Zielrichtung (29a,29) erfolgt.

20. Lasertracker (10,11,12) nach einem der Ansprüche 16 bis 19,
**dadurch gekennzeichnet, dass**
• das Zieldistanzbestimmungsmittel (18) ausgeprägt ist als Distanzmesser (19) zum Messen von Distanzen einzelner Objekte oder Punkte basierend auf dem Senden und Empfangen eines elektromagnetischen oder akustischen Messsignals (18a), insbesondere ein
□ 3D-Bilderstellungsmittel (45), insbesondere eine Range-Image-Kamera, welche im Speziellen Bestandteil der Kamera (24) ist,
□ Laserdistanzmesser,
□ Radardistanzmesser,
□ Lidardistanzmesser,
□ Ultraschalldistanzmesser, oder
□ Funkdistanzmesser, insbesondere basierend auf WLAN, Bluetooth oder Ultrawideband.

21. Lasertracker (10,11,12) nach Anspruch 20,
**dadurch gekennzeichnet, dass**
bei Ausführung der Suchfunktionalität die Bestimmung einer Grobdistanz (19D) zum Ziel (65,81,101) erfolgt durch
• die Erstellung einer 3D-Punktwolke von Oberflächenpunkten wenigstens eines Teils der Umgebung des Lasertrackers durch das 3D-Bilderstellungsmittel (45) und Übernahme der Distanzdaten als Grobdistanz (19D) desjenigen Punktes, der in einer, insbesondere mittels der Zielposition, bestimmten Zielrichtung (29a,29) liegt und/oder mittels Bildauswertung eines aus der 3D-Punktwolke erstellten Tiefenbildes, insbesondere durch Erkennen des Ziels (65,81,101) mittels Objekterkennung, oder
• Senden eines, insbesondere modulierten, elektromagnetischen oder akustischen Messsignals (18a) durch den Distanzmesser, welches vom Ziel (65,81,101) reflektiert oder empfangen und zurückgesendet wird, Empfangen des Messsignals (18a) durch den Distanzmesser und Auswertung der Signalstärke, insbesondere unter Ermittlung eines RSSI-Werts, der Signalphase, insbesondere mittels indirektem Laufzeitmessverfahren, und/oder der Signallaufzeit, insbesondere mittels direktem Laufzeitmessverfahren.

22. Lasertracker (10,11,12) nach einem der Ansprüche 16 bis 21,
**dadurch gekennzeichnet, dass**
die Beleuchtungsmittel (25,25a,25b) derart ausgebildet sind, dass die elektromagnetische Beleuchtungsstrahlung (28,28a,28b) divergent mit einer Wellenlänge im infraroten Bereich emittierbar ist, insbesondere wobei
• die Beleuchtungsmittel (25,25a,25b) ausgebildet sind als lichtemittierende Dioden zur Emission von Licht einer Wellenlänge im infraroten Bereich,
• die Intensität der Beleuchtungsstrahlung (28,28a,28b) dynamisch variierbar ist, und/oder
• die Kamera (24) derart ausgebildet ist, dass im Wesentlichen nur infrarote Beleuchtungsstrahlung (28,28a,28b)erfassbar ist, insbesondere wobei die Kamera (24) einen Filter aufweist, im Speziellen zur im Wesentlichen ausschliesslichen Transmission der infraroten Strahlung (28,28a,28b) auf den positionssensitiven Detektor.

23. Lasertracker (10,11,12) nach einem der Ansprüche 16 bis 22,
**dadurch gekennzeichnet, dass**
die Steuerungs- und Auswerteeinheit eine Bildpositionsbestimmungsfunktionalität aufweist, bei deren Ausführung eine Position von Beleuchtungsstrahlung in einem durch die Kamera (24) erfassten Bild (70) mittels Bildverarbeiten derart bestimmt wird, dass durch die Beleuchtungsstrahlungsposition eine Lage im Bild einer im Bild (70) erfassten Beleuchtungsstrahlungsquerschnittsform (71a) repräsentiert wird, insbesondere
• mittels Schwerpunktberechnen basierend auf der im Bild (70) erfassten Beleuchtungsstrahlungsquerschnittsform, insbesondere mittels Helligkeitsund/oder Kontrastanalyse, und/oder
• mittels Matchen, insbesondere In-Übereinstimmung-Bringen, der im Bild (70) erfassten Beleuchtungsstrahlungsquerschnittsform mit einem gespeicherten Muster (72) anhand einer Best-Fit-Methode, insbesondere mit Subbildpunktgenauigkeit, wobei anhand der in Übereinstimmung gebrachten Lage des Musters (72) im Bild (70) die Beleuchtungsstrahlungsposition (29a-b) der im Bild (70) erfassten Beleuchtungsstrahlung (28,28a,28b) bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Beleuchtungsstrahlungsposition (29a-b) heranzuziehende Musterposition innerhalb des Musters (72) ableiten lässt, im Speziellen wobei die Information die musterintern definierte Musterposition selbst ist oder ein definierter Musterpositions-Bestimmungsalgorithmus wie etwa ein Musterschwerpunkt-Bestimmungsalgorithmus.

24. Lasertracker (10,11,12) nach einem der Ansprüche 16 bis 23,
**dadurch gekennzeichnet, dass**
der Lasertracker (10,11,12) aufweist
• eine um die Stehachse (41) relativ zum Sockel (40) motorisiert schwenkbare und die Neigungsachse (31) definierende Stütze (30) und
• eine als Strahllenkeinheit (20a) ausgebildete, um die Neigungsachse (31) relativ zur Stütze (30) motorisiert schwenkbare Anzieleinheit (20) mit einer Teleskopeinheit zur Emission der Messstrahlung (17,21) und zum Empfang von zumindest einem Teil der am Ziel (29c,65,81) reflektierten Messstrahlung (17,21).

25. Lasertracker (10,11,12) nach einem der Ansprüche 16 bis 24,
**dadurch gekennzeichnet, dass**
der Lasertracker (10,11,12) eine Kalibrierfunktionalität aufweist, bei deren Ausführung eine referenzierte Zuordnung von Bildpositionen (X1,X2) und Grobdistanz zu Grobpositionen des Ziels (65,81,101) gebildet und hinterlegt wird und/oder die bekannte Positionierung und Ausrichtung der Kamera (24) und des Zieldistanzbestimmungsmittels (18) relativ zueinander und/oder relativ zur Messachse (57) bestimmt werden, insbesondere wobei bei Ausführung der Kalibrierfunktionalität
• die Feindistanzmesseinheit (29c,65,81) ein in verschiedenen Positionen bereitgestelltes Ziel (65,81,101) mittels der Messstrahlung (17,21) anzielt und vermisst,
• für jede Position des Ziels (65,81,101) die Position im Bild der erfassten reflektierten Beleuchtungsstrahlung (28,28a,28b) und Grobdistanz (19D) zum Ziel bestimmt wird und
• aus dem Vermessen des Ziels (65,81,101) und der dazu bestimmten Position im Bild der erfassten reflektierten Beleuchtungsstrahlung (28,28a,28b) und Grobdistanz (19D) die relativen Positionierungen und Ausrichtungen abgeleitet werden.

26. Verfahren zum Suchen eines Ziels (65,81,101) mit einem Lasertracker (10,11,12), wobei der
Lasertracker (10,11,12) aufweist
• einen eine Stehachse (41) definierenden Sockel (40) und
• eine Strahllenkeinheit (20a) zum Emittieren einer Messstrahlung (17,21) und zum Empfangen von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel (40) motorisiert schwenkbar ist und
□ durch eine Emissionsrichtung der Messstrahlung (17,21) eine Messachse (57) definiert ist, und
• einen ein Feinanziel-Sichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
sowie mit
• einem Beleuchten des Ziels (65,81,101) mit elektromagnetischer Beleuchtungsstrahlung (28,28a,28b) durch Beleuchtungsmittel (25,25a,25b),
• einem positionssensitiven Erfassen eines Bildes (70) mit einer am Lasertracker (10,11,12) angeordneten und ein Sichtfeld (27a) definierenden Kamera (24), wobei die Kamera (24) mit deren optischer Achse (26) versetzt zur Messachse (57) angeordnet ist,
• einem Bestimmen einer Bildposition *X̅* im Bild (70) von am Ziel (65,81,101) reflektierten Beleuchtungsstrahlung (28,28a,28b), und
• einem Auffinden des Ziels (65,81,101) basierend auf der Bildposition *X̅* und Ausrichten der Messstrahlung auf das Ziel (65,81,101) basierend auf dem Auffinden, **gekennzeichnet durch**
• ein berührungsloses Bestimmen einer Grobdistanz (19D) zum Ziel (65,81,101) mittels der Laufzeit, Phaseninformation und/oder Stärke eines Messsignals (18a), welches **durch** ein am Lasertracker angeordnetes omnidirektionales Zieldistanzbestimmungsmittel (18) emittiert wird, und
• Auffinden des Ziels (65,81,101) in Abhängigkeit der Bildposition *X̅* unter Heranziehen der bestimmten Grobdistanz(19D), so dass eine **durch** die Messachse (57) und die optische Achse (26) der Kamera (24) gegebene Parallaxe berücksichtigt wird.

27. Verfahren nach Anspruch 26,
**gekennzeichnet durch**
ein Bestimmen einer, insbesondere richtungswinkelbezogener, Abweichung der Richtung der Messachse (57) von der Richtung zum Ziel (65,81,101) unter Heranziehen der Bildposition *X̅* und in Abhängigkeit der Grobdistanz (19D), insbesondere
• Ableiten wenigstens einer Zielrichtung (29a,29) zum Ziel (65,81,101) in Abhängigkeit der Bildposition *X̅*, und in Abhängigkeit von der Zielrichtung (29a,29) und der Grobdistanz (19D) Bestimmen einer Grobposition des Ziels (65,81,101), oder
• Bestimmen einer Grobposition des Ziels (65,81,101) anhand einer hinterlegten referenzierten Zuordnung von Bildpositionen *X̅* und Grobdistanzen (19D) zu Grobpositionen.

28. Verfahren nach einem der Ansprüche 26 oder 27,
**gekennzeichnet durch**
ein automatisches Ausrichten der Strahllenkeinheit (20a) basierend auf dem Ergebnis der Suche, insbesondere in Abhängigkeit der Grobposition des Ziels (65,81,101), sodass die Messstrahlung (17,21) auf das Ziel (65,81,101) trifft und mittels des Feinanzieldetektors (58) detektierbar ist.

29. Verfahren nach einem der Ansprüche 26 bis 28,
**dadurch gekennzeichnet, dass**
ein Bestimmen der Grobdistanz (19D) erfolgt durch
• Erstellen einer 3D-Punktwolke von Oberflächenpunkten wenigstens eines Teils der Umgebung des Lasertrackers durch das als ein 3D-Bilderstellungsmittel (45), insbesondere eine Range-Image-Kamera, ausgeprägte Zieldistanzbestimmungsmittel (18), und Übernehmen der Distanzdaten als Grobdistanz (19D) desjenigen Punktes, der in einer zuvor, insbesondere mittels der Zielposition, bestimmten Zielrichtung (29a,29) liegt und/oder der mittels Bildauswertung eines aus der 3D-Punktwolke erstellten Tiefenbildes durch Erkennen des Ziels (65,81,101), insbesondere mittels Objekterkennung und/oder Helligkeitsanalyse, ermittelt wird, oder
• Senden eines elektromagnetischen oder akustischen Messsignals (18a) durch das Zieldistanzbestimmungsmittel (18), insbesondere einen Distanzmesser, welches vom Ziel (65,81,101) reflektiert oder empfangen und zurückgesendet wird, Empfangen des Messsignals (18a) und Auswerten der Signalstärke, insbesondere unter Ermittlung eines RSSI-Werts, der Signalphase, insbesondere durch indirekte Laufzeitmessung, und/oder der Signallaufzeit, insbesondere durch direkte Laufzeitmessung, insbesondere wobei vor dem Senden die Senderichtung des Messsignals (18a) aus einer mittels der Zielposition ermittelten Information über die Zielrichtung (19b,29) festgelegt wird,
insbesondere wobei ein Auffinden des Ziels (65,81,101) unter Heranziehen mehrerer ermittelter Bildpositionen und/oder Grobdistanzen (19D) erfolgt, insbesondere durch Mittelung über die dadurch jeweils bestimmte Zielrichtung (19b,29) und/oder Grobdistanz (19D) zum Ziel (65,81,101) oder Grobposition des Ziels (65, 81, 101).

30. Computerprogrammprodukt mit Programmcode, der auf einem maschinenlesbaren Träger gespeichert ist, zur Steuerung bzw. Durchführung des Verfahrens nach einem der Ansprüche 26 bis 29.

31. Lasertracker (10,11,12) zur fortlaufenden Verfolgung eines reflektierenden Ziels (65,81,101) und zur Positionsbestimmung des Ziels (65,81,101) mit
• einem eine Stehachse (41) definierenden Sockel (40),
• einer Strahllenkeinheit (20a) zur Emission einer Messstrahlung (17,21) und zum Empfang von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel(40) motorisiert schwenkbar ist und
□ durch eine Emissionsrichtung der Messstrahlung (17,21) eine Messachse (57) definiert ist,
• einem ein Feinanzielsichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
• einer Feindistanzmesseinheit zur präzisen Distanzbestimmung zum Ziel (65,81,101) vermittels der Messstrahlung (17,21),
• einer Winkelmessfunktionalität zur Bestimmung einer Ausrichtung der Strahllenkeinheit (20a) relativ zum Sockel (40) und
• einer Zielsucheinheit mit
□ wenigstens einem Beleuchtungsmittel (25,25a-f) zum Beleuchten des Ziels (65,81,101) mit elektromagnetischer Beleuchtungsstrahlung (28,28a,28b),
□ wenigstens einer ein Sichtfeld (27a) definierenden ersten Kamera (24,24a) mit einem positionssensitiven Detektor (28a), wobei
· die Kamera (24,24a) mit deren optischer Achse (26) versetzt zur Messachse (57) angeordnet ist, insbesondere mit parallelem Versatz der optischen Achse,
· mit der Kamera (24) ein Bild (P2, 70, 74) erfassbar ist,
· im Bild (P2, 70, 74) zumindest ein Teil von am Ziel (65,81,101) reflektierter Beleuchtungsstrahlung (28,28c,28d) als wenigstens ein Lichtfleck (32a-d,71) auf dem positionssensitiven Detektor erfassbar ist, und
□ einer Steuerungs- und Auswerteeinheit mit Suchfunktionalität zum Auffinden des Ziels (65,81,101) in Abhängigkeit des wenigstens einen Lichtflecks (32a-d,71), sodass ein Ausrichten der Messstrahlung auf das Ziel (65,81,101) basierend auf dem Auffinden ausführbar ist,
**dadurch gekennzeichnet, dass**
bei Ausführung der Suchfunktionalität ein Auffinden des Ziels (65,81,101) basierend auf aktiver optischer Triangulation erfolgt unter Verwendung einer fixen Basislänge (B,B1-B3), die definiert ist durch den Abstand
• eines Paars von Beleuchtungsmitteln (25,25a-f) zueinander,
• eines Beleuchtungsmittels (47) zur gerichteten Strahlungsemission zum Projektionszentrum einer Kamera (24,48), welche die Zielsucheinheit aufweist, oder
• von zwei am Ziel (65,81,101) angeordneten optischen Markierungen (82,82a,82b) zueinander, ausgeprägt als ein Paar von Leuchtmitteln oder von Retroreflektoren, so dass eine durch die Messachse (57) und die optische Achse (26) der ersten Kamera (24,24a) gegebene Parallaxe berücksichtigt wird.

32. Lasertracker (10,11,12) nach Anspruch 31,
**dadurch gekennzeichnet, dass**
die Steuerungs- und Auswerteeinheit derart konfiguriert ist, dass bei Ausführen der Suchfunktionalität (29a,29b) basierend auf der aktiven optischen Triangulation eine, insbesondere richtungswinkelbezogene, Abweichung der Richtung der Messachse (57) von der Richtung zum Ziel (65,81,101) bestimmt wird, wobei insbesondere
• eine Grobentfernung (R) zum Ziel (65,81,101) bestimmt wird, insbesondere anhand einer hinterlegten referenzierten Zuordnung von Triangulationsmassen, insbesondere von Winkel- und/oder Längenmassen zu Grobentfernungen (R) und/oder
• wenigstens eine, insbesondere eine erste und eine zweite, Zielrichtung (29) abgeleitet und eine Grobposition des Ziels (65,81,101) in Abhängigkeit der Zielrichtung (29) bestimmt wird, insbesondere unter Verwendung einer ermittelten Grobentfernung (R), oder
• eine Grobposition des Ziels (65,81,101) anhand einer hinterlegten referenzierten Zuordnung von Triangulationsmassen, insbesondere von Winkel- und/oder Längenmassen, zu Grobpositionen bestimmt wird.

33. Lasertracker (10,11,12) nach einem der Ansprüche 31 oder 32,
**dadurch gekennzeichnet, dass**
die Strahllenkeinheit (20a) vermittels der Steuerungs- und Auswerteeinheit derart steuerbar ist, dass eine automatische Ausrichtung der Messstrahlung (17,21) basierend auf dem Ergebnis der Suche erfolgt, sodass Messstrahlung (17,21) auf das Ziel (65,81,101) trifft und mittels des Feinanzieldetektors (58) detektierbar ist.

34. Lasertracker (10,11,12) nach einem der Ansprüche 31 bis 33,
**dadurch gekennzeichnet, dass**
bei Ausführung der Suchfunktionalität im Rahmen der aktiven optischen Triangulation
• eine Distanzinformation hinsichtlich der Beabstandung zueinander der Lichtflecke (32a,b,71) eines durch Beleuchtungsstrahlung (28,28a-d) eines die Basislänge (B,B1-B3) definierenden Paars von Beleuchtungsmitteln (25,25a-f), erzeugten Lichtfleckpaars (32a,32b) bestimmt wird, insbesondere wobei eine Grobposition des Ziels (65,81,101) anhand der bestimmten Distanzinformation, der Basislänge (B,B1-B3) und der bekannten Positionierung des positionssensitiven Detektors oder einer Zielrichtung (29) ermittelt wird,
• eine Emissionsrichtung der Beleuchtungsstrahlung (46a) wenigstens eines zur gerichteten Emission von Beleuchtungsstrahlung (46a) geeigneten Beleuchtungsmittels (47), welches zusammen mit dem Projektionszentrum einer ihm zugeordneten Kamera (24,48) die Basislänge (B) definiert, erfasst wird und die Position des durch die reflektierte Beleuchtungsstrahlung (46a) auf dem positionssensitiven Detektor der ihm zugeordneten Kamera (24,48) erzeugten Lichtflecks (71) bestimmt wird, durch welche zusammen mit der Position des Kameraprojektionszentrums eine Empfangsrichtung festgelegt ist, insbesondere wobei eine Entfernung zum Ziel (65,81,101) anhand der Emissionsrichtung, der Empfangsrichtung und der Basislänge (B) bestimmt wird, wobei im Speziellen anhand der zur Entfernungsbestimmung geeigneten Daten in Abhängigkeit eines durch ungerichtete Beleuchtungsstrahlung bestimmten Richtungsinformation eine Grobposition des Ziels (65,81,101) ermittelbar ist, oder
• eine Distanzinformation hinsichtlich der Beabstandung zueinander von Lichtflecken welche durch von der Zielsucheinheit in einem Bild erfasster Strahlung (84a,84b) erzeugt werden, die von eine Basislänge (B) definierender am Ziel (65,81,101) angeordneten optischen Markierungen (82,82a,82b) durch Zurückstrahlung von Beleuchtungsstrahlung (28,28a,28b) oder durch eigene Lichtemission ausgeht, bestimmt wird, insbesondere wobei
□ eine Entfernung zum Ziel (65,81,101) anhand der bestimmten Distanzinformation, der Basislänge (B) und der Positionierung des erfassenden positionssensitiven Detektors (15S) bestimmbar ist, wobei im Speziellen anhand der zur Entfernungsbestimmung geeigneten Daten in Abhängigkeit eines durch Beleuchtungsstrahlung bestimmten Richtungsinformation eine Grobposition des Ziels (65,81,101) ermittelt wird,
□ zum Beleuchten der optischen Markierungen (82,82a,82b) die Zielsucheinheit ein Spezialbeleuchtungsmittel aufweist, insbesondere welches Beleuchtungsstrahlung (84a,84b), im Speziellen hinsichtlich Wellenlänge und/oder Polarisierung, unterschiedlicher Art im Vergleich zur Beleuchtungsstrahlung (28,28a,28b) der weiteren Beleuchtungsmittel (25,25a-f) emittiert, und/oder
□ Distanzinformationen hinsichtlich weiterer Lichtflecke (32a-d,71) bestimmt werden, welche durch von der Zielsucheinheit erfasster Strahlung von weiteren Basislängen definierender optischen Markierungen (82) des Ziels (65,81,101) erzeugt werden, insbesondere zur Steigerung der Robustheit der Bestimmung einer Grobposition des Ziels (65,81,101),
insbesondere wobei die Bestimmung einer Distanzinformation durch Bildverarbeitung derart erfolgt, dass
• eine Distanz (D, 75c) zweier Bildpositionen auf dem Detektor bestimmt wird, welche aus einer gesonderten Bildpositionsbestimmung in Abhängigkeit jeweils eines einzelnen Lichtflecks (32a-d,71) bestimmt sind,
• mittels Matchen, insbesondere In-Übereinstimmung-Bringen, der im Bild (P2, 70, 74) erfassten Lichtfleckform mit einem gespeicherten Muster (72) anhand einer Best-Fit-Methode, insbesondere mit Subbildpunktgenauigkeit,
wobei anhand der in Übereinstimmung gebrachten Form des Musters (72) im Bild (P2, 70, 74) eine Grösseninformation über die im Bild erfassten Lichtfleckform bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Distanzinformation heranzuziehende Information über das Ausmass der Lichtfleckbeabstandung ableiten lässt, im Speziellen wobei die Information die musterintern definierte Distanzinformation selbst ist oder ein definierter Distanzinformations-Bestimmungsalgorithmus, oder
• eine geometrische Kenngrösse für die im Bild erfasste Lichtfleckform bestimmt wird, insbesondere eine Taillenweite (75b) und/oder Länge (75a) einer Lichtfleckform, welche sich aus zwei Lichtflecken (32a-d,71) zusammensetzt.

35. Lasertracker (10,11,12) nach einem der Ansprüche 31 bis 34,
**dadurch gekennzeichnet, dass**
die Steuerungs- und Auswerteeinheit eine Bildpositionsbestimmungsfunktionalität aufweist, bei deren Ausführung eine Bildposition (X1,X2) in einem durch die Zielsucheinheit erfassten Bild (P2, 70, 74) mittels Bildverarbeiten derart bestimmt wird, dass durch die Bildposition (X1,X2) eine Lage im Bild einer im Bild (P2, 70, 74) erfassten Strahlungsquerschnittsform (71a) repräsentiert wird, insbesondere
• mittels Schwerpunktberechnen basierend auf der im Bild (P2, 70, 74) erfassten
Strahlungsquerschnittsform, insbesondere mittels Helligkeits- und/oder Kontrastanalyse, und/oder
• mittels Matchen, insbesondere In-Übereinstimmung-Bringen, der im Bild (P2, 70, 74) erfassten Strahlungsquerschnittsform mit einem gespeicherten Muster (72) anhand einer Best-Fit-Methode, insbesondere mit Subbildpunktgenauigkeit, wobei anhand der in Übereinstimmung gebrachten Lage des Musters (72) im Bild (P2, 70, 74) wenigstens eine Bildposition (X1-X4) der im Bild erfassten Strahlung (28,28a,28b,84a,84b) bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der
Bildposition (X1-X4) heranzuziehende Musterposition innerhalb des Musters (72) ableiten lässt, im Speziellen wobei die Information die musterintern definierte Musterposition selbst ist oder ein definierter Musterpositions-Bestimmungsalgorithmus wie etwa ein Musterschwerpunkt-Bestimmungsalgorithmus.

36. Lasertracker (10,11,12) nach einem der Ansprüche 31 bis 35,
**dadurch gekennzeichnet, dass**
eine eine gesonderte Bildpositionsbestimmung in Abhängigkeit eines jeweiligen Lichtflecks (32a-d,71) beeinträchtigende Überschneidung von in einem Bild (P2, 70, 74) einer Kamera (24,24a) erfassten Beleuchtungsstrahlungsquerschnittsformen von Beleuchtungsstrahlung (28,28a,28b,84a,84b) mehrerer, insbesondere zweier, Beleuchtungsmittel (25,25a-f,82a,82b) oder optischer Markierungen (82,82a,82b) dadurch vermieden oder aufgelöst wird, dass
• bei Ausführen der Suchfunktionalität ein Beleuchten des Ziels (65,81,101) durch zwei oder mehrere Beleuchtungsmittel (25,25a-f,47) und ein Erfassen dadurch generierten einzelner Lichtfleckpositionen zeitlich versetzt zueinander erfolgen,
• die Beleuchtungsmittel (25,25a-f) oder optischer Markierungen (82a,82b) jeweils Beleuchtungsstrahlung (28,28a,28b,84a,84b) verschiedener, durch die Kamera (24,24a), insbesondere den positionssensitiven Detektor oder mittels Bildverarbeitung, trennbarer, Wellenlängen und/oder Polarisierung emittierbar ist,
• mittels Bildverarbeitung des Bilds, insbesondere unter Verwendung von Kantendetektion, eine Segmentierung der einzelnen Querschnittsformen erfolgt, insbesondere eine Segmentierung von Kreisformen, insbesondere von Kreisformen eines definierten Durchmessers oder Durchmesserintervalls, im Speziellen unter Verwendung zirkularer Hough-Transformation (CHT) oder skaleninvarianter Kernel-Operatoren, oder
• mittels Matchen, insbesondere In-Übereinstimmung-Bringen, der im Bild (P2, 70, 74) erfassten Lichtfleckform aus den sich überschneidenden einzelnen Beleuchtungsstrahlungsquerschnittsformen mit einem gespeicherten Muster anhand einer Best-Fit-Methode, insbesondere mit Subbildpunktgenauigkeit, wobei anhand der in Übereinstimmung gebrachten Lage des Musters im Bild (P2, 70, 74) die jeweilige einzelne Lichtfleckposition (29a-b) der im Bild erfassten einzelnen Beleuchtungsstrahlung (28,28a,28b,84a,84b) des jeweiligen Beleuchtungsmittels (25,25a-f, 47) oder optischen Markierung (82a,82b) bestimmt wird, insbesondere mit Subbildpunktgenauigkeit, insbesondere wobei für das gespeicherte Muster eine Information mitgespeichert ist, die musterintern definierte, für die letztendliche Ermittlung der jeweiligen Lichtfleckposition (29a-b) heranzuziehende Musterpositionen innerhalb des Musters ableiten lässt, im Speziellen wobei die Information die musterintern definierte Musterposition selbst ist oder ein definierter Musterpositions-Bestimmungsalgorithmus.

37. Lasertracker (10,11,12) nach einem der Ansprüche 31 bis 36,
**dadurch gekennzeichnet, dass**
wenigstens ein Beleuchtungsmittel (47) derart ausgebildet ist, dass gerichtete Beleuchtungsstrahlung (46a) emittierbar ist und die Zielsucheinheit Mittel zur Erfassung der Emissionsrichtung aufweist, insbesondere wobei
• mit der Beleuchtungsstrahlung (46a) das Ziel strukturiert beleuchtbar ist,
• das Beleuchtungsmittel (47) ausgebildet ist als Laserdiode, insbesondere zur Emission von Licht mit einer von der Wellenlänge des ersten und zweiten Beleuchtungsmittels (25,25a-f) unterscheidbaren Wellenlänge oder Polarisierung, insbesondere einer Wellenlänge im infraroten Bereich,
• die erste Kamera (24,24a) derart ausgebildet ist, dass ein Trennen erfassbarer gerichteten Beleuchtungsstrahlung (46a) von erfassbarer anderer Beleuchtungsstrahlung (28,28a,28b) durchführbar ist, insbesondere mittels Filter, oder die Zielsucheinheit eine zweite Kamera (48) mit einem zweiten positionssensitiven Detektor aufweist, die derart ausgebildet sind, dass im Wesentlichen nur die gerichtete Beleuchtungsstrahlung (46a) erfassbar ist, insbesondere wobei die zweite Kamera (48) derart ausgebildet ist, dass im Wesentlichen nur gerichtete Beleuchtungsstrahlung (46a) erfassbar ist, insbesondere wobei die zweite Kamera (48) einen Filter aufweist, im Speziellen zur im Wesentlichen ausschliesslichen Transmission der gerichteten Beleuchtungsstrahlung (46a) auf den positionssensitiven Detektor, und/oder
• eine Emissionsrichtung und Positionierung des Beleuchtungsmittels (47) relativ zur die gerichtete Beleuchtungsstrahlung (46a) erfassenden Kamera (24,48), insbesondere deren optischer Achse (26), bekannt und/oder bestimmbar ist.

38. Lasertracker (10,11,12) nach einem der Ansprüche 31 bis 37,
**dadurch gekennzeichnet, dass**
die Zielsucheinheit wenigstens mehrere jeweils eine vorbekannte Basislänge (B1-B3) definierender Beleuchtungsmittel (25,25a-f) aufweist, welche unterschiedlichen Abstand zueinander oder zum zweiten Basispunkt haben und damit unterschiedlich grosse Basislängen definieren, insbesondere wobei bei Ausführen der Suchfunktionalität ein Auswählen der zur aktiven optischen Triangulation zu verwendenden Basislänge (B1-B3) und damit des oder der Beleuchtungsmittel (25,25a-f) in Abhängigkeit einer bekannten Beschaffenheit des Ziels, insbesondere der Zielgrösse, und/oder eines Zieldistanzschätzwertes erfolgt.

39. Lasertracker (10,11,12) nach einem der Ansprüche 31 bis 38,
**dadurch gekennzeichnet, dass**
der Lasertracker (10,11,12) aufweist
• erste und das zweite Beleuchtungsmittel (25,25a-f), die derart ausgebildet sind, dass die elektromagnetische Beleuchtungsstrahlung (28,28a,28b) divergent mit einer Wellenlänge im infraroten Bereich emittierbar ist, insbesondere wobei
■ das erste und das zweite Beleuchtungsmittel (25,25a-f) ausgebildet sind als lichtemittierende Dioden zur Emission von Licht einer Wellenlänge im infraroten Bereich,
■ die Intensität der Beleuchtungsstrahlung (28,28a,28b) dynamisch variierbar ist, und/oder
■ die Kamera (24,24a) derart ausgebildet ist, dass im Wesentlichen nur infrarote Beleuchtungsstrahlung (28,28a-d) erfassbar ist, insbesondere wobei die Kamera (24,24a) einen Filter aufweist, im Speziellen zur im Wesentlichen ausschliesslichen Transmission der infraroten Strahlung (28,28a-d) auf den positionssensitiven Detektor,
• eine um die Stehachse (41) relativ zum Sockel (40) motorisiert schwenkbare und die Neigungsachse (31) definierende Stütze (30) und/oder
• eine als Strahllenkeinheit (20a) ausgebildete, um die Neigungsachse (31) relativ zur Stütze (30) motorisiert schwenkbare Anzieleinheit (20) mit einer Teleskopeinheit zur Emission der Messstrahlung (17,21) und zum Empfang von zumindest einem Teil der am Ziel (29c,65,81) reflektierten Messstrahlung (17,21).

40. Lasertracker (10,11,12) nach einem der Ansprüche 31 bis 39,
**dadurch gekennzeichnet, dass**
der Lasertracker (10,11,12) eine Kalibrierfunktionalität aufweist, bei deren Ausführung eine referenzierte Zuordnung von Positionen von Lichtflecken (32a-d,71) und/oder Triangulationsmassen zu Grobpositionen des Ziels (65,81,101) gebildet und hinterlegt wird und/oder die bekannte Positionierung und/oder Ausrichtung von eine Basis (B,B1-B3) definierender Beleuchtungsmittel (25,25a-f, 47) relativ zur optischen Achse (57) und die jeweilige Basislänge (B,B1-B3) oder der Abstand zueinander und zum Lasertracker von eine Basis definierender optischen Markierungen (82,82a,82b) des Ziels (65,81,101), sowie die bekannte Positionierung der optischen Achse relativ zur Messachse (57) bestimmt werden, insbesondere wobei bei Ausführung der Kalibrierfunktionalität
• die Feindistanzmesseinheit (29c,65,81) ein in verschiedenen Positionen bereitgestelltes Ziel (65,81,101) mittels der Messstrahlung (17,21) anzielt und vermisst,
• für jede Position des Ziels (65,81,101) wenigstens eine Bildposition (X1-X4) bestimmt werden und
• aus dem Vermessen des Ziels (65,81,101) und der dazu bestimmten wenigstens einen Bildposition (X1-X4) die relativen Positionierungen und/oder Ausrichtungen und die jeweilige Basislänge (B,B1-B3) abgeleitet werden.

41. Verfahren zum Suchen eines Ziels (65,81,101) mit einem Lasertracker (10,11,12), wobei der
Lasertracker (10,11,12) aufweist
• einen eine Stehachse (41) definierenden Sockel (40) und
• eine Strahllenkeinheit (20a) zum Emittieren einer Messstrahlung (17,21) und zum Empfangen von zumindest einem Teil der am Ziel (65,81,101) reflektierten Messstrahlung (17,21), wobei
□ die Strahllenkeinheit (20a) um die Stehachse (41) und eine Neigungsachse (31) relativ zum Sockel (40) motorisiert schwenkbar ist und
□ durch eine Emissionsrichtung der Messstrahlung (17,21) eine Messachse (57) definiert ist, und
• einen ein Feinanziel-Sichtfeld definierenden positionssensitiven Feinanzieldetektor (58) zur Feinanzielung und Verfolgung des Ziels (65,81,101) mittels Detektieren der am Ziel (65,81,101) reflektierten Messstrahlung (17,21),
sowie mit
• einem Beleuchten des Ziels (65,81,101) mit elektromagnetischer Beleuchtungsstrahlung (28,28a,28b) durch Beleuchtungsmittel (25,25a-f),
• einem positionssensitiven Erfassen wenigstens eines Bildes (P2, 70, 74) mit wenigstens einer am Lasertracker (10,11,12) angeordneten und ein Sichtfeld (27a) definierenden Kamera (24,24a), wobei die Kamera (24,24a) mit deren optischer Achse (26) versetzt zur Messachse (57) angeordnet ist und im Bild (P2, 70, 74) zumindest ein Teil der am Ziel (65,81,101) reflektierten Beleuchtungsstrahlung (28,28c,28d)der Beleuchtungsmittel (25,25a-f) als Lichtflecke (32a,32b,71) erfasst wird,
• einem Auffinden des Ziels (65,81,101) basierend auf einem Auswerten der erfassten Lichtflecke (32a,32b,71) und Ausrichten der Messstrahlung auf das Ziel (65,81,101) basierend auf dem Auffinden, **gekennzeichnet durch**
ein Auffinden des Ziels (65,81,101) basierend auf aktiver optischer Triangulation unter Verwendung einer fixen Basislänge (B), die definiert ist **durch** den Abstand
• eines Paars von Beleuchtungsmitteln (25,25a-f) zueinander,
• eines Beleuchtungsmittels (47) zur gerichteten Strahlungsemission zum Projektionszentrum einer Kamera (24,48), oder
• von zwei am Ziel (65,81,101) angeordneten optischen Markierungen (82,82a,82b) zueinander, ausgeprägt als ein Paar von Leuchtmitteln oder von Retroreflektoren, so dass eine **durch** die Messachse (57) und die optische Achse (26) der Kamera (24,24a) gegebene Parallaxe berücksichtigt wird.

42. Verfahren nach Anspruch 41,
**gekennzeichnet durch**
ein Bestimmen einer, insbesondere richtungswinkelbezogene, Abweichung zwischen der Richtung der Messachse (57) von der Richtung zum Ziel (65,81,101) basierend auf einer Auswertung der aktiven optischen Triangulation, insbesondere mit
• Bestimmen einer Grobentfernung (R) zum Ziel (65,81,101), insbesondere anhand einer hinterlegten referenzierten Zuordnung von Triangulationsmassen, insbesondere von Winkel- und/oder Längenmassen zu Grobentfernungen (R) und/oder
• Ableiten wenigstens einer, insbesondere einer ersten und einer zweiten, Zielrichtung (29) zum Ziel (65,81,101) und in Abhängigkeit von der Zielrichtung (29) Bestimmen einer Grobposition des Ziels (65,81,101), insbesondere unter Verwendung einer ermittelten Grobentfernung (R), insbesondere mittels Triangulation, oder
• Bestimmen einer Grobposition des Ziels (65,81,101) anhand einer hinterlegten referenzierten Zuordnung von Triangulationswerten, insbesondere zu Grobpositionen.

43. Verfahren nach einem der Ansprüche 41 oder 42,
**gekennzeichnet durch**
ein automatisches Ausrichten der Strahllenkeinheit (20a) basierend auf dem Ergebnis der Suche, insbesondere in Abhängigkeit einer dabei bestimmten Grobposition des Ziels (65,81,101), sodass die Messstrahlung (17,21) auf das Ziel (65,81,101) trifft und mittels des Feinanzieldetektors (58) detektierbar ist.

44. Verfahren nach einem der Ansprüche 41 bis 43,
**dadurch gekennzeichnet, dass**
im Rahmen der aktiven optischen Triangulation
• ein Bestimmen einer Distanzinformation hinsichtlich der Beabstandung zueinander der Lichtflecke eines durch Beleuchtungsstrahlung (28,28a,28b) eines Paars von Beleuchtungsmitteln (25,25a-f)erzeugten Lichtfleckpaars (32a,32b) erfolgt, insbesondere mit Ermitteln einer Grobposition des Ziels (65,81,101) anhand der bestimmten Distanzinformation , des die Basislänge (B,B1-B3) definierenden Abstands des Paars von Beleuchtungsmitteln (25,25a-f) und der Positionierung des positionssensitiven Detektors oder einer Zielrichtung (29),
• das Erfassen einer Emissionsrichtung der Beleuchtungsstrahlung (46a) wenigstens eines zur gerichteten Emission von Beleuchtungsstrahlung (46a) geeigneten Beleuchtungsmittels (47), welches zusammen mit einem Kameraprojektionszentrum eine Basislänge (B) bildet, und das Bestimmen der Position des durch die reflektierte Beleuchtungsstrahlung (46a) erzeugten Lichtflecks (71) erfolgen, durch welche zusammen mit der Position des Kameraprojektionszentrums eine Empfangsrichtung festgelegt wird, insbesondere wobei das Bestimmen einer Grobentfernung (R) zum Ziel (65,81,101) anhand der Emissionsrichtung, der Empfangsrichtung und der Basislänge (B) erfolgt, wobei im Speziellen anhand der zur Entfernungsbestimmung geeigneten Daten in Abhängigkeit eines durch ungerichtete Beleuchtungsstrahlung bestimmten Richtungsinformation ein Ermitteln einer Grobposition des Ziels (65,81,101) erfolgt, oder
• ein Bestimmen eine Distanzinformation hinsichtlich der Beabstandung zueinander von Lichtflecken welche durch von der Zielsucheinheit in einem Bild(P2, 70, 74) erfasster Strahlung (84a,84b) erzeugt werden, die von eine Basislänge (B) definierender am Ziel (65,81,101) angeordneten optischen Markierungen (82,82a,82b) durch Zurückstrahlung von Beleuchtungsstrahlung (28,28a,28b) oder durch eigene Emission von Strahlung (84a,84b) ausgeht, insbesondere wobei ein Bestimmen einer groben Entfernung zum Ziel (65,81,101) anhand der bestimmten Distanzinformation , der Basislänge und der Positionierung des positionssensitiven Detektors (15S) erfolgt, wobei im Speziellen anhand der zur Entfernungsbestimmung geeigneten Daten in Abhängigkeit eines durch Beleuchtungsstrahlung bestimmten Richtungsinformation ein Ermitteln einer Grobposition des Ziels (65,81,101) erfolgt,
insbesondere wobei die Bestimmung einer Distanzinformation durch Bildverarbeitung derart erfolgt, dass
• eine Distanz (D, 75c) zweier Bildpositionen auf dem Detektor bestimmt wird, welche aus einer gesonderten Bildpositionsbestimmung in Abhängigkeit jeweils eines einzelnen Lichtflecks bestimmt sind,
• mittels Matchen, insbesondere In-Übereinstimmung-Bringen, der im Bild (P2, 70, 74) erfassten Lichtfleckform mit einem gespeicherten Muster (72) anhand einer Best-Fit-Methode, insbesondere mit Subbildpunktgenauigkeit,
wobei anhand der in Übereinstimmung gebrachten Form des Musters (72) im Bild (P2, 70, 74) eine Grösseninformation über die im Bild erfassten Lichtfleckform bestimmt wird, insbesondere mit Subbildpunktgenauigkeit, insbesondere wobei für das gespeicherte Muster (72) eine Information mitgespeichert ist, die eine musterintern definierte, für die letztendliche Ermittlung der Distanzinformation heranzuziehende Information über das Ausmass der Lichtfleckbeabstandung ableiten lässt, im Speziellen wobei die Information die musterintern definierte Distanzinformation selbst ist oder ein definierter Distanzinformations-Bestimmungsalgorithmus, oder
• eine geometrische Kenngrösse für die im Bild (P2, 70, 74) erfasste Lichtfleckform bestimmt wird, insbesondere eine Taillenweite (75b) und/oder Länge (75a) einer Lichtfleckform, welche sich aus zwei Lichtflecken zusammensetzt.

45. Computerprogrammprodukt mit Programmcode, der auf einem maschinenlesbaren Träger gespeichert ist, zur Steuerung bzw. Durchführung des Verfahrens nach einem der Ansprüche 41 bis 44.
